(19) Europäisches Patentamt
European Patent Office
Office européen des brevets

(11) **EP 4 546 900 A1**

(12) **EUROPEAN PATENT APPLICATION**
published in accordance with Art. 153(4) EPC

(43) Date of publication:
**30.04.2025 Bulletin 2025/18**

(21) Application number: **23826854.4**

(22) Date of filing: **22.05.2023**

(51) International Patent Classification (IPC):
*H04W 56/00* (2009.01)     *H04W 52/02* (2009.01)

(52) Cooperative Patent Classification (CPC):
**H04W 52/02; H04W 56/00**

(86) International application number:
**PCT/JP2023/018881**

(87) International publication number:
**WO 2023/248666 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.06.2022 JP 2022099929**

(71) Applicant: **DENSO CORPORATION**
**Kariya-city, Aichi 448-8661 (JP)**

(72) Inventors:
• **NAGANO, Tatsuki**
**Kariya- city, Aichi 4488661 (JP)**
• **TAKAHASHI, Hideaki**
**Kariya- city, Aichi 4488661 (JP)**

(74) Representative: **TBK**
**Bavariaring 4-6**
**80336 München (DE)**

(54) **TERMINAL DEVICE, METHOD FOR TERMINAL DEVICE, AND BASE STATION DEVICE**

(57)     A terminal apparatus (10) includes a controller (110), and a communicator (120) configured to be controlled by the controller (110) to perform radio communication, in which the controller (110) is configured to perform a periodic operation for transmission or reception via the communicator (120) by using a mathematical expression including a correction value for a system frame number (SFN).

Fig. 20

EP 4 546 900 A1

**Description**

Technical Field

The present application is based on and claims the benefit of priority to Japanese Patent Application No. 2022-099929 filed on June 21, 2022, the contents of which are incorporated herein by reference in its entirety.
The present disclosure relates to a terminal apparatus, a method for a terminal apparatus, and a base station apparatus.

Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.
In NPL 1, implementation of XR in Fifth Generation New Radio (5G NR) being radio specifications defined by the Third Generation Partnership Project (3GPP (trademark)) is studied.

Citation List

Non Patent Literature

[NPL 1] 3GPP TR 38.838 V17.0.0 (2021-12)
[NPL 2] 3GPP TS 38.321 V17.0.0 (2022-03)
[NPL 3] 3GPP TS 38.213 V17.0.0 (2021-12)

**SUMMARY**

In the study about XR implementation described above, enhancement of scheduling methods such as configured grant (CG) and semi-persistent scheduling (SPS) is given as an item of the study.
For example, NPL 2 describes a mathematical expression for CG to be used for determining timing at which a terminal apparatus performs a periodic transmission operation. Further, NPL 2 describes a mathematical expression for SPS to be used for determining timing at which a base station apparatus performs a periodic transmission operation. NPL 3 describes a mathematical expression for a scheduling request (SR) to be used for determining timing at which a terminal apparatus performs a periodic transmission operation. Each of the mathematical expressions includes a system frame number (SFN). The inventors of the present invention have found the following issue. In a case of using such a mathematical expression, constant operation periodicity is not maintained when an SFN is updated to an initial value (i.e., 0) due to a value of configured periodicity. Note that the inventors of the present invention have found that such an issue also occurs in a normal terminal apparatus and a normal base station apparatus other than those implemented with XR.
The present disclosure provides a technique that enables appropriate control of periodicity of an operation in a terminal apparatus or a base station apparatus.
A terminal apparatus according to one aspect of the present disclosure includes a controller, and a communicator configured to be controlled by the controller to perform radio communication, wherein the controller is configured to perform a periodic operation for transmission or reception via the communicator by using a mathematical expression including a correction value for a system frame number (SFN).
A method for a terminal apparatus according to one aspect of the present disclosure includes determining whether a mathematical expression including a correction value for a system frame number (SFN) is met, and performing a periodic operation for transmission or reception in a case where the mathematical expression is met.
A base station apparatus according to one aspect of the present disclosure includes a controller, and a communicator configured to be controlled by the controller to perform radio communication, wherein the controller is configured to perform a periodic operation for transmission or reception via the communicator by using a mathematical expression including a correction value for a system frame number (SFN).
According to the configuration above, it is possible to appropriately control periodicity of an operation in a terminal apparatus or a base station apparatus. Note that the above configuration may exert, instead of the advantageous effects or together with the advantageous effects, other advantageous effects.

## BRIEF DESCRIPTION OF THE DRAWINGS

The above and other objects, features, and advantages of the present disclosure will become more apparent in the following detailed description with reference to the accompanying drawings. In the drawings:

Fig. 1 is a diagram illustrating a communication system S according to a first embodiment;
Fig. 2 is a diagram illustrating a U-plane protocol stack according to the first embodiment;
Fig. 3 is a diagram illustrating a C-plane protocol stack according to the first embodiment;
Fig. 4 is a block diagram illustrating a schematic hardware configuration of a terminal apparatus 10 according to the first embodiment;
Fig. 5 is a block diagram illustrating a schematic functional configuration of the terminal apparatus 10 according to the embodiment;
Fig. 6 is a block diagram illustrating a schematic hardware configuration of a base station apparatus 20 according to the first embodiment;
Fig. 7 is a block diagram illustrating a schematic functional configuration of the base station apparatus 20 according to the embodiment;
Fig. 8 is a diagram illustrating a radio frame configuration according to the first embodiment;
Fig. 9 is a diagram illustrating three possible radio resource control (RRC) states of the terminal apparatus 10 according to the first embodiment;
Fig. 10 is a schematic explanatory diagram of discontinuous reception (DRX) in the first embodiment;
Fig. 11 is a diagram illustrating relationships between timing at which a signal arrives the terminal apparatus and timing at which an on-duration of DRX starts;
Fig. 12 is a sequence diagram illustrating a flow of DRX processing in the first embodiment;
Fig. 13 is a diagram illustrating relationships between timing at which a signal arrives the terminal apparatus 10 and timing at which an on-duration of DRX starts, in a case where a configuration in the first embodiment is applied;
Fig. 14 is a flowchart illustrating a flow of processing of selecting a mathematical expression in a first aspect of long DRX;
Fig. 15 is a flowchart illustrating a flow of processing of selecting a mathematical expression in a second aspect of long DRX;
Fig. 16 is a flowchart illustrating a flow of processing of selecting a mathematical expression in a third aspect of long DRX;
Fig. 17 is a flowchart illustrating a flow of processing of selecting a mathematical expression in a first aspect of short DRX;
Fig. 18 is a flowchart illustrating a flow of processing of selecting a mathematical expression in a second aspect of short DRX;
Fig. 19 is a flowchart illustrating a flow of processing of selecting a mathematical expression in a third aspect of short DRX;
Fig. 20 is a sequence diagram illustrating a flow of processing of semi-persistent scheduling (SPS) in a second embodiment;
Fig. 21 is a flowchart illustrating a flow of processing of selecting a mathematical expression in a first aspect of SPS;
Fig. 22 is a flowchart illustrating a flow of the processing of selecting a mathematical expression in the first aspect of SPS;
Fig. 23 is a flowchart illustrating a flow of processing of selecting a mathematical expression in a second aspect of SPS;
Fig. 24 is a flowchart illustrating a flow of the processing of selecting a mathematical expression in the second aspect of SPS;
Fig. 25 is a flowchart illustrating a flow of processing of selecting a mathematical expression in a third aspect of SPS;
Fig. 26 is a flowchart illustrating a flow of the processing of selecting a mathematical expression in the third aspect of SPS;
Fig. 27 is a sequence diagram illustrating a flow of processing of scheduling request (SR) in the second embodiment;
Fig. 28 is a flowchart illustrating a flow of processing of selecting a mathematical expression in a first aspect of SR;
Fig. 29 is a flowchart illustrating a flow of the processing of selecting a mathematical expression in the first aspect of SR;
Fig. 30 is a flowchart illustrating a flow of processing of selecting a mathematical expression in a second aspect of SR;
Fig. 31 is a flowchart illustrating a flow of the processing of selecting a mathematical expression in a second aspect of SR;

Fig. 32 is a flowchart illustrating a flow of processing of selecting a mathematical expression in a third aspect of SR;

Fig. 33 is a flowchart illustrating a flow of the processing of selecting a mathematical expression in the third aspect of SR;

Fig. 34 is a sequence diagram illustrating a flow of processing of configured grant (CG) Type 1 in the second embodiment;

Fig. 35 is a flowchart illustrating a flow of processing of selecting a mathematical expression in a first aspect of CG Type 1;

Fig. 36 is a flowchart illustrating a flow of the processing of selecting a mathematical expression in the first aspect of CG Type 1;

Fig. 37 is a flowchart illustrating a flow of processing of selecting a mathematical expression in a second aspect of CG Type 1;

Fig. 38 is a flowchart illustrating a flow of the processing of selecting a mathematical expression in the second aspect of CG Type 1;

Fig. 39 is a flowchart illustrating a flow of processing of selecting a mathematical expression in a third aspect of CG Type 1;

Fig. 40 is a flowchart illustrating a flow of the processing of selecting a mathematical expression in the third aspect of CG Type 1;

Fig. 41 is a sequence diagram illustrating a flow of processing of CG Type 2 in the second embodiment;

Fig. 42 is a flowchart illustrating a flow of processing of selecting a mathematical expression in a first aspect of CG Type 2;

Fig. 43 is a flowchart illustrating a flow of the processing of selecting a mathematical expression in a first aspect of CG Type 2;

Fig. 44 is a flowchart illustrating a flow of processing of selecting a mathematical expression in a second aspect of CG Type 2;

Fig. 45 is a flowchart illustrating a flow of the processing of selecting a mathematical expression in the second aspect of CG Type 2;

Fig. 46 is a flowchart illustrating a flow of processing of selecting a mathematical expression in a third aspect of CG Type 2; and

Fig. 47 is a flowchart illustrating a flow of the processing of selecting a mathematical expression in the third aspect of CG Type 2.

## DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed unless the configurations are consistent with each other.

### 1. First Embodiment

#### 1.1. Communication System

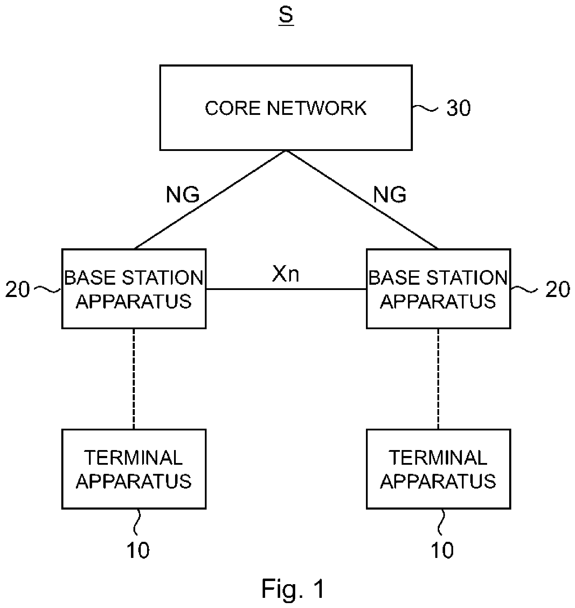

As illustrated in Fig. 1, a communication system S of a first embodiment includes one or more terminal apparatuses 10, one or more base station apparatuses 20, and a core network 30. The communication system S is configured in accordance with predetermined Technical Specifications (TS). For example, the communication system S may conform to Technical Specifications (for example, 5G, 5G Advanced, 6G, and the like) defined in the Third Generation Partnership Project (3GPP).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) specifications of 3GPP and connects to a 5G core network (5GC) of 3GPP, for example. The base station apparatus 20 may be an apparatus conforming to other older or newer specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

The terminal apparatus 10 is a device that performs radio communication with the base station apparatus 20 as described above, and may be a user equipment (UE) that operates in accordance with 5G NR specifications of 3GPP, for example. The terminal apparatus 10 may be an apparatus conforming to other older or newer specifications of 3GPP.

The terminal apparatus 10 may be a mobile phone terminal such as a smartphone, a tablet terminal, a notebook computer, a communication module, a communication card, or an IoT device such as a surveillance camera and a robot, for example. The terminal apparatus 10 may be a vehicle (for example, an automobile, a train, or the like), or an apparatus provided in the vehicle. The terminal apparatus 10 may be a transporter (for example, a vessel, an aircraft, or the like) other than the vehicle, or an apparatus provided in the transporter. The terminal apparatus 10 may be a sensor, or an apparatus provided in the sensor. Note that the terminal apparatus 10 may be referred to by another name, such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 may be an apparatus adapted to one or more of enhanced Mobile Broadband (eMBB), Ultra-Reliable and Low Latency Communications (URLLC), and massive Machine Type Communications (mMTC).

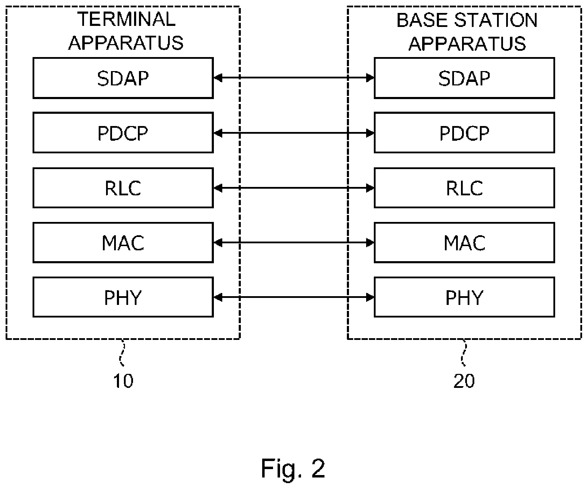

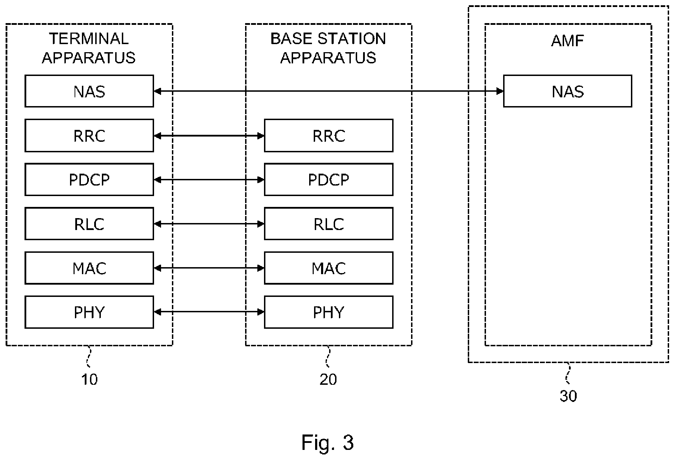

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side.

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side.

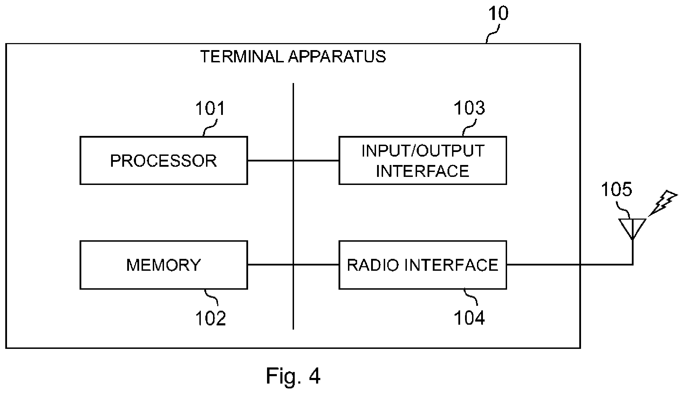

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user, and is, for example, a touch panel.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

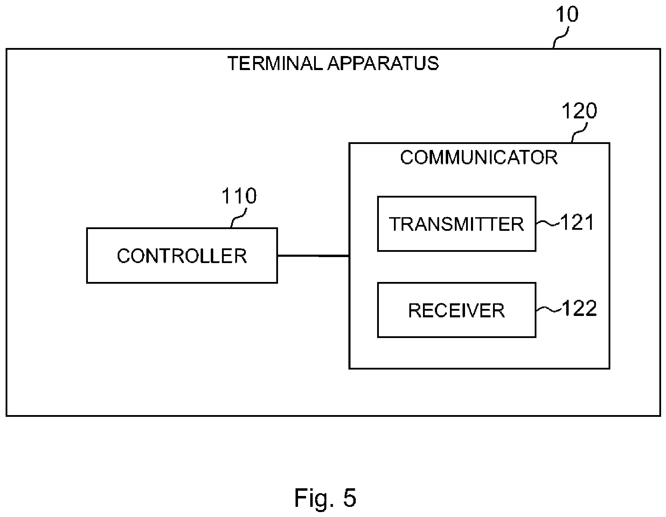

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. A plurality of radio interfaces 104 and a plurality of antennas 105 may be included in the communicator 120.

When the controller 110 operates, the various types of processing of the terminal apparatus 10 according to the present embodiment are executed.

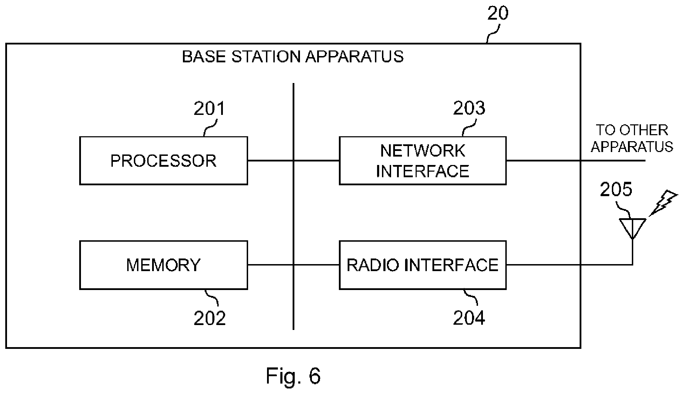

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the base station apparatus 20 via the antenna 205.

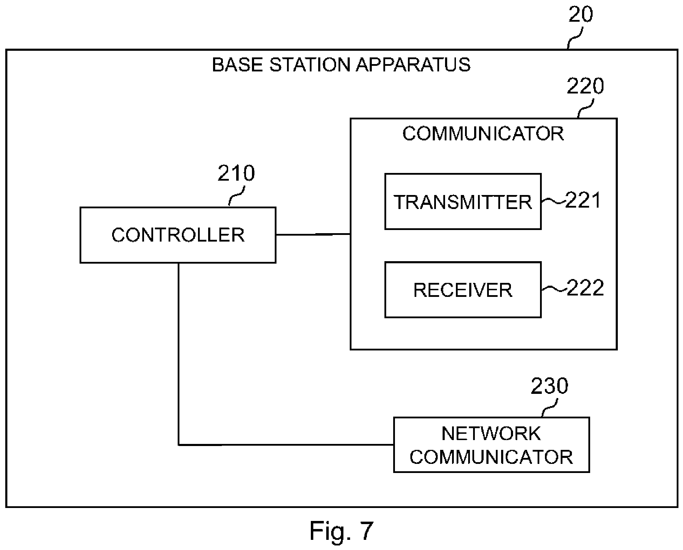

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. A plurality of radio interfaces 204 and a plurality of antennas 205 may be included in the communicator 220.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 according to the present embodiment are executed.

1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) $\Delta f$ in the frequency domain. In the communication system S, a plurality of subcarrier spacings $\Delta f$ may be applied. The subcarrier spacing $\Delta f$ is expressed by the following expression, for example.

$$\Delta f = 2^{\mu} \cdot 15 \ [\text{kHz}]$$

Here, $\mu$ is an integer of 0 or greater, and may be any one of values of 0, 1, 2, 3, 4, 5, and 6. Accordingly, the subcarrier spacing $\Delta f$ [kHz] may be any one of values of 15, 30, 60, 120, 240, 480, and 960. Note that $\mu$ may be a value of 7 or greater.

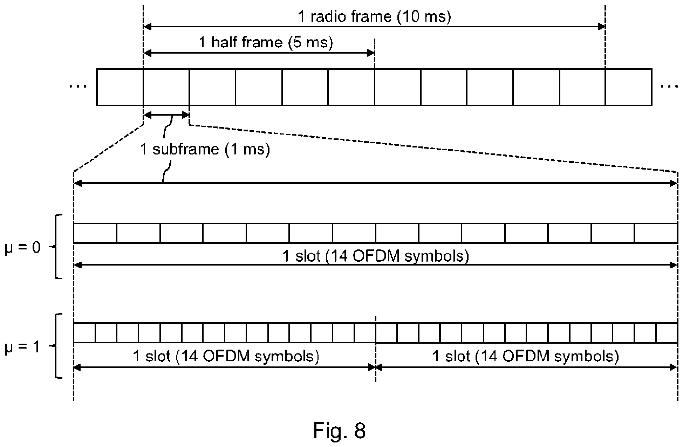

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing $\Delta f$.

One subframe includes one or more slots. The number Ns of slots included in one subframe is dependent upon the value of $\mu$ described above, ultimately the subcarrier spacing $\Delta f$. The number Ns of slots is expressed by the following expression, for example.

$$\text{Ns} = 2^{\mu}$$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Further, a hyper-system frame number (H-SFN) may be used. The hyper-system frame number is a number counting up from 0 to 1023 by one per cycle of the system frame number. Since the time length of one cycle of the system frame number is 10.24 seconds, the time length of one cycle of the hyper-system frame number is 10485.76 seconds (= 2.91 hours). In other words, the hyper-system frame number may be incremented by one when the system frame number wraps around.

Here, the base station apparatus 20 may transmit, to the terminal apparatus 10, system information including information indicating an H-SFN. For example, the base station apparatus 20 may transmit, to the terminal apparatus 10, system information block 1 (SIB1) including the information indicating an H-SFN. Here, system information block 1 is also referred to as system information block type 1. The base station apparatus 20 may transmit, to the terminal apparatus 10, information indicating that extended DRX (eDRX) is allowed in a cell (serving cell). For example, the base station apparatus 20 may indicate, by transmitting the information indicating that extended DRX is allowed in the cell (in other words, the information being present in a field), that extended DRX (operation in extended DRX) is allowed in the cell. The base station apparatus 20 may indicate, by not transmitting the information indicating that extended DRX is allowed in the cell (in other words, the information not being present in a field), that extended DRX (operation in extended DRX) is not allowed in the cell. For example, the base station apparatus 20 may transmit, to the terminal apparatus 10, system information (for example, SIB1) including information indicating that extended DRX is allowed in the cell. In other words, the base station apparatus 20 may transmit, to the terminal apparatus 10, system information (for example, SIB 1) including information indicating an H-SFN and/or information indicating that extended DRX is allowed in the cell.

The terminal apparatus 10 may identify the H-SFN, based on the information indicating the H-SFN. The terminal apparatus 10 may determine whether to use the H-SFN, based on the information indicating the H-SFN. The terminal apparatus 10 may determine whether to use the H-SFN, based on the information indicating that extended DRX is allowed in the cell. In other words, the terminal apparatus 10 may determine whether to use the H-SFN, based on the information indicating the H-SFN and/or the information indicating that extended DRX is allowed in the cell. The terminal apparatus 10 may determine whether to perform extended DRX, based on the information indicating that extended DRX is allowed in the cell. In the present embodiment, DRX may include extended DRX. In other words, DRX in the present embodiment may be replaced with extended DRX.

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in the PHY layer. A plurality of transport channels may be mapped to one physical channel. Examples of transport channels include a downlink shared channel (DL-SCH) and an uplink shared channel (UL-SCH). For example, downlink data may also be referred to as DL-SCH data. For example, uplink data may also be referred to as UL-SCH data. Here, the DL-SCH data includes downlink user data. The UL-SCH data includes uplink user data.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. In the present embodiment, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

In other words, the terminal apparatus 10 may monitor (and/or receive) the PDCCH and detect (and/or receive) the DCI format. Here, as will be described later, the terminal apparatus 10 may monitor (and/or receive) the PDCCH in an active time in DRX operation.

The terminal apparatus 10 transmits uplink control information (UCI) to the base station apparatus 20, using the PUCCH being a physical channel. The UCI includes control information, such as a scheduling request (SR), an Ack/Nack of a hybrid automatic repeat request (HARQ), and channel state information (CSI). The UCI is mapped to the PUCCH or the PUSCH, and corresponds to layer 1 signaling.

The base station apparatus 20 transmits a control element (CE) of the MAC layer to the terminal apparatus 10, using the DL-SCH being a transport channel. A downlink MAC CE includes control information such as a DRX (described later) command. The downlink MAC CE is mapped to the PDSCH via the DL-SCH, and corresponds to layer 2 signaling.

The terminal apparatus 10 transmits a control element (CE) of the MAC layer to the base station apparatus 20, using the UL-SCH being a transport channel. An uplink MAC CE includes control information such as a buffer status report (BSR). The uplink MAC CE is mapped to the PUSCH via the UL-SCH, and corresponds to layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation) message will be described. The user equipment assistance information message is an RRC message transmitted from the terminal apparatus 10 to the base station apparatus 20 using SRB1 or SRB3. The DCCH is used to transmit the user equipment assistance information message. The user equipment assistance information message is used to notify the base station apparatus 20 of various pieces of information (UE assistance information) related to the terminal apparatus 10.

1.4. Radio Resource Control (RRC) States

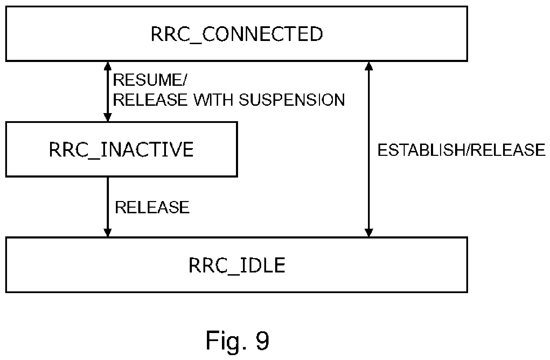

As illustrated in Fig. 9, the terminal apparatus 10 has one of three radio resource control (RRC) states of RRC connected (RRC_CONNECTED), RRC inactive (RRC_INACTIVE), and RRC idle (RRC_IDLE).

The RRC connected (RRC_CONNECTED) state is a state in which connection (RRC context) between the terminal apparatus 10 and the base station apparatus 20 is established, and the terminal apparatus 10 transmits and receives a radio signal to and from the base station apparatus 20. In the RRC inactive (RRC_INACTIVE) state, although connection (RRC context) between the terminal apparatus 10 and the base station apparatus 20 is maintained, the terminal apparatus 10 does not transmit and receive a radio signal to and from the base station apparatus 20. In the RRC idle (RRC_IDLE) state, connection (RRC context) between the terminal apparatus 10 and the base station apparatus 20 is released.

Power consumption of the terminal apparatus 10 increases in order of the RRC idle (RRC_IDLE) state, the RRC inactive (RRC_INACTIVE) state, and the RRC connected (RRC_CONNECTED) state.

1.5. Scheduling

1.5.1. Downlink Scheduling

As described above, the base station apparatus 20 transmits DCI to the terminal apparatus 10 by using the PDCCH. The DCI includes information related to PDSCH resource allocation. The terminal apparatus 10 receives a signal from the base station apparatus 20 by using a resource configured with the PDSCH. In this way, the base station apparatus 20 can dynamically perform downlink scheduling by using the DCI.

Semi-persistent scheduling (SPS) is a scheduling method for semi-persistently allocating radio resources, different from the dynamic scheduling. The base station apparatus 20 transmits an RRC message including an SPS parameter to the terminal apparatus 10. The SPS parameter is included in an SPS-Config information element (IE), which is an example of an RRC IE. The SPS-Config IE includes a parameter "periodicity" related to periodicity of transmission using a PDSCH (in other words, downlink resource allocation periodicity configured for SPS). Note that the parameter "periodicity" is configured in units of millisecond. Alternatively, the parameter "periodicity" may be configured in units of frame per second (FPS).

The base station apparatus 20 transmits, to the terminal apparatus 10, DCI scrambled with a configured scheduling radio network temporary identifier (CS-RNTI). The CS-RNTI is used to activate periodic transmission using the PDSCH. The base station apparatus 20 transmits, after the transmission of the DCI, a signal by using a PDSCH in the configured periodicity.

1.5.2. Uplink Scheduling

(1) Scheduling Request (SR)

An SR is used for the terminal apparatus 10 to request the base station apparatus 20 to perform PUSCH radio resource allocation. The SR may be used to request a UL-SCH resource for initial transmission. The base station apparatus 20 allocates a resource for a PUCCH for transmitting the SR, to the terminal apparatus 10. The base station apparatus 20 transmits an RRC message including an SR parameter to the terminal apparatus 10. The SR parameter is included in a SchedulingRequestResourceConfig IE, which is an example of an RRC information element (IE). SchedulingRequestResourceConfig includes a parameter "periodicityAndOffset" related to transmission periodicity (SRperiodicity) and an offset (SRoffset) of an SR. Note that the parameter "SRperiodicity" is configured in units of the number of symbols of slots or the number of symbols. Alternatively, the parameter "SRperiodicity" may be configured in units of FPS.

The terminal apparatus 10 transmits UCI including an SR to the base station apparatus 20 by using a configured PUCCH resource. The terminal apparatus 10 may transmit the UCI on demand. The terminal apparatus 10 may transmit the UCI in configured periodicity. For example, the terminal apparatus 10 may transmit an SR set at "0" (negative SR) and/or an SR set at "1" (positive SR).

(2) Configured Grant (CG)

CG is a scheduling method for allocating radio resources without any procedure of SR transmission. The CG includes two types, i.e., Type 1 and Type 2. The base station apparatus 20 transmits an RRC message including a CG parameter to the terminal apparatus 10. The CG parameter is included in a ConfiguredGrantConfig IE, which is an example of an RRC information element (IE). The ConfiguredGrantConfig IE includes a parameter "periodicity" related to periodicity of transmission using a PUSCH. Note that the parameter "periodicity" is configured in units of the number of slots or the number of symbols. Alternatively, the parameter "periodicity" may be configured in units of FPS. In Type 1, the terminal apparatus 10 initiates transmission of a signal in configured periodicity without any trigger by DCI. In contrast, in Type 2, the terminal apparatus 10 initiates transmission in configured periodicity by using a PUSCH in response to activation by DCI scrambled with a CS-RNTI.

1.6. Discontinuous Reception (DRX)

As a technique for reducing power consumption of the terminal apparatus 10, discontinuous reception (DRX) is used. DRX may be applied to the terminal apparatus 10 in an RRC_IDLE state and an RRC connected state. DRX in the RRC_CONNECTED state is referred to as connected mode discontinuous reception (CDRX).

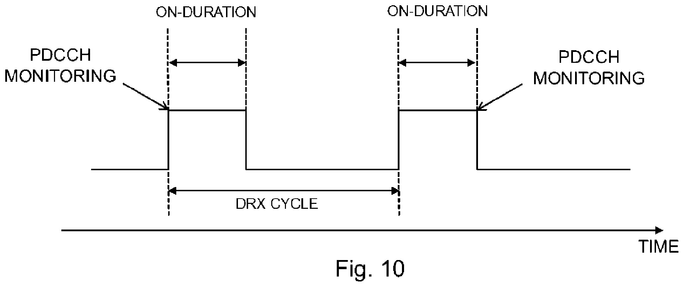

As schematically illustrated in Fig. 10, in a case where DRX is configured (or set), the terminal apparatus 10 need not keep continuously monitoring the PDCCH, and monitors the PDCCH only in a predetermined on-duration. In other words, the on-duration may be a duration in which the terminal apparatus 10 waits to receive one or more PDCCHs (that is, PDCCH(s)). For example, the terminal apparatus 10 may wait to receive one or more PDCCHs in the on-duration after waking up. In a case where the terminal apparatus 10 successfully decodes the PDCCH, the terminal apparatus 10 may continue to monitor the PDCCH and start a timer (inactivity timer). Here, repetitions (for example, periodic repetitions) of the duration (on-duration) may be configured using a predetermined cycle (DRX cycle).

In DRX in the RRC_IDLE state, the terminal apparatus 10 discontinuously monitors a PDCCH and receives a paging message for calling the terminal apparatus 10, for example. In the CDRX, the terminal apparatus 10 discontinuously monitors a PDCCH and receives resource allocation information (in other words, a DCI format to be used for scheduling of a PDSCH and/or a PUSCH), for example. In DRX, a configuration that short DRX in a shorter cycle is performed first and subsequently long DRX in a longer cycle is performed may be employed.

A part or all of DRX parameters used to configure DRX for the terminal apparatus 10 may be transmitted from the base station apparatus 20 to the terminal apparatus 10, using an RRC message. In other words, the base station apparatus 20 may transmit the RRC message including the part or all of the DRX parameters to the terminal apparatus 10. Here, the part or all of the DRX parameters may be configured for a cell group including one or a plurality of serving cells. In other words, the base station apparatus 20 may configure the cell group including one or a plurality of serving cells, and configure the part or all of the DRX parameters for the configured cell group. For example, the base station apparatus 20 may transmit an RRC message including information for configuring the cell group to the terminal apparatus 10. Here, the cell group may be a cell group for configuring MAC parameters. The cell group may be referred to as a master cell group and/or a secondary cell group. The cell group may be referred to as a DRX group.

The terminal apparatus 10 receives the RRC message including the part or all of the DRX parameters, and controls the DRX operation, based on the part or all of the DRX parameters. In other words, the terminal apparatus 10 may control the DRX operation for each cell group, based on the part or all of the DRX parameters. Particularly, a DRX-Config IE being an example of an RRC information element (IE) may include the part or all of the DRX parameters, and RRCReconfiguration being an RRC message including the DRX-Config IE may be transmitted from the base station apparatus 20 to the terminal apparatus 10. The part or all of the DRX parameters may be included in other IEs.

Here, a part of the DRX parameters may be configured to be common to the cell groups. In other words, a part of the DRX parameters may be configured as parameter(s) common to one or a plurality of cell groups without being configured for each of the cell groups.

Examples of DRX parameters used to configure DRX for the terminal apparatus 10 will be described below. Note that the DRX parameters may be referred to as a set of DRX parameters or information related to DRX. A DRX configuration configured (in other words, defined, determined, or identified) by each DRX parameter may be referred to as a DRX configuration. For example, a first DRX configuration may include at least one of an on-duration, a timer (inactivity timer), and/or a cycle (in other words, a DRX cycle).

- An on-duration timer indicating a time length of the on-duration of the terminal apparatus 10 (drx-onDurationTimer). The DRX parameter is used to configure a value of the on-duration. For example, using drx-onDurationTimer, a duration at the time of starting the DRX cycle may be configured.
- An inactivity timer indicating a duration of maintaining an on-state after the terminal apparatus 10 receives the PDCCH (that is, a duration until the state changes to an off-state) (drx-InactivityTimer). The DRX parameter may correspond to a value of the timer (inactivity timer). For example, using drx-InactivityTimer, a duration after reception of the PDCCH (that is, a PDCCH occasion) for indicating new DL transmission and/or UL transmission may be configured.

- A cycle (for example, a short cycle) of the on-duration in short DRX (drx-ShortCycle). The DRX parameter may correspond to the cycle (DRX cycle) in short DRX.

- A short cycle timer indicating a duration of short DRX (drx-ShortCycleTimer). For example, a duration according to a short DRX cycle may be configured for the terminal apparatus 10 by using drx-ShortCycleTimer.

- A cycle (for example, a long cycle) of the on-duration of long DRX and/or a start offset indicating a start position (for example, a subframe and/or a slot) of DRX (drx-LongCycleStartOffset). The DRX parameter may correspond to a cycle in long DRX (DRX cycle). For example, using drx-LongCycleStartOffset, the position to start the long DRX cycle and/or the short DRX cycle may be configured.

- A slot offset indicating a delay before the on-duration is started (drx-SlotOffset). For example, delay before an on-duration timer (drx-onDurationTimer) is started may be configured by using drx-SlotOffset.

In the present embodiment, the "on-duration is started" includes drx-onDurationTimer being started. The active time described above may include a time in which drx-onDurationTimer or drx-InactivityTimer is in operation. Specifically, an active time for a serving cell(s) in a certain cell group may include a time in which drx-onDurationTimer or drx-InactivityTimer configured for the certain cell group is in operation.

In normal DRX (including CDRX), time allocation of the on-duration is specified depending on the system frame number (SFN) and the subframe number. As described above, one cycle of the system frame number is 10240 ms (= 10.24 seconds). When the one cycle ends, the SFN returns to 0.

To introduce a longer time range in DRX, extended discontinuous reception (extended DRX (eDRX)) may be applied. In eDRX, time allocation of the on-duration is specified using the hyper-system frame number described above as well as the system frame number (SFN) and the subframe number. As described above, one cycle of the hyper system frame number is 10485.76 seconds (= approximately 2.91 hours), and accordingly a longer time range can be used in eDRX.

### 1.7. Extended Reality (XR)

Characteristics of traffic generated in XR will be described. In XR, a plurality of types of data (video data, audio data, user data, control data, and the like) are transmitted and received in parallel. A plurality of data streams corresponding to the data segments have different traffic characteristics and quality of service (QoS) requirements.

At timings of transmission and reception of the data, time shifts expressed as jitter, variability, and fluctuation may occur due to factors such as encoding of a video and audio and network delay.

Video data is transmitted and received with reference to a frame rate expressed in "frame per second (FPS)". For example, data for one frame is transmitted and received every 16.67 ms in a case of 60 FPS and every 8.33 ms in a case of 120 FPS.

### 1.8. Control of Start Timing (Start Position) of On-duration in DRX

### 1.8.1. Overview of Configuration

Mathematical expression A1 below may be used to determine start of an on-duration in long DRX. The on-duration in long DRX is started at an SFN and a subframe number satisfying mathematical expression A1.

[Math. 1]

$$[(SFN \times 10) + \text{subframe number}]\ \text{modulo}\ (drx\text{-}LongCycle) = drx\text{-}StartOffset \tag{A1}$$

Assume that the terminal apparatus 10 starts the on-duration in long DRX by using mathematical expression A1. For example, parameters in mathematical expression A1 take the following values.

$$drx\text{-}LongCycle = 50\ ms$$

$$drx\text{-}StartOffset = 0$$

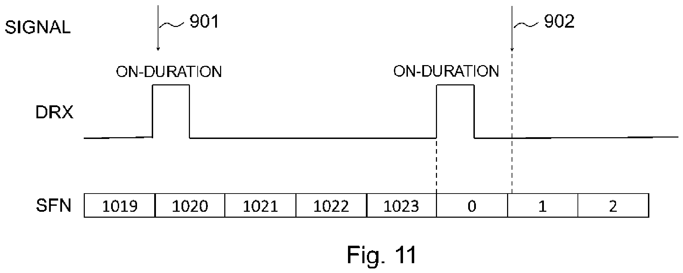

As described above, the time length of one cycle of the SFN is 10240 ms. In a case where the time length of one cycle of the SFN is not an integral multiple of the time length of the cycle of long DRX, such a situation as that in Fig. 11 occurs. For example, signals 901 and 902 arrive the terminal apparatus 10 from the base station apparatus 20 at a time interval of 50 ms. Here, at the time point when the SFN is updated from 1023 to 0, mathematical expression A1 is met. Hence, the terminal apparatus 10 starts the on-duration in long DRX from the subframe number 0 of SFN 0. Through this operation, the time interval of on-durations becomes shorter than 50 ms. Since a constant time length of the cycle of long DRX is not maintained, a mismatch occurs between the timing at which the signal 902 arrives and the on-duration. This may cause delay. Further, to solve the mismatch, the base station apparatus 20 performs reconfiguration of DRX parameters in some cases. This increases signaling between the base station apparatus 20 and the terminal apparatus 10.

Mathematical expression B1 below may be used to determine start of an on-duration in short DRX. According to mathematical expression B1, a situation as that in Fig. 11 may also occur for short DRX.

[Math. 2]

$$[(SFN \times 10) + \text{subframe number}] \text{ modulo } (\textit{drx-ShortCycle}) = (\textit{drx-StartOffset}) \text{ modulo } (\textit{drx-ShortCycle}) \qquad (B1)$$

Further, the above-described issue may also occur in XR implementation. An arrival interval of video data in XR implementation is 16.67 ms, for example. In this case, a configured time length of a cycle of DRX may not be a time length corresponding to an integral multiple of the time length of one cycle of the SFN. Hence, as in the above, at the time point when the SFN is updated from 1023 to 0, a mismatch occurs between the timing at which a signal from the base station apparatus 20 arrives and the on-duration.

To deal with the arrival interval of video data, a non-integer value may be introduced to the time length of a cycle of long DRX in the future. Also in this case, at the time point when the SFN is updated from 1023 to 0, a mismatch occurs between the timing at which a signal from the base station apparatus 20 arrives and the on-duration. Note that, in the Specification of the present application, the expression "a time length is a non-integer value" means that the time length is not an integer in a unit being a reference. In a plurality of embodiments to be described later, description will be given by assuming that the unit being a reference of a time length is millisecond.

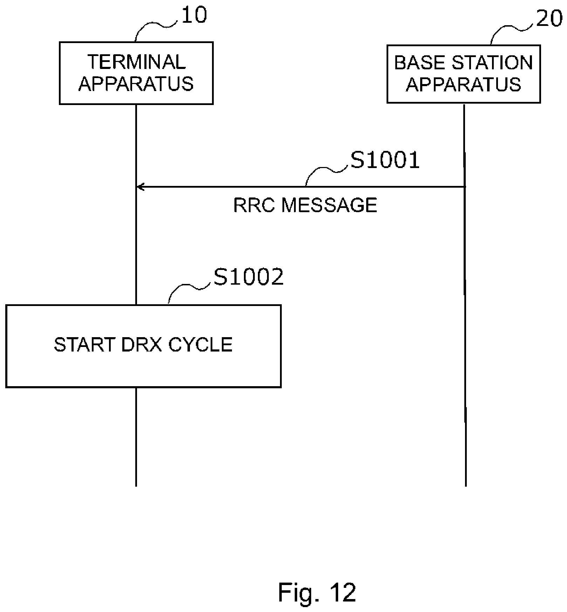

Next, operations of the terminal apparatus 10 and the base station apparatus 20 according to the present embodiment will be described. As illustrated in Fig. 12, the controller 210 of the base station apparatus 20 transmits an RRC message to the terminal apparatus 10 via the communicator 220 (S1001). The RRC message is an RRC reconfiguration (RRCReconfiguration) message including a DRX-config IE. The controller 110 of the terminal apparatus 10 starts a cycle of DRX, based on reception of a parameter included in the DRX-config IE (S1002).

In the present embodiment, a correction value may be applied to an SFN in mathematical expressions A1 and B1 for determining an on-duration in DRX. The controller 110 starts the cycle of DRX by using a mathematical expression including a correction value for an SFN.

The mathematical expression includes an addition operation of the SFN and the correction value. The correction value is a value not to be zero even in a case where the SFN is updated from 1023 to 0. With this configuration, in a case where the SFN is updated from 1023 to 0, the value of the addition operation is not to be zero. Hence, a constant time length of the cycle of DRX is maintained.

The correction value may be a value to increase with an increase of the number of times the SFN is updated from 1023 to 0. For example, the correction value may be a value computed by using a first value corresponding to the number of times the SFN is updated from 1023 to 0 and a second value for offsetting the SFN. For example, the correction value may be the product of the first value and the second value. With this configuration, the SFN in the mathematical expression is offset according to the number of times the SFN is updated from 1023 to 0. Hence, a constant time length of the cycle of DRX is maintained. In the following, a mathematical expression(s) to be applied to each of long DRX and short DRX will be described more concretely.

1.8.2. Long DRX

(1) First Aspect

The controller 110 starts an on-duration in long DRX by using mathematical expression A2 below. "sfnOffset_1 $\times$ n" corresponds to the correction value. n is a value incremented by one every time the SFN turns to be 0 and corresponds to the first value. sfnOffset_1 is a value for offsetting the SFN and corresponds to the second value.

[Math. 3]

$$\{[(\text{SFN} + sfnOffset\_1 \times n) \times 10] + \text{subframe number}\} \text{ modulo}$$
$$(drx\text{-}LongCycle) = drx\text{-}StartOffset$$
$$\text{Where } n = n+1 \text{ whenever SFN} = 0 \qquad \cdots (\text{A2})$$

The controller 110 determines whether mathematical expression A2 is met. The controller 110 starts the on-duration in long DRX at the timing when mathematical expression A2 is met. Specifically, the controller 110 starts an on-duration timer (drx-onDurationTimer) at timing obtained by delaying the SFN and the subframe number satisfying mathematical expression A2 by a value indicated by drx-SlotOffset. In other words, the controller 110 starts the on-duration at the timing obtained by delaying the SFN and the subframe number satisfying mathematical expression A2 by the value indicated by drx-SlotOffset.

According to the configuration, the following effects are exerted. For example, parameters in mathematical expression A2 take the following values.

$$\text{drx-LongCycle} = 50 \text{ ms}$$

$$\text{drx-StartOffset} = 0$$

$$\text{sfnOffset\_1} = 4$$

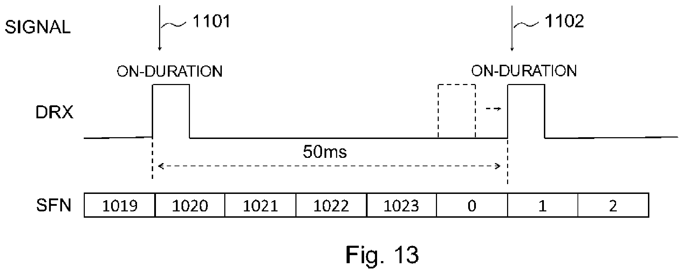

As illustrated in Fig. 13, signals 1101 and 1102 arrive the terminal apparatus 10 from the base station apparatus 20 at a time interval (periodicity) of 50 ms. Mathematical expression A2 is met when the SFN is 1 and also the subframe number is 0. At this timing, the controller 110 starts the on-duration in long DRX. Consequently, the interval (periodicity) of the on-durations is maintained at 50 ms. Hence, the timing at which the signal 1102 arrives after update of the SFN to 0 and the timing of the on-duration match. The terminal apparatus 10 can receive the signal 1102.

With the configuration, it is possible to reduce the possibility of occurrence of a mismatch between the timing at which a signal from the base station apparatus 20 arrives and an on-duration. Consequently, it is possible to prevent occurrence of delay as that described above and an increase of signaling due to reconfiguration of DRX parameters.

The base station apparatus 20 transmits offset information related to sfnOffset_1 to the terminal apparatus 10. The offset information related to sfnOffset_1 is referred to as "first offset information". The base station apparatus 20 may transmit an RRC message including the first offset information to the terminal apparatus 10. The first offset information may be configured as a new element of a DRX-config IE. In other words, the base station apparatus 20 may transmit an RRC message including the first offset information for a certain cell group to the terminal apparatus 10. In other words, the first offset information may be configured for one or each of a plurality of cell groups (cell group(s) configured with DRX parameters). The first offset information may be configured in an IE other than the DRX-config IE. For example, the base station apparatus 20 may transmit, to the terminal apparatus 10, an RRC message including the first offset information for a serving cell(s) belonging to a certain cell group. In other words, the first offset information may be configured for one or each of a plurality of serving cells (each of serving cells belonging to each cell group for which the DRX parameters are configured). The base station apparatus 20 may transmit, to the terminal apparatus 10, system information (SI, for example, SIB1 and/or an SIB other than SIB1) including the first offset information. The base station apparatus 20 may transmit DCI including the first offset information to the terminal apparatus 10.

In other words, the terminal apparatus 10 may determine an active time for a serving cell(s) belonging to a certain cell group, based on sfnOffset_1 configured for the certain cell group. In other words, the terminal apparatus 10 may start an on-duration for a certain cell group, based on sfnOffset_1 for the certain cell group and regard the time in which the on-duration is in operation as an active time for the serving cell(s) belonging to the certain cell group. The terminal apparatus 10 monitors a PDCCH in the active time. The terminal apparatus 10 may determine an active time for a serving cell(s) belonging to a certain cell group (cell group configured with DRX parameters), based on sfnOffset_1 configured for the serving cell(s). In other words, the terminal apparatus 10 may start an on-duration for a certain cell group, based on sfnOffset_1 for a certain saving cell and regard the time in which the on-duration is in operation as an active time for the serving cell belonging to a certain cell group. The terminal apparatus 10 monitors a PDCCH in the active time. In the present embodiment, an operation of the terminal apparatus 10 performed to determine an active time and/or an operation of the terminal apparatus 10 performed to monitor a PDCCH in an active time is also referred to as an operation in DRX.

- Alteration 1

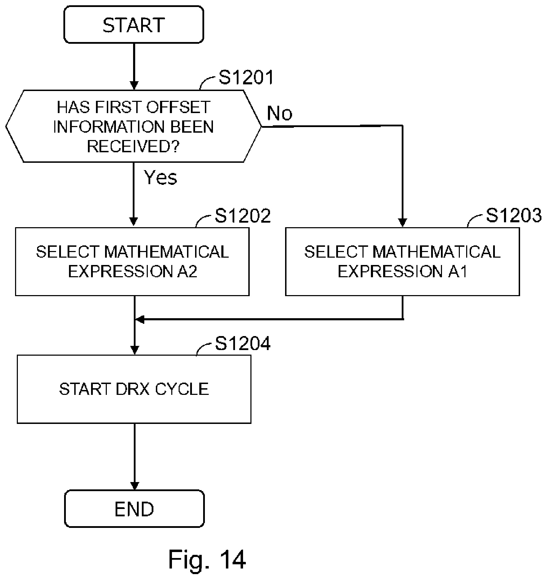

The terminal apparatus 10 may be configured to switch mathematical expressions. As illustrated in Fig. 14, the controller 110 of the terminal apparatus 10 determines whether the first offset information has been received (S1201) from the base station apparatus 20. In a case where the first offset information has been received (Yes in S1201), the controller 110 selects mathematical expression A2 (S1202). The controller 110 starts a cycle of long DRX by using mathematical expression A2 (S1204). In contrast, in a case where the first offset information has not been received (No in S1201), the controller 110 selects mathematical expression A1 (S1203). The controller 110 starts a cycle of long DRX by using mathematical expression A1 (S1204). For example, the terminal apparatus 10 may select mathematical expression A1 and/or mathematical expression A2, based on reception of information to be used for selection of mathematical expression A1 and/or mathematical expression A2, and perform an operation in DRX. For example, the base station apparatus 20 may transmit, to the terminal apparatus 10, an RRC message including information to be used for selecting mathematical expression A1 and/or mathematical expression A2. For example, the base station apparatus 20 may configure information to be used for selecting mathematical expression A1 and/or mathematical expression A2 for a certain cell group, and the terminal apparatus 10 may select mathematical expression A1 and/or mathematical expression A2, based on the information to be used for selection of mathematical expression A1 and/or mathematical expression A2, and perform an operation in DRX by using the selected mathematical expression, in a serving cell belonging to the certain cell group.

With the configuration, the terminal apparatus 10 can select an appropriate mathematical expression according to information from the base station apparatus 20.

- Alteration 2

The base station apparatus 20 may use mathematical expressions A1 and A2 to specify a cycle of long DRX in the terminal apparatus 10. In this case, the base station apparatus 20 may select a mathematical expression as follows. In a case where the first offset information has been transmitted to the terminal apparatus 10, the controller 210 of the base station apparatus 20 selects mathematical expression A2. In contrast, in a case where the first offset information is not transmitted to the terminal apparatus 10, the controller 210 selects mathematical expression A1.

(2) Second Aspect

The controller 110 starts an on-duration in long DRX by using mathematical expression A3 below. SFN_offset_1 denotes a remainder left when the time length of one cycle of the SFN is divided by the time length of a cycle of long DRX. SFN_offset_1 is a value for correcting a start position of an on-duration in long DRX in units of millisecond from a time point when the SFN is updated to 0.

[Math. 4]

$$[(SFN \times 10) + (SFN\_offset\_1 \times n) + \text{subframe number}] \text{ modulo}$$
$$(drx\text{-}LongCycle) = drx\text{-}StartOffset$$
$$\text{where SFN\_offset\_1} = (1024 \times 10) \text{ modulo } drx\text{-}LongCycle$$
$$\text{and } n = n+1 \text{ whenever SFN} = 0 \qquad \cdots (A3)$$

Note that mathematical expression A3 can be transformed to mathematical expression A3-2 below. "SFN + SFN_offset_1/10 $\times$ n" corresponds to the above-mentioned addition operation. As described above, mathematical expression A3 can be transformed to a mathematical expression in such a format as to offset the SFN.

[Math. 5]

$$\{[(SFN + SFN\_offset\_1/10 \times n) \times 10] + \text{subframe number}\} \text{ modulo}$$
$$(drx\text{-}LongCycle) = drx\text{-}StartOffset$$
$$\text{where SFN\_offset\_1} = (1024 \times 10) \text{ modulo } drx\text{-}LongCycle$$
$$\text{and } n = n+1 \text{ whenever SFN} = 0 \qquad \cdots (A3\text{-}2)$$

The controller 110 computes SFN_offset_1 by using "drx-LongCycle", which is a DRX parameter. With this configuration, the base station apparatus 20 need not newly notify the terminal apparatus 10 of SFN_offset_1 in addition to DRX parameters. Signaling between the base station apparatus 20 and the terminal apparatus 10 can be reduced.

- Alteration 1

The base station apparatus 20 may transmit, to the terminal apparatus 10, indication information indicating use of mathematical expression A3 (which is also referred to as first indication information below, and which may be information to be used for selecting mathematical expression A3). For example, the base station apparatus 20 may transmit an RRC message including the first indication information to the terminal apparatus 10. The first indication information may be configured as a new element of a DRX-config IE. In other words, the base station apparatus 20 may transmit an RRC message including the first indication information for a certain cell group to the terminal apparatus 10. In other words, the first indication information may be configured for one or each of a plurality of cell groups (cell group(s) configured with DRX parameters). The first indication information may be configured in an IE other than the DRX-config IE. For example, the base station apparatus 20 may transmit, to the terminal apparatus 10, an RRC message including the first indication information for a serving cell(s) belonging to a certain cell group. In other words, the first indication information may be configured for one or each of a plurality of serving cells (each of serving cells belonging to each cell group configured with the DRX parameters). The base station apparatus 20 may transmit, to the terminal apparatus 10, system information (SI, for example, SIB1 and/or an SIB other than SIB1) including the first indication information. The base station apparatus 20 may transmit DCI including the first indication information to the terminal apparatus 10.

- Alteration 2

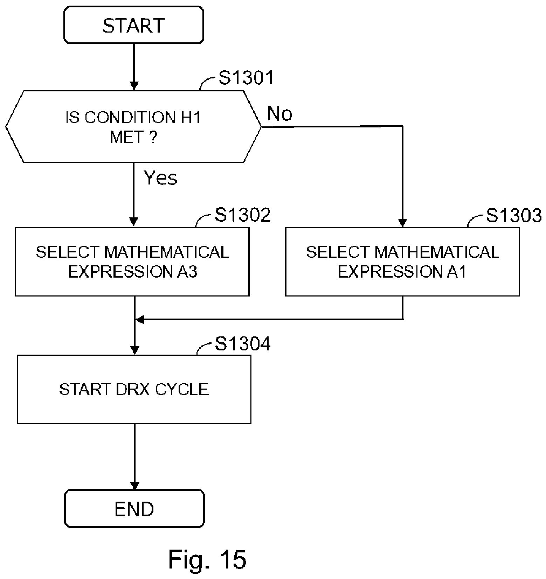

The terminal apparatus 10 may be configured to switch mathematical expressions. As illustrated in Fig. 15, the controller 110 of the terminal apparatus 10 determines whether condition H1 below is met (S1301). In other words, the controller 110 may determine whether condition H1 below is satisfied. In the present embodiment, the expression "a condition is met" may mean the condition being satisfied. In the present embodiment, the expression "a condition is not met" may mean the condition being not satisfied. In other words, in the present embodiment, whether a condition is met may mean whether the condition is satisfied. Condition H1 corresponds to a use condition for determining whether to use mathematical expression A3. Condition H1 is one or a combination of two or more selected from conditions h11 to h13 below.

h11: The terminal apparatus 10 has received, from the base station apparatus 20, such configuration information for a cycle of long DRX that the time length of one cycle of the SFN is not an integral multiple of the time length of a cycle of long DRX.

h12: The terminal apparatus 10 has received, from the base station apparatus 20, configuration information for a cycle of long DRX indicating a time length having a non-integer value.

h13: The terminal apparatus 10 has received the first indication information from the base station apparatus 20.

Note that, throughout the Specification of the present application, in a case where a condition to be determined is constituted of a combination of two or more conditions, these two or more conditions may be combined by using logical addition (OR) and/or logical multiplication (AND). A condition may be selected from among all the combinations obtained by such combination of logical operations.

In a case where condition H1 is met (Yes in S1301), the controller 110 selects mathematical expression A3 (S1302). The controller 110 starts a cycle of long DRX by using mathematical expression A3 (S1304). In contrast, in a case where condition H1 is not met (No in S1301), the controller 110 selects mathematical expression A1 (S1303). The controller 110 starts a cycle of long DRX by using mathematical expression A1 (S1304).

- Alteration 3

The base station apparatus 20 may use mathematical expressions A1 and A3 to specify a cycle of long DRX in the terminal apparatus 10. In this case, the base station apparatus 20 may select a mathematical expression as follows. The controller 210 of the base station apparatus 20 determines whether condition H2 below is met. Condition H2 corresponds to a use condition for determining whether to use mathematical expression A3. Condition H2 is one or a combination of two or more selected from conditions h21 to h23 below.

h21: The base station apparatus 20 has transmitted the first indication information to the terminal apparatus 10.

h22: The base station apparatus 20 has transmitted, to the terminal apparatus 10, such configuration information for a cycle of long DRX that the time length of one cycle of the SFN is not an integral multiple of the time length of a cycle of long DRX.

h23: The base station apparatus 20 has transmitted, to the terminal apparatus 10, configuration information for a cycle of long DRX indicating a time length having a non-integer value.

In a case where condition H2 is met, the controller 210 selects mathematical expression A3. In a case where condition H2 is not met, the controller 210 selects mathematical expression A1.

(3) Third Aspect

For an operation in DRX, an H-SFN may be used. In other words, the terminal apparatus 10 may apply an H-SFN to the operation in DRX. In a case where an H-SFN is used (applied), the controller 110 starts an on-duration in long DRX by using mathematical expression A4 below. "SFN + H-SFN × 1024" corresponds to the above-mentioned addition operation. 1024 in "H-SFN × 1024" corresponds to the number of SFNs included in one cycle of the H-SFN.

[Math. 6]

$$\{[(SFN + H\text{-}SFN \times 1024) \times 10] + subframe\ number\} \ modulo\ (drx\text{-}LongCycle) = drx\text{-}StartOffset \qquad (A4)$$

With the configuration, a constant interval (periodicity) between on-durations in long DRX is maintained even in a case where an H-SFN is used. A constant cycle of long DRX is maintained without change even in a case where an SFN is updated from 1023 to 0.

- Alteration 1

The base station apparatus 20 may transmit, to the terminal apparatus 10, indication information indicating use of mathematical expression A4 (which is also referred to as second indication information below, and which may be information to be used for applying an H-SFN to an operation in DRX or information to be used for selecting mathematical expression A4). For example, the base station apparatus 20 may transmit an RRC message including the second indication information to the terminal apparatus 10. The second indication information may be configured as a new element of a DRX-config IE. In other words, the base station apparatus 20 may transmit an RRC message including the second indication information for a certain cell group to the terminal apparatus 10. In other words, the second indication information may be configured for one or each of a plurality of cell groups (cell group(s) configured with DRX parameters). The second indication information may be configured in an IE other than the DRX-config IE. For example, the base station apparatus 20 may transmit, to the terminal apparatus 10, an RRC message including the second indication information for a serving cell(s) belonging to a certain cell group. In other words, the second indication information may be configured for one or each of a plurality of serving cells (each of serving cells belonging to each cell group configured with the DRX parameters). The base station apparatus 20 may transmit, to the terminal apparatus 10, system information (SI, for example, SIB 1 and/or an SIB other than SIB1) including the second indication information. The base station apparatus 20 may transmit DCI including the second indication information to the terminal apparatus 10.

As described above, the base station apparatus 20 may transmit, to the terminal apparatus 10, system information (for example, SIB1) including information indicating an H-SFN and/or information indicating that extended DRX is allowed in the cell. In other words, the terminal apparatus 10 may apply the H-SFN to an operation in DRX (may determine whether to apply an H-SFN to an operation in DRX), based on the information indicating an H-SFN, the information indicating that extended DRX is allowed in a cell, and/or the second indication information. In other words, the terminal apparatus 10 may use mathematical expression A4 for an operation in DRX (may determine whether to use mathematical expression A4 for an operation in DRX), based on the information indicating an H-SFN, the information indicating that extended DRX is allowed in a cell, and/or the second indication information. For example, the terminal apparatus 10 may apply the H-SFN to an operation in DRX, in a case where the information indicating an H-SFN, the information indicating that extended DRX is allowed in a cell, and the second indication information are all configured. The terminal apparatus 10 need not apply an H-SFN to an operation in DRX, in a case where at least one of the information indicating an H-SFN, the information indicating that extended DRX is allowed in a cell, and the second indication information is not configured. For example, in a case where the terminal apparatus 10 does not apply an H-SFN to an operation in DRX, the terminal apparatus 10 may perform an operation in DRX, based on mathematical expression A1.

As described above, the terminal apparatus 10 may be changed to any one of states including RRC_CONNECTED, RRC_INACTIVE, and RRC_IDLE, as an RRC state. In other words, the terminal apparatus 10 in an RRC_CONNECTED state may apply the H-SFN to an operation in DRX. In other words, the information indicating an H-SFN and/or the information indicating that extended DRX is allowed in the cell may be configured for the terminal apparatus 10 in an RRC_CONNECTED state, an RRC_INACTIVE state, and/or an RRC_IDLE state. For example, the terminal apparatus 10 in an RRC_CONNECTED state may acquire the information indicating an H-SFN and/or the information indicating that extended DRX is allowed in a cell (in other words, SIB1 including the information indicating an H-SFN and/or the information indicating that extended DRX is allowed in a cell), based on the second indication information (reception of the second indication information) and apply the H-SFN to the operation in DRX.

- Alteration 2

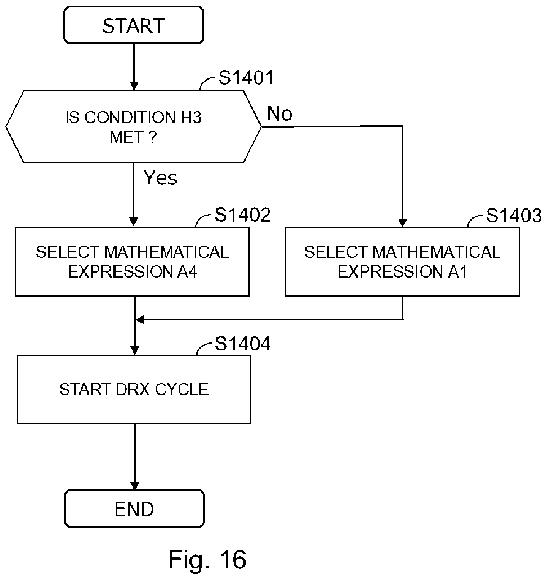

The terminal apparatus 10 may be configured to switch mathematical expressions. As illustrated in Fig. 16, the controller 110 of the terminal apparatus 10 determines whether condition H3 below is met (S1401). Condition H3 corresponds to a use condition for determining whether to use mathematical expression A4. Condition H3 is one or a combination of two or more selected from conditions h31 to h34 below. For example, condition H3 may be a combination of h31 and h34.

h31: The terminal apparatus 10 has received, from the base station apparatus 20, such configuration information for a cycle of long DRX that the time length of one cycle of the SFN is not an integral multiple of the time length of a cycle of long DRX.

h32: The terminal apparatus 10 has received, from the base station apparatus 20, configuration information for a cycle of long DRX indicating a time length having a non-integer value.

h33: The terminal apparatus 10 has received the second indication information from the base station apparatus 20.

h34: The terminal apparatus 10 has received information related to an H-SFN from the base station apparatus 20. The information related to an H-SFN may be eDRX-Allowed and/or hyperSFN included in system information (for example, SIB1).

In a case where condition H3 is met (Yes in S1401), the controller 110 selects mathematical expression A4 (S1402). The controller 110 starts a cycle of long DRX by using mathematical expression A4 (S1404). In contrast, in a case where condition H3 is not met (No in S1401), the controller 110 selects mathematical expression A1 (S1403). The controller 110 starts a cycle of long DRX by using mathematical expression A1 (S1404).

With the configuration, the terminal apparatus 10 can select an appropriate mathematical expression according to the time length of a cycle of long DRX and/or information from the base station apparatus 20.

- Alteration 3

The base station apparatus 20 may use mathematical expressions A1 and A4 to specify a cycle of long DRX in the terminal apparatus 10. In this case, the base station apparatus 20 may select a mathematical expression as follows. The controller 210 of the base station apparatus 20 determines whether condition H4 below is met. Condition H4 corresponds to a use condition for determining whether to use mathematical expression A4. Condition H4 is one or a combination of two or more selected from conditions h41 to h44 below. For example, condition H4 may be a combination of h41 and h44.

h41: The base station apparatus 20 has transmitted the second indication information to the terminal apparatus 10.

h42: The base station apparatus 20 has transmitted, to the terminal apparatus 10, such configuration information for a cycle of long DRX that the time length of one cycle of the SFN is not an integral multiple of the time length of a cycle of long DRX.

h43: The base station apparatus 20 has transmitted, to the terminal apparatus 10, configuration information for a cycle of long DRX indicating a time length having a non-integer value.

h44: The base station apparatus 20 has transmitted information related to an H-SFN to the terminal apparatus 10. The information related to an H-SFN may be eDRX-Allowed and/or hyperSFN included in system information (for example, SIB1).

In a case where condition H4 is met, the controller 210 selects mathematical expression A4. In a case where condition H4 is not met, the controller 210 selects mathematical expression A1.

1.8.3. Short DRX

(1) First Aspect

The controller 110 starts an on-duration in short DRX by using mathematical expression (B2) below.

[Math. 7]

$$\{[(SFN + sfnOffset\_2 \times n) \times 10] + subframe\ number\}\ modulo$$
$$(drx\text{-}ShortCycle) = (drx\text{-}StartOffset)\ modulo\ (drx\text{-}ShortCycle)$$
$$Where\ n = n+1\ whenever\ SFN = 0 \qquad \cdot\ \cdot\ \cdot\ (B2)$$

With the configuration, a constant interval between on-durations in short DRX is maintained even in a case where an SFN is updated from 1023 to 0. Hence, it is possible to reduce the possibility of occurrence of a mismatch between the timing at which a signal from the base station apparatus 20 arrives and an on-duration. Consequently, it is possible to prevent occurrence of delay as that described above and an increase of signaling due to reconfiguration of DRX parameters.

The base station apparatus 20 transmits offset information related to sfnOffset_2 to the terminal apparatus 10. The offset information related to sfnOffset_2 is referred to as "second offset information". The base station apparatus 20 may transmit an RRC message including the second offset information to the terminal apparatus 10. The second offset information may be configured as a new element of a DRX-config IE. In other words, the base station apparatus 20 may transmit an RRC message including the second offset information for a certain cell group to the terminal apparatus 10. In other words, the second offset information may be configured for one or each of a plurality of cell groups (cell group(s) configured with DRX parameters). The second offset information may be configured in an IE other than the DRX-config IE. For example, the base station apparatus 20 may transmit, to the terminal apparatus 10, an RRC message including the second offset information for a serving cell(s) belonging to a certain cell group. In other words, the second offset information may be configured for one or each of a plurality of serving cells (each of serving cells belonging to each cell group for which the DRX parameters are configured). The base station apparatus 20 may transmit, to the terminal apparatus 10, system information (SI, for example, SIB1 and/or an SIB other than SIB1) including the second offset information. The base station apparatus 20 may transmit DCI including the second offset information to the terminal apparatus 10. sfnOffset_2 in mathematical expression B2 may use the same value as that of sfnOffset_1 in mathematical expression A2. In other words, in a case where the base station apparatus 20 transmits first offset information related to sfnOffset_1 to the terminal apparatus 10, the base station apparatus 20 need not transmit the second offset information related to sfnOffset_2 to the terminal apparatus 10.

In other words, the terminal apparatus 10 may determine an active time for a serving cell(s) belonging to a certain cell group, based on sfnOffset_2 configured for the certain cell group. In other words, the terminal apparatus 10 may start an on-duration for a certain cell group, based on sfnOffset_2 for the certain cell group and regard the time in which the on-duration is in operation as an active time for the serving cell(s) belonging to the certain cell group. The terminal apparatus 10 monitors a PDCCH in the active time. The terminal apparatus 10 may determine an active time for a serving cell(s) belonging to a certain cell group (cell group configured with DRX parameters), based on sfnOffset_2 configured for the serving cell(s). In other words, the terminal apparatus 10 may start an on-duration for a certain cell group, based on sfnOffset_2 for a certain saving cell and regard the time in which the on-duration is in operation as an active time for the serving cell belonging to a certain cell group. The terminal apparatus 10 monitors a PDCCH in the active time.

- Alteration 1

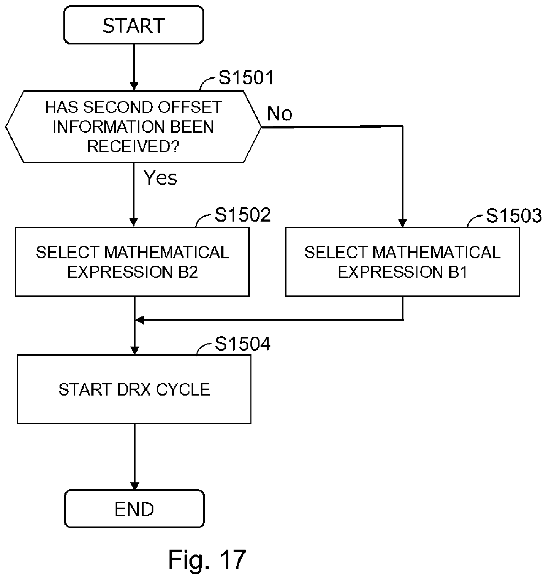

The terminal apparatus 10 may be configured to switch mathematical expressions. As illustrated in Fig. 17, the controller 110 of the terminal apparatus 10 determines whether the second offset information has been received from the base station apparatus 20 (S1501). In a case where the second offset information has been received (Yes in S1501), the controller 110 selects mathematical expression B2 (S1502). The controller 110 starts a cycle of short DRX by using mathematical expression B2 (S1504). In contrast, in a case where the second offset information has not been received (No in S1501), the controller 110 selects mathematical expression B1 (S1503). The controller 110 starts a cycle of short DRX by using mathematical expression B1 (S1504). For example, the terminal apparatus 10 may select mathematical expression B1 and/or mathematical expression B2, based on reception of information to be used for selection of mathematical expression B1 and/or mathematical expression B2, and perform an operation in DRX. For example, the base station apparatus 20 may transmit, to the terminal apparatus 10, an RRC message including information to be used for selecting mathematical expression B1 and/or mathematical expression B2. For example, the base station apparatus 20 may configure information to be used for selecting mathematical expression B1 and/or mathematical expression B2 for a certain cell group, and the terminal apparatus 10 may select mathematical expression B1 and/or mathematical expression B2, based on the information to be used for selection of mathematical expression B1 and/or mathematical expression B2, and perform an operation in DRX by using the selected mathematical expression, in a serving cell belonging to the certain cell group.

With the configuration, the terminal apparatus 10 can select an appropriate mathematical expression according to information from the base station apparatus 20.

- Alteration 2

The base station apparatus 20 may use mathematical expressions B1 and B2 to specify a cycle of short DRX in the terminal apparatus 10. In this case, the base station apparatus 20 may select a mathematical expression as follows. In a case where the second offset information has been transmitted to the terminal apparatus 10, the controller 210 of the base station apparatus 20 selects mathematical expression B2. In a case where the second offset information is not transmitted to the terminal apparatus 10, the controller 210 selects mathematical expression B1.

(2) Second Aspect

The controller 110 starts an on-duration in short DRX by using mathematical expression B3 below. SFN_offset_2 denotes a remainder left when the time length of one cycle of the SFN is divided by the time length of a cycle of short DRX. SFN_offset_2 is a value for correcting a start position of an on-duration in short DRX in units of millisecond from a time point when the SFN is updated to 0.
[Math. 8]

$$[(SFN \times 10) + (SFN\_offset\_2 \times n) + \text{subframe number}] \text{ modulo}$$
$$(drx\text{-}ShortCycle) = (drx\text{-}StartOffset) \text{ modulo } (drx\text{-}ShortCycle)$$
$$\text{where } SFN\_offset\_2 = (1024 \times 10) \text{ modulo } drx\text{-}ShortCycle$$
$$\text{and } n = n+1 \text{ whenever } SFN = 0 \qquad \cdots (B3)$$

Note that mathematical expression B3 can be transformed to mathematical expression B3-2 below. "SFN + SFN_offset_2/10 $\times$ n" corresponds to the above-mentioned addition operation. As described above, mathematical expression B3 can be transformed to a mathematical expression in such a format as to offset the SFN.
[Math. 9]

$$\{[(SFN + SFN\_offset\_2/10 \times n) \times 10] + \text{subframe number}\} \text{ modulo}$$
$$(drx\text{-}ShortCycle) = (drx\text{-}StartOffset) \text{ modulo } (drx\text{-}ShortCycle)$$
$$\text{where } SFN\_offset\_2 = (1024 \times 10) \text{ modulo } drx\text{-}ShortCycle$$
$$\text{and } n = n+1 \text{ whenever } SFN = 0 \qquad \cdots (B3\text{-}2)$$

The controller 110 computes SFN_offset_2 by using "drx-shortCycle", which is a DRX parameter. With this configuration, the base station apparatus 20 need not newly notify the terminal apparatus 10 of SFN_offset_2 in addition to DRX parameters. Signaling between the base station apparatus 20 and the terminal apparatus 10 can be reduced.

- Alteration 1

The base station apparatus 20 may transmit, to the terminal apparatus 10, indication information indicating use of mathematical expression B3 (which is also referred to as third indication information below, and which may be information to be used for selecting mathematical expression B3). For example, the base station apparatus 20 may transmit an RRC message including the third indication information to the terminal apparatus 10. The third indication information may be configured as a new element of a DRX-config IE. In other words, the base station apparatus 20 may transmit an RRC message including the third indication information for a certain cell group to the terminal apparatus 10. In other words, the third indication information may be configured for one or each of a plurality of cell groups (cell group(s) configured with DRX parameters). The third indication information may be configured in an IE other than the DRX-config IE. For example, the base station apparatus 20 may transmit, to the terminal apparatus 10, an RRC message including the third indication information for a serving cell(s) belonging to a certain cell group. In other words, the third indication information may be configured for one or each of a plurality of serving cells (each of serving cells belonging to each cell group configured with the DRX parameters). The base station apparatus 20 may transmit, to the terminal apparatus 10, system information (SI, for example, SIB1 and/or an SIB other than SIB1) including the third indication information. The base station apparatus 20 may transmit DCI including the third indication information to the terminal apparatus 10.

- Alteration 2

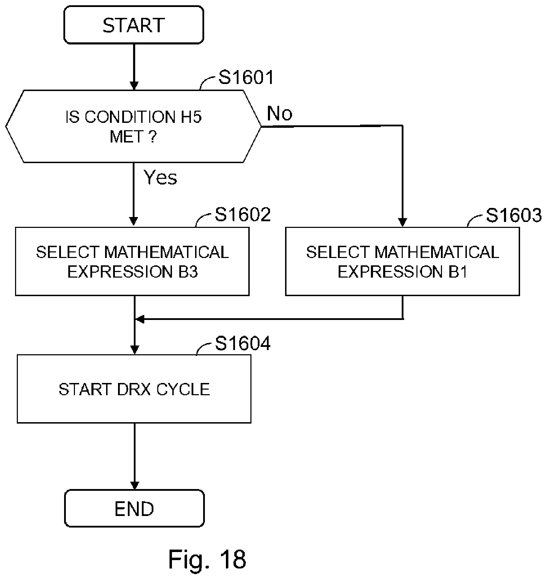

The terminal apparatus 10 may be configured to switch mathematical expressions. As illustrated in Fig. 18, the controller 110 of the terminal apparatus 10 determines whether condition H5 below is met (S1601). Condition H5 corresponds to a use condition for determining whether to use mathematical expression B3. Condition H5 is one or a combination of two or more selected from conditions h51 to h53 below.

h51: The terminal apparatus 10 has received, from the base station apparatus 20, such configuration information for a cycle of short DRX that the time length of one cycle of the SFN is not an integral multiple of the time length of a cycle of short DRX.

h52: The terminal apparatus 10 has received, from the base station apparatus 20, configuration information for a cycle of short DRX indicating a time length having a non-integer value.

h53: The terminal apparatus 10 has received the third indication information from the base station apparatus 20.

In a case where condition H5 is met (Yes in S1601), the controller 110 selects mathematical expression B3 (S1602). The controller 110 starts a cycle of short DRX by using mathematical expression B3 (S1604). In contrast, in a case where condition H5 is not met (No in S1601), the controller 110 selects mathematical expression B1 (S1603). The controller 110 starts a cycle of short DRX by using mathematical expression B1 (S1604).

- Alteration 3

The base station apparatus 20 may use mathematical expressions B1 and B3 to specify a cycle of short DRX in the terminal apparatus 10. In this case, the base station apparatus 20 may select a mathematical expression as follows. The controller 210 of the base station apparatus 20 determines whether condition H6 below is met. Condition H6 corresponds to a use condition for determining whether to use mathematical expression B3. Condition H6 is one or a combination of two or more selected from conditions h61 to h63 below.

h61: The base station apparatus 20 has transmitted the third indication information to the terminal apparatus 10.

h62: The base station apparatus 20 has transmitted, to the terminal apparatus 10, such configuration information for a cycle of short DRX that the time length of one cycle of the SFN is not an integral multiple of the time length of a cycle of short DRX.

h63: The base station apparatus 20 has transmitted, to the terminal apparatus 10, configuration information for a cycle of short DRX indicating a time length having a non-integer value.

In a case where condition H6 is met, the controller 210 selects mathematical expression B3. In a case where condition H6 is not met, the controller 210 selects mathematical expression B1.

(3) Third Aspect

For an operation in short DRX, an H-SFN may be used. In other words, the terminal apparatus 10 may apply an H-SFN to the operation in short DRX. In a case where an H-SFN is used (applied), the controller 110 starts an on-duration in short DRX by using mathematical expression B4 below.

[Math. 10]

$$\{[(\text{SFN} + \text{H-SFN} \times 1024) \times 10] + \text{subframe number}\} \bmod (\textit{drx-ShortCycle}) = (\textit{drx-StartOffset}) \bmod (\textit{drx-ShortCycle}) \tag{B4}$$

With the configuration, a constant cycle of short DRX is maintained even in a case where an H-SFN is used. A constant cycle of long DRX is maintained without change even in a case where an SFN is updated from 1023 to 0.

- Alteration 1

The base station apparatus 20 may transmit, to the terminal apparatus 10, indication information indicating use of mathematical expression B4 (which is also referred to as fourth indication information below, and which may be information to be used for applying an H-SFN to an operation in DRX or information to be used for selecting mathematical expression B4). For example, the base station apparatus 20 may transmit an RRC message including the fourth indication information to the terminal apparatus 10. The fourth indication information may be configured as a new element of a DRX-config IE. In other words, the base station apparatus 20 may transmit an RRC message including the fourth indication information for a certain cell group to the terminal apparatus 10. In other words, the fourth indication information may be configured for one or each of a plurality of cell groups (cell group(s) configured with DRX parameters). The fourth indication information may be configured in an IE other than the DRX-config IE. For example, the base station apparatus 20 may transmit, to the terminal apparatus 10, an RRC message including the fourth indication information for a serving cell(s) belonging to a certain cell group. In other words, the fourth indication information may be configured for one or each of a plurality of serving cells (each of serving cells belonging to each cell group configured with the DRX parameters). The base station apparatus 20 may transmit, to the terminal apparatus 10, system information (SI, for example, SIB1 and/or an SIB other than SIB1) including the fourth indication information. The base station apparatus 20 may transmit DCI including the fourth indication information to the terminal apparatus 10.

As described above, the base station apparatus 20 may transmit, to the terminal apparatus 10, system information (for example, SIB1) including information indicating an H-SFN and/or information indicating that extended DRX is allowed in the cell. In other words, the terminal apparatus 10 may apply the H-SFN to an operation in DRX (may determine whether to apply an H-SFN to an operation in DRX), based on the information indicating an H-SFN, the information indicating that extended DRX is allowed in a cell, and/or the fourth indication information. In other words, the terminal apparatus 10 may use mathematical expression B4 for an operation in DRX (may determine whether to use mathematical expression B4 for an operation in DRX), based on the information indicating an H-SFN, the information indicating that extended DRX is allowed in a cell, and/or the fourth indication information. For example, the terminal apparatus 10 may apply the H-SFN to an operation in DRX, in a case where the information indicating an H-SFN, the information indicating that extended DRX is allowed in a cell, and the fourth indication information are all configured. The terminal apparatus 10 need not apply an H-SFN to an operation in DRX, in a case where at least one of the information indicating an H-SFN, the information indicating that extended DRX is allowed in a cell, and the fourth indication information is not configured. For example, in a case where the terminal apparatus 10 does not apply an H-SFN to an operation in DRX, the terminal apparatus 10 may perform an operation in DRX, based on mathematical expression B1.

As described above, the terminal apparatus 10 in an RRC_CONNECTED state may apply the H-SFN to an operation in DRX. In other words, the information indicating an H-SFN and/or the information indicating that extended DRX is allowed in the cell may be configured for the terminal apparatus 10 in an RRC_CONNECTED state, an RRC_INACTIVE state, and/or an RRC_IDLE state. For example, the terminal apparatus 10 in an RRC_CONNECTED state may acquire the information indicating an H-SFN and/or the information indicating that extended DRX is allowed in a cell (in other words, SIB1 including the information indicating an H-SFN and/or the information indicating that extended DRX is allowed in a cell), based on the fourth indication information (reception of the fourth indication information) and apply the H-SFN to the operation in DRX.

- Alteration 2

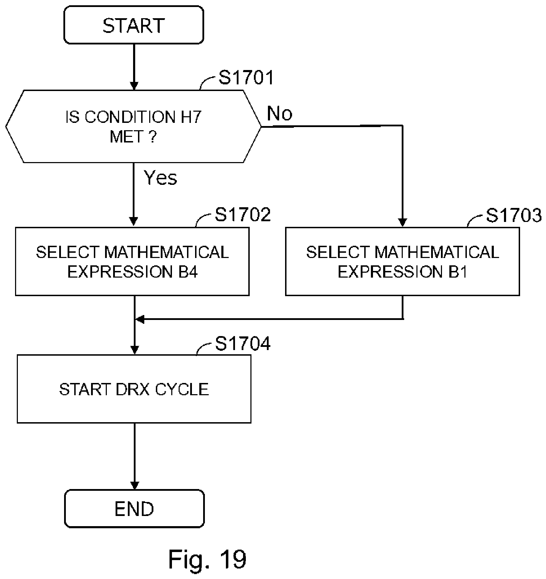

The terminal apparatus 10 may be configured to switch mathematical expressions. As illustrated in Fig. 19, the controller 110 of the terminal apparatus 10 determines whether condition H7 below is met (S1701). Condition H7 corresponds to a use condition for determining whether to use mathematical expression B4. Condition H7 is one or a combination of two or more selected from conditions h71 to h74 below. For example, condition H7 may be a combination of h71 and h74.

h71: The terminal apparatus 10 has received, from the base station apparatus 20, such configuration information for a cycle of short DRX that the time length of one cycle of the SFN is not an integral multiple of the time length of a cycle of short DRX.

h72: The terminal apparatus 10 has received, from the base station apparatus 20, configuration information for a cycle of short DRX indicating a time length having a non-integer value.

h73: The terminal apparatus 10 has received the fourth indication information from the base station apparatus 20.

h74: The terminal apparatus 10 has received information related to an H-SFN from the base station apparatus 20. The information related to an H-SFN may be eDRX-Allowed and/or hyperSFN included in system information (for example, SIB1).

In a case where condition H7 is met (Yes in S1701), the controller 110 selects mathematical expression B4 (S1702). The controller 110 starts a cycle of short DRX by using mathematical expression B4 (S1704). In contrast, in a case where condition H7 is not met (No in S1701), the controller 110 selects mathematical expression B1 (S1703). The controller 110 starts a cycle of short DRX by using mathematical expression B1 (S1704).

With the configuration, the terminal apparatus 10 can select an appropriate mathematical expression according to the time length of a cycle of short DRX and/or information from the base station apparatus 20.

- Alteration 3

The base station apparatus 20 may use mathematical expressions B1 and B4 to specify a cycle of long DRX in the terminal apparatus 10. In this case, the base station apparatus 20 may select a mathematical expression as follows. The controller 210 of the base station apparatus 20 determines whether condition H8 below is met. Condition H8 corresponds to a use condition for determining whether to use mathematical expression B4. Condition H8 is one or a combination of two or more selected from conditions h81 to h84 below. For example, condition H8 may be a combination of h81 and h84.

h81: The base station apparatus 20 has transmitted the fourth indication information to the terminal apparatus 10.

h82: The base station apparatus 20 has transmitted, to the terminal apparatus 10, such configuration information for a cycle of short DRX that the time length of one cycle of the SFN is not an integral multiple of the time length of a cycle of short DRX.

h83: The base station apparatus 20 has transmitted, to the terminal apparatus 10, configuration information for a cycle of short DRX indicating a time length having a non-integer value.

h84: The base station apparatus 20 has transmitted information related to an H-SFN to the terminal apparatus 10. The information related to an H-SFN may be eDRX-Allowed and/or hyperSFN included in system information (for example, SIB1).

In a case where condition H8 is met, the controller 210 selects mathematical expression B4. In a case where condition H8 is not met, the controller 210 selects mathematical expression B1.

2. Second Embodiment

2.1. Overview of Configuration

A problem that constant periodicity cannot be maintained may occur also for other periodic operations using an SFN. Examples of such an operation will be described below.

- periodic transmission operation by a base station apparatus 200 in SPS
- periodic transmission operation of an SR by a terminal apparatus 100
- periodic transmission operation by a terminal apparatus 100 in CG

In each of the operations, a mathematical expression for determining timing for performing the periodic operation is used. In the mathematical expression, an SFN is used. As already described in the first embodiment, in a case where such a mathematical expression is used, an issue that constant operation periodicity is not maintained in a case where an SFN is updated from 1023 to 0 due to a value of configured periodicity.

In the present embodiment, a correction value may be applied to an SFN in a mathematical expression used in each of SPS, SR, and CG.

The controller 110 of the terminal apparatus 10 performs a periodic operation for transmission or reception by using a mathematical expression including a correction value for an SFN. Further, the controller 210 of the base station apparatus 20 performs a periodic operation for transmission or reception by using a mathematical expression including a correction value for an SFN.

The mathematical expression includes an addition operation of the SFN and the correction value. The correction value is a value not to be zero even in a case where the SFN is updated from 1023 to 0. With this configuration, in a case where the SFN is updated from 1023 to 0, the value of the addition operation is not to be zero. Consequently, constant operation periodicity is maintained.

The correction value may be a value to increase with an increase of the number of times the SFN is updated from 1023 to 0. For example, the correction value may be a value computed by using a first value corresponding to the number of times the SFN is updated from 1023 to 0 and a second value for offsetting the SFN. For example, the correction value may be the product of the first value and the second value. With this configuration, the SFN in the mathematical expression is offset according to the number of times the SFN is updated from 1023 to 0. Consequently, constant operation periodicity is maintained. Hence, it is possible to reduce the possibility of occurrence of delay. Further, it is also possible to reduce the possibility of an increase of signaling due to reconfiguration of parameters. In the following, a mathematical expression to be applied to each of SPS, SR, and CG will be described more concretely.

2.2. Semi-Persistent Scheduling (SPS)

Mathematical expression C1 below may be used to allocate a downlink resource in SPS.

[Math. 11]

$$(numberOfSlotsPerFrame \times \text{SFN} + \text{slot number in the frame}) = [(numberOfSlotsPerFrame \times \text{SFN}_{\text{start time}} + \text{slot}_{\text{start time}}) + \text{N} \times periodicity \times numberOfSlotsPerFrame / 10] \text{ modulo } (1024 \times numberOfSlotsPerFrame) \quad (C1)$$

Parameters in mathematical expression C1 are as follows.

- numberOfSlotsPerFrame: the number of slots included in one radio frame
- $\text{SFN}_{\text{start time}}$: SFN of a transmission occasion using the first PDSCH after initialization or reinitialization of downlink allocation
- $\text{Slot}_{\text{start time}}$: Slot number of a transmission occasion using the first PDSCH after initialization or reinitialization of downlink allocation
- periodicity: downlink allocation periodicity configured for a PDSCH

Note that the parameter "periodicity" in SPS corresponds to transmission periodicity for the base station apparatus 20 and is included in an SPS-Config IE as described above. The parameter "periodicity" is in units of millisecond. For example, the base station apparatus 20 may transmit, to the terminal apparatus 10, an RRC message including parameters related to SPS (i.e., SPS-Config IE) for a certain serving cell. In other words, the parameters related to SPS (i.e., SPS-Config IE) may be configured for one or each of a plurality of serving cells. The base station apparatus 20 may transmit, to the terminal apparatus 10, an RRC message including parameters related to SPS (i.e., SPS-Config IE) for a certain DL-BWP. In other words, the parameters related to SPS (i.e., SPS-Config IE) may be configured for one or each of a plurality of DL-BWPs. The terminal apparatus 10 may identify the parameters related to SPS (i.e., SPS-Config IE) for one or each of a plurality of DL-BWPs.

The base station apparatus 20 allocates an N-th downlink resource in an SFN and a slot number satisfying mathematical expression C1. The base station apparatus 20 performs a transmission operation by using the allocated resource. For example, in a case where DCI with CRC scrambled with a CS-RNTI being attached (in other words, DCI to be used for scheduling of a PDSCH) indicates activation of SPS (in other words, a PDCCH indicates activation of SPS), the terminal apparatus 10 may store the DCI as a configured downlink assignment. Here, the DCI (DCI format) to be used for scheduling of a PDSCH is also referred to as a downlink assignment. After a downlink assignment is configured for SPS, the terminal apparatus 10 may regard that an N-th downlink assignment occurs sequentially in each SFN and each slot number satisfying mathematical expression C1. In other words, the terminal apparatus 10 may regard that a stored downlink assignment occurs sequentially in each SFN and each slot number satisfying mathematical expression C1, to perform reception of a PDSCH. Similarly, the base station apparatus 20 may regard that a downlink assignment stored in the terminal apparatus 10 occurs sequentially in each SFN and each slot number satisfying mathematical expression C1, to perform transmission of a PDSCH. In the following, the terminal apparatus 10 regarding that a stored downlink assignment occurs sequentially, based on a certain mathematical expression, to perform reception of a PDSCH is also referred to as an operation for reception of a PDSCH (simply, reception operation) using the mathematical expression. Here, the operation for reception of a PDSCH using a mathematical expression also includes the terminal apparatus 10 simply performing reception of the PDSCH. The base station apparatus 20 regarding that a stored downlink assignment occurs sequentially, based on a certain mathematical expression, to perform transmission of a PDSCH is also referred to as an operation for transmission of a PDSCH (simply, transmission operation) using the mathematical expression. Here, the operation for transmission of a PDSCH using a mathematical expression also includes the base station apparatus 20 simply performing transmission of the PDSCH.

In a case where the time length of one cycle of the SFN is not an integral multiple of the time length of transmission periodicity (i.e., periodicity) of the base station apparatus 20, the time length of the transmission periodicity changes at the time of update of the SFN from 1023 to 0. Hence, an issue that constant transmission periodicity cannot be maintained occurs. Aspects for solving this issue will be described below.

(1) First Aspect

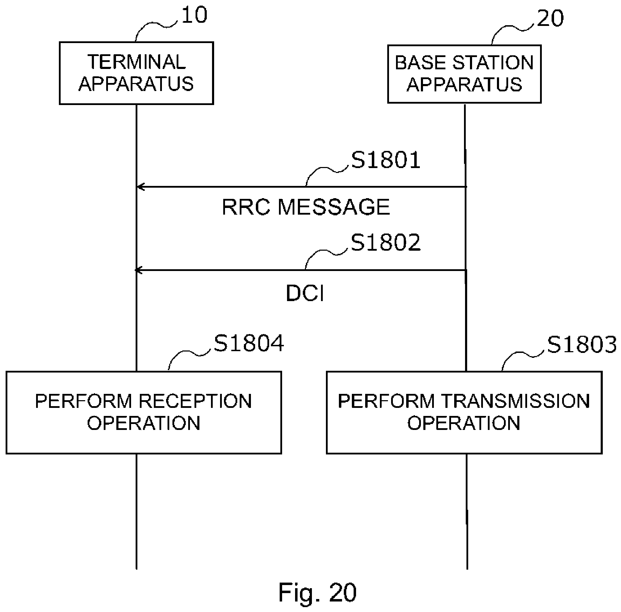

As illustrated in Fig. 20, the controller 210 of the base station apparatus 20 transmits an RRC message including SPS parameters to the terminal apparatus 10 via the communicator 220 (S1801). The controller 210 transmits DCI scrambled with a CS-RNTI to the terminal apparatus 10 via the communicator 220 (S1802). This activates a periodic transmission operation using a PDSCH.

The controller 210 performs a transmission operation using mathematical expression C2 below (S1803). The controller 110 of the terminal apparatus 100 performs a reception operation using mathematical expression C2 below (S1804). "sfnOffset_3 × n" corresponds to the correction value. n is a value incremented by one every time the SFN turns to be 0 and corresponds to the first value. sfnOffset_3 is a value for offsetting the SFN and corresponds to the second value.

[Math. 12]

$$[numberOfSlotsPerFrame \times (SFN + sfnOffset\_3 \times n) + \text{slot number in the frame}] = [(numberOfSlotsPerFrame \times SFN_{start\ time} + slot_{start\ time}) + N \times periodicity \times numberOfSlotsPerFrame / 10]\ modulo\ (1024 \times numberOfSlotsPerFrame)$$

$$\text{Where } n = n+1 \text{ whenever SFN} = 0 \qquad \cdot \cdot \cdot (C2)$$

With the configuration, the base station apparatus 20 can perform a transmission operation in constant periodicity even in a case where an SFN is updated from 1023 to 0. Further, the terminal apparatus 10 can perform a reception operation in constant periodicity with the transmission operation of the base station apparatus 20.

The base station apparatus 20 transmits offset information related to sfnOffset_3 to the terminal apparatus 10. The offset information related to sfnOffset_3 is referred to as "third offset information". The base station apparatus 20 may transmit an RRC message including the third offset information to the terminal apparatus 10. For example, the base station apparatus 20 may configure the third offset information for a serving cell(s) and/or a DL-BWP(s) configured with the SPS parameters. In other words, the third offset information may be configured for one or each of a plurality of serving cells. The third offset information may be configured for one or each of a plurality of DL-BWPs. The third offset information may be configured as a new element of an SPS-config IE. In other words, the base station apparatus 20 may transmit an RRC message including the third offset information for a certain serving cell and/or a certain DL-BWP to the terminal apparatus 10. In other words, the third offset information may be configured for one or each of a plurality of serving cells and/or one or each of a plurality of DL-BWPs (each of a serving cell(s) and/or a DL-BWP(s) configured with the SPS parameters). The third offset information may be configured in an IE other than the SPS-config IE. The base station apparatus 20 may transmit, to the terminal apparatus 10, system information (SI, for example, SIB1 and/or an SIB other than SIB1) including the third offset information. The base station apparatus 20 may transmit DCI including the third offset information to the terminal apparatus 10. In other words, the base station apparatus 20 may transmit the third offset information for a certain serving cell and/or a certain DL-BWP, and perform a transmission operation for a PDSCH in the certain serving cell and/or the certain DL-BWP, based on the third offset information. The terminal apparatus 10 may receive the third offset information for a certain serving cell and/or a certain DL-BWP, and perform a reception operation for a PDSCH in the certain serving cell and/or the certain DL-BWP, based on the third offset information.

- Alteration 1

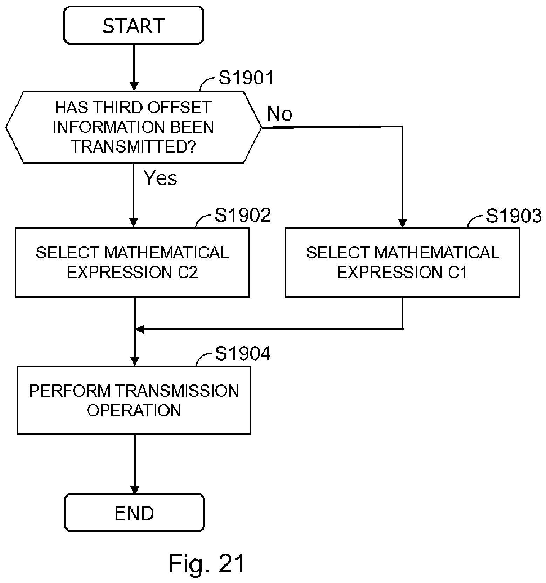

The base station apparatus 20 may be configured to switch mathematical expressions. The controller 210 of the base station apparatus 20 may select a mathematical expression according to transmission of the third offset information. As illustrated in Fig. 21, in a case where the third offset information has been transmitted (Yes in S1901), the controller 210 selects mathematical expression C2 (S1902). The controller 210 performs a periodic transmission operation using mathematical expression C2 (S1904). In contrast, in a case where the third offset information is not transmitted (No in S1901), the controller 210 selects mathematical expression C1 (S1903). The controller 210 performs a periodic transmission operation using mathematical expression C1 (S 1904).

- Alteration 2

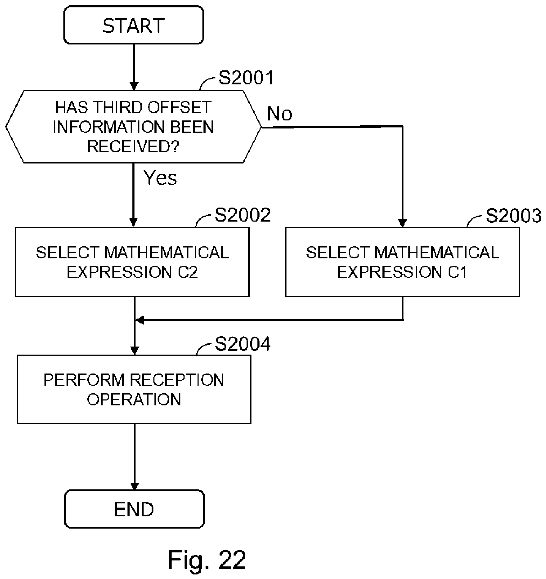

The terminal apparatus 10 may be configured to switch mathematical expressions. As illustrated in Fig. 22, the controller 110 of the terminal apparatus 10 determines whether the third offset information has been received from the base station apparatus 20 (S2001). In a case where the third offset information has been received (Yes in S2001), the controller 110 selects mathematical expression C2 (S2002). The controller 110 performs a periodic transmission operation using mathematical expression C2 (S2004). In contrast, in a case where the third offset information has not been received (No in S2001), the controller 110 selects mathematical expression C1 (S2003). The controller 110 performs a periodic reception operation using mathematical expression C1 (S2004).

With the configuration, the terminal apparatus 10 can select an appropriate mathematical expression according to information from the base station apparatus 20.

(2) Second Aspect

The controller 210 of the base station apparatus 20 performs a transmission operation using mathematical expression C3 below. The controller 110 of the terminal apparatus 10 performs a reception operation using mathematical expression C3 below. SFN_offset_3 corresponds to the second value. SFN_offset_3 denotes a remainder left when the time length of one cycle of the SFN is divided by the time length of transmission periodicity of the base station apparatus 20.
[Math. 13]

$$[numberOfSlotsPerFrame \times (SFN + SFN\_offset\_3 / 10 \times n) +$$
$$\text{slot number in the frame}] = [(numberOfSlotsPerFrame \times SFN_{\text{start time}} +$$
$$\text{slot}_{\text{start time}}) + N \times periodicity \times numberOfSlotsPerFrame / 10] \text{ modulo}$$
$$(1024 \times numberOfSlotsPerFrame)$$
$$\text{Where SFN\_offset\_3} = (1024 \times 10) \text{ modulo } periodicity$$
$$n = n+1 \text{ whenever SFN} = 0 \qquad\qquad \cdots (C3)$$

With the configuration, the controller 210 of the base station apparatus 20 computes SFN_offset_3, based on "periodicity", which is an SPS parameter. The controller 110 of the terminal apparatus 10 computes SFN_offset_3, based on "periodicity" included in an SPS-config IE of an RRC message. With this configuration, the base station apparatus 20 need not newly notify the terminal apparatus 10 of SFN_offset_3 in addition to SPS parameters. Signaling between the base station apparatus 20 and the terminal apparatus 10 can be reduced.

- Alteration 1

The base station apparatus 20 may transmit, to the terminal apparatus 10, indication information indicating use of mathematical expression C3 (which is also referred to as fifth indication information below, and which may be information to be used for selecting mathematical expression C3). The base station apparatus 20 may transmit an RRC message including the fifth indication information to the terminal apparatus 10. For example, the base station apparatus 20 may configure the fifth indication information for a serving cell(s) and/or a DL-BWP(s) configured with the SPS parameters. In other words, the fifth indication information may be configured for one or each of a plurality of cell groups. The fifth indication information may be configured for one or each of a plurality of DL-BWPs. The fifth indication information may be configured as a new element of an SPS-config IE. In other words, the base station apparatus 20 may transmit an RRC message including the fifth indication information for a certain serving cell and/or a certain DL-BWP to the terminal apparatus 10. In other words, the fifth indication information may be configured for one or each of a plurality of serving cells and/or one or each of a plurality of DL-BWPs (each of a serving cell(s) and/or a DL-BWP(s) configured with the SPS parameters). The fifth indication information may be configured in an IE other than the SPS-config IE. The base station apparatus 20 may transmit, to the terminal apparatus 10, system information (SI, for example, SIB1 and/or an SIB other than SIB1) including the fifth indication information. The base station apparatus 20 may transmit DCI including the fifth indication information to the terminal apparatus 10. In other words, the base station apparatus 20 may transmit the fifth indication information for a certain serving cell and/or a certain DL-BWP, and perform a transmission operation for a PDSCH in the certain serving cell and/or the certain DL-BWP, based on the fifth indication information. The terminal apparatus 10 may receive the fifth indication information for a certain serving cell and/or a certain DL-BWP, and perform a reception operation for a PDSCH in the certain serving cell and/or the certain DL-BWP, based on the fifth indication information.

- Alteration 2

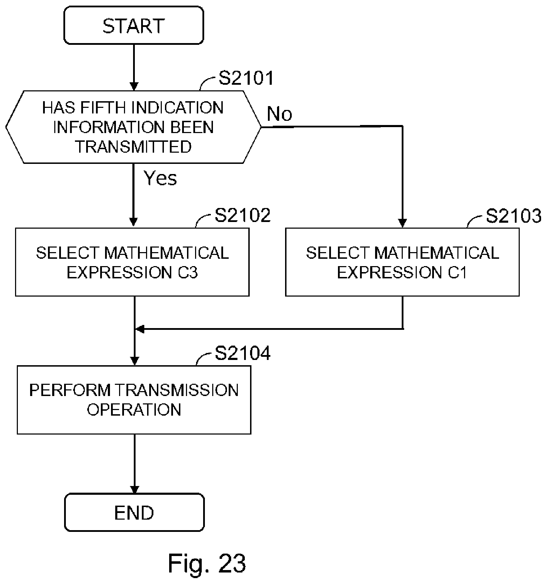

The base station apparatus 20 may be configured to switch mathematical expressions. As illustrated in Fig. 23, in a case where the fifth indication information has been transmitted (Yes in S2101), the controller 210 selects mathematical expression C3 (S2102). The controller 210 performs a periodic transmission operation using mathematical expression C3 (S2104). In contrast, in a case where the fifth indication information is not transmitted (No in S2101), the controller 210 selects mathematical expression C1 (S2103). The controller 210 performs a periodic transmission operation using mathematical expression C1 (S2104).

Note that the controller 210 of the base station apparatus 20 may select one of mathematical expression C1 and mathematical expression C3, based on a value of "periodicity", which is an SPS parameter. In other words, the controller 210 may select one of mathematical expression C1 and mathematical expression C3, based on condition I0 below. Condition I0 is one or a combination of two selected from conditions i01 and i02 below.

i01: The base station apparatus 20 has transmitted, to the terminal apparatus 10, such configuration information for transmission periodicity that the time length of one cycle of the SFN is not an integral multiple of the time length of transmission periodicity of the base station apparatus 20.

i02: The base station apparatus 20 has transmitted, to the terminal apparatus 10, configuration information for transmission periodicity of the base station apparatus 20 indicating a non-integer value.

For example, in a case where condition I0 is met, the controller 210 may select mathematical expression C3. For example, in a case where condition I0 is not met, the controller 210 may select mathematical expression C1.

- Alteration 3

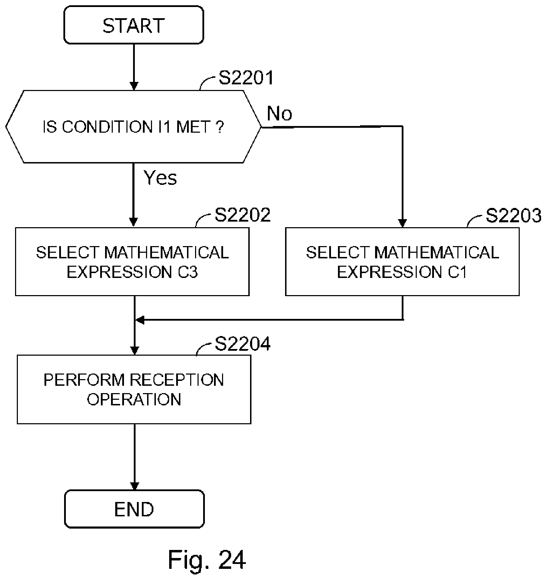

The terminal apparatus 10 may be configured to switch mathematical expressions. As illustrated in Fig. 24, the controller 110 of the terminal apparatus 10 determines whether condition I1 below is met (S2201). Condition I1 corresponds to a use condition for determining whether to use mathematical expression C3. Condition I1 is one or a combination of two or more selected from conditions i11 to i13 below.

i11: The terminal apparatus 10 has received, from the base station apparatus 20, such configuration information for transmission periodicity of the base station apparatus 20 that the time length of one cycle of the SFN is not an integral multiple of the time length of transmission periodicity of the base station apparatus 20.

i12: The terminal apparatus 10 has received, from the base station apparatus 20, configuration information for transmission periodicity of the base station apparatus 20 indicating a time length having a non-integer value.

i13: The terminal apparatus 10 has received the fifth indication information from the base station apparatus 20.

In a case where condition I1 is met (Yes in S2201), the controller 110 selects mathematical expression C3 (S2202). The controller 110 performs a periodic reception operation using mathematical expression C3 (S2204). In contrast, in a case where condition I1 is not met (No in S2201), the controller 110 selects mathematical expression C1 (S2203). The controller 110 performs a periodic reception operation using mathematical expression C1 (S2204).

With the configuration, the terminal apparatus 10 can select an appropriate mathematical expression according to a time length of transmission periodicity of the base station apparatus 20 and/or information from the base station apparatus 20.

(3) Third Aspect

A case of using (applying) an H-SFN will be described. The controller 210 of the base station apparatus 20 performs a transmission operation using mathematical expression C4 below. The controller 110 of the terminal apparatus 10 performs a reception operation using mathematical expression C4 below. "SFN + H-SFN × 1024" corresponds to the above-mentioned addition operation. 1024 in "H-SFN × 1024" corresponds to the number of SFNs included in one cycle of the H-SFN.

[Math. 14]

$$
\begin{aligned}
&[numberOfSlotsPerFrame \times (\text{SFN} + \text{H-SFN} \times 1024) + \\
&\text{slot number in the frame}] = [(numberOfSlotsPerFrame \times \text{SFN}_{start\ time} + \\
&\text{slot}_{start\ time}) + N \times periodicity \times numberOfSlotsPerFrame / 10]\ modulo \\
&(1024 \times numberOfSlotsPerFrame)
\end{aligned}
$$
$$\cdot\ \cdot\ \cdot\ (C4)$$

With the configuration, constant transmission periodicity of the base station apparatus 20 is maintained even in a case where an H-SFN is used. A constant cycle of long DRX is maintained without change even in a case where an SFN is updated from 1023 to 0.

- Alteration 1

The base station apparatus 20 may transmit, to the terminal apparatus 10, indication information indicating use of mathematical expression C4 (which is also referred to as sixth indication information below, and which may be information to be used for applying an H-SFN in SPS or information to be used for selecting mathematical expression C4). For example, the base station apparatus 20 may transmit an RRC message including the sixth indication information to the terminal apparatus 10. For example, the base station apparatus 20 may configure the sixth indication information for a serving cell(s) and/or a DL-BWP(s) configured with the SPS parameters. In other words, the sixth indication information may be configured for one or each of a plurality of cell groups. The sixth indication information may be configured for one or each of DL-BWPs. The sixth indication information may be configured as a new element of an SPS-config IE. In other words, the base station apparatus 20 may transmit an RRC message including the sixth indication information for a certain serving cell and/or a certain DL-BWP to the terminal apparatus 10. In other words, the sixth indication information may be configured for one or each of a plurality of serving cells and/or one or each of a plurality of DL-BWPs (each of a serving cell(s) and/or a DL-BWP(s) configured with the SPS parameters). The sixth indication information may be configured in an IE other than the SPS-config IE. The base station apparatus 20 may transmit, to the terminal apparatus 10, system information (SI, for example, SIB1 and/or an SIB other than SIB1) including the sixth indication information. The base station apparatus 20 may transmit DCI including the sixth indication information to the terminal apparatus 10. In other words, the base station apparatus 20 may transmit the sixth indication information for a certain serving cell and/or a certain DL-BWP, and perform a transmission operation for a PDSCH in the certain serving cell and/or the certain DL-BWP, based on the sixth indication information. The terminal apparatus 10 may receive the sixth indication information for a certain serving cell and/or a certain DL-BWP, and perform a reception operation for a PDSCH in the certain serving cell and/or the certain DL-BWP, based on the sixth indication information.

- Alteration 2

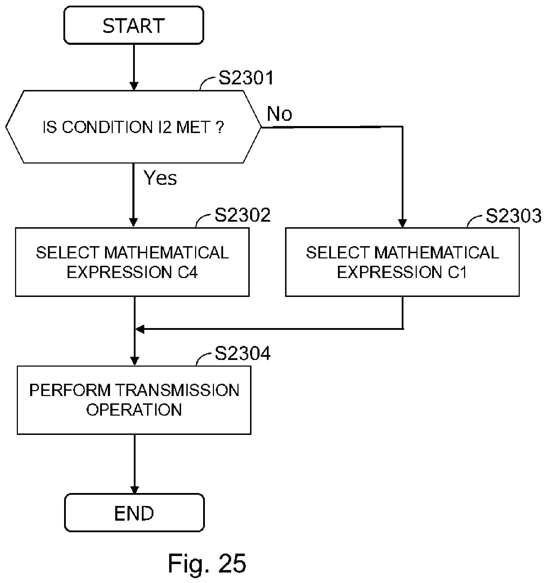

The base station apparatus 20 may be configured to switch mathematical expressions. As illustrated in Fig. 25, the controller 210 of the base station apparatus 20 determines whether condition I2 below is met (S2301). Condition I2 corresponds to a use condition for determining whether to use mathematical expression C4. Condition I2 is one or a combination of two or more selected from conditions i21 to i24 below.

i21: The base station apparatus 20 has transmitted the sixth indication information to the terminal apparatus 10.

i22: The base station apparatus 20 has transmitted, to the terminal apparatus 10, such configuration information for transmission periodicity of the base station apparatus 20 that the time length of one cycle of the SFN is not an integral multiple of the time length of transmission periodicity of the base station apparatus 20.

i23: The base station apparatus 20 has transmitted, to the terminal apparatus 10, configuration information for transmission periodicity of the base station apparatus 20 indicating a time length having a non-integer value.

i24: The base station apparatus 20 has transmitted information related to an H-SFN to the terminal apparatus 10. The information related to an H-SFN may be eDRX-Allowed and/or hyperSFN included in system information (for example, SIB1).

In a case where condition I2 is met (Yes in S2301), the controller 210 selects mathematical expression C4 (S2302). The controller 210 performs a periodic transmission operation using mathematical expression C4 (S2304). In contrast, in a case where condition I2 is not met (No in S2301), the controller 210 selects mathematical expression C1 (S2303). The controller 210 performs a periodic transmission operation using mathematical expression C1 (S2304).

- Alteration 3

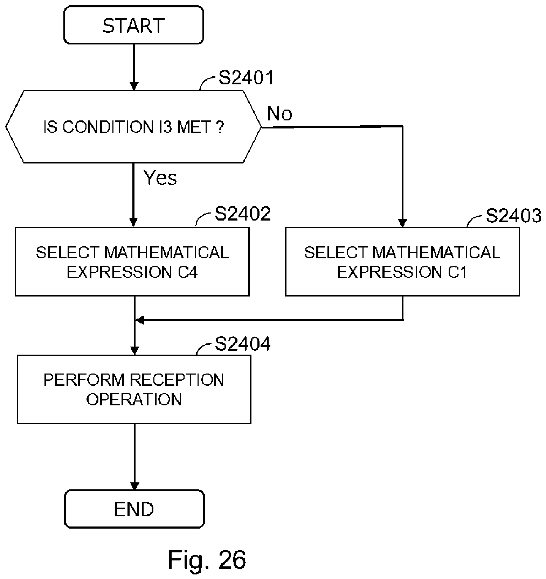

The terminal apparatus 10 may be configured to switch mathematical expressions. As illustrated in Fig. 26, the controller 110 of the terminal apparatus 10 determines whether condition I3 below is met (S2401). Condition I3 corresponds to a use condition for determining whether to use mathematical expression C4. Condition I3 is one or a combination of two or more selected from conditions i31 to i34 below. For example, condition I3 may be a combination of i31 and i34.

i31: The terminal apparatus 10 has received, from the base station apparatus 20, such configuration information for transmission periodicity of the base station apparatus 20 that the time length of one cycle of the SFN is not an integral multiple of the time length of transmission periodicity of the base station apparatus 20.

i32: The terminal apparatus 10 has received, from the base station apparatus 20, configuration information for transmission periodicity of the base station apparatus 20 indicating a time length having a non-integer value.

i33: The terminal apparatus 10 has received the sixth indication information from the base station apparatus 20.

i34: The terminal apparatus 10 has received information related to an H-SFN from the base station apparatus 20. The information related to an H-SFN may be eDRX-Allowed and/or hyperSFN included in system information (for example, SIB1).

In a case where condition I3 is met (Yes in S2401), the controller 110 selects mathematical expression C4 (S2402). The controller 110 performs a periodic reception operation using mathematical expression C4 (S2404). In contrast, in a case where condition I3 is not met (No in S2401), the controller 110 selects mathematical expression C1 (S2403). The controller 110 performs a periodic reception operation using mathematical expression C1 (S2404).

With the configuration, the terminal apparatus 10 can select an appropriate mathematical expression according to a time length of transmission periodicity of the base station apparatus 20 and/or information from the base station apparatus 20.

2.3. Scheduling Request (SR)

Mathematical expression D1 below may be used to determine a transmission occasion of an SR.
[Math. 15]

$$(n_f \cdot N^{frame, \mu}_{slot} + n^{\mu}_{s,f} - SR_{OFFSET}) \bmod SR_{PERIODICITY} = 0$$

$$\cdots (D1)$$

Parameters in mathematical expression D1 are as follows.

- $n_f$: SFN
- $n^{frame,u}_{slot}$: the number of slots per frame
- $SR_{OFFSET}$: slot offset
- $n^{u}_{s,f}$: a slot number in a frame
- SRperiodicity: transmission periodicity of SR

Note that the parameter "SRperiodicity" in an SR corresponds to transmission periodicity of the terminal apparatus 10 and is included in a SchedulingRequestResourceConfig IE as described above. The parameter "SRperiodicity" is configured in units of the number of slots or units of the number of symbols. Mathematical expression D1 may be used in a case where SRperiodicity is larger than one slot. In the following, an example in which the parameter "SRperiodicity" is configured in units of the number of slots. However, the "number of slots" in the following description may be replaced with the "number of symbols".

For example, the base station apparatus 20 may transmit, to the terminal apparatus 10, an RRC message including parameters related to an SR (i.e., SchedulingRequestResourceConfig IE) for a certain serving cell. In other words, the parameters related to an SR (i.e., SchedulingRequestResourceConfig IE) may be configured for one or each of a plurality of serving cells. The base station apparatus 20 may transmit, to the terminal apparatus 10, an RRC message including parameters related to an SR (i.e., SchedulingRequestResourceConfig IE) for a certain UL-BWP. In other words, the parameters related to an SR (i.e., SchedulingRequestResourceConfig IE) may be configured for one or each of a plurality of UL-BWPs. The terminal apparatus 10 may identify the parameters related to an SR (i.e., SchedulingRequestResourceConfig IE) for one or each of a plurality of UL-BWPs.

The terminal apparatus 10 determines a transmission occasion of an SR in an SFN and a slot number satisfying mathematical expression D1. In a case where the number of slots included in one cycle of the SFN is not an integral multiple of the number of slots corresponding to transmission periodicity (i.e., SRperiodicity) of the terminal apparatus 10, the transmission periodicity changes at the time of update of the SFN from 1023 to 0. Hence, an issue that constant transmission periodicity cannot be maintained occurs. Aspects for solving this issue will be described below.

(1) First Aspect

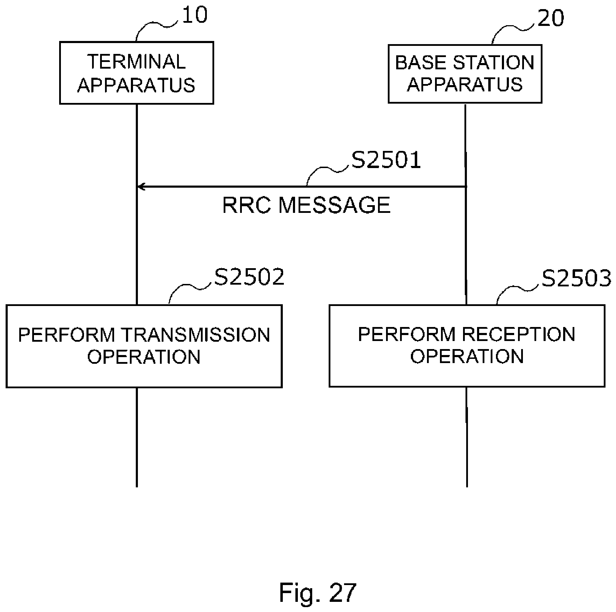

As illustrated in Fig. 27, the controller 210 of the base station apparatus 20 transmits an RRC message including SR parameters to the terminal apparatus 10 via the communicator 220 (S2501). The controller 110 of the terminal apparatus 10 performs a periodic transmission operation of an SR by using mathematical expression D2 below (S2502). The controller 210 of the base station apparatus 20 performs a periodic reception operation of an SR by using mathematical expression D2 below (S2503). n corresponds to the first value. sfnOffset_4 is a value for offsetting $n_f$ (i.e., an SFN) and corresponds to the second value.

[Math. 16]

$$[(n_f + sfnOffset\_4 \times n) \cdot N^{frame, \mu}_{slot} + n^{\mu}_{s,f} - SR_{OFFSET}] \bmod SR_{PERIODICITY} = 0$$

$$\text{Where } n = n+1 \text{ whenever SFN} = 0 \qquad \cdots (D2)$$

With the configuration, the terminal apparatus 10 can transmit an SR in constant periodicity to the base station apparatus 20 even in a case where an SFN is updated from 1023 to 0. Further, the base station apparatus 20 can perform a reception operation in constant periodicity with the transmission operation of the terminal apparatus 10.

The base station apparatus 20 transmits offset information related to sfnOffset_4 to the terminal apparatus 10. The offset information related to sfnOffset_4 is referred to as "fourth offset information". The base station apparatus 20 may transmit an RRC message including the fourth offset information to the terminal apparatus 10. For example, the base station apparatus 20 may configure the fourth offset information for a serving cell(s) and/or a UL-BWP(s) configured with the SR parameters. In other words, the fourth offset information may be configured for one or each of a plurality of serving cells. The fourth offset information may be configured for one or each of a plurality of UL-BWPs. The fourth offset information may be configured as a new element of a SchedulingRequestResourceConfig IE. In other words, the base station apparatus 20 may transmit an RRC message including the fourth offset information for a certain serving cell and/or a certain UL-BWP to the terminal apparatus 10. In other words, the fourth offset information may be configured for one or each of a plurality of serving cells and/or one or each of a plurality of UL-BWPs (each of a serving cell(s) and/or a UL-BWP(s) configured with the SR parameters). The fourth offset information may be configured in an IE other than SchedulingRequestResourceConfig IE. The base station apparatus 20 may transmit, to the terminal apparatus 10, system information (SI, for example, SIB1 and/or an SIB other than SIB1) including the fourth offset information. The base station apparatus 20 may transmit DCI including the fourth offset information to the terminal apparatus 10. In other words, the base station apparatus 20 may transmit the fourth offset information for a certain serving cell and/or a certain UL-BWP, and perform a reception operation for a PUCCH in the certain serving cell and/or the certain UL-BWP, based on the fourth offset information. The terminal apparatus 10 may receive the fourth offset information for a certain serving cell and/or a certain UL-BWP, and perform a transmission operation for a PUCCH in the certain serving cell and/or the certain UL-BWP, based on the fourth offset information.

- Alteration 1

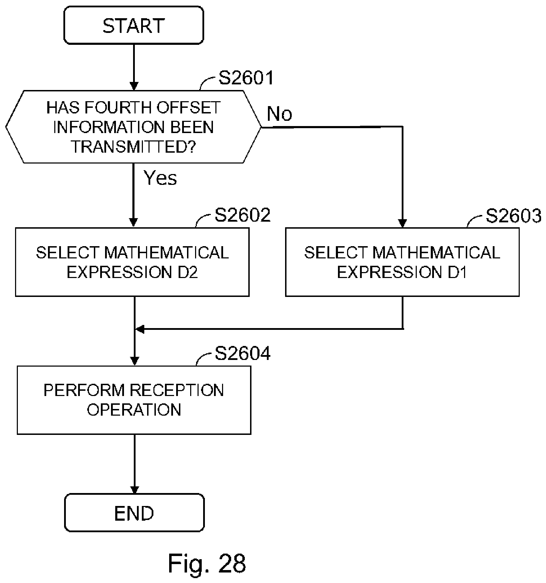

The base station apparatus 20 may be configured to switch mathematical expressions. The controller 210 of the base station apparatus 20 may select a mathematical expression according to transmission of the fourth offset information. As illustrated in Fig. 28, in a case where the fourth offset information has been transmitted (Yes in S2601), the controller 210 selects mathematical expression D2 (S2602). The controller 210 performs a periodic reception operation using mathematical expression D2 (S2604). In contrast, in a case where the fourth offset information is not transmitted (No in S2601), the controller 210 selects mathematical expression D1 (S2603). The controller 210 performs a periodic reception operation using mathematical expression D1 (S2604).

- Alteration 2

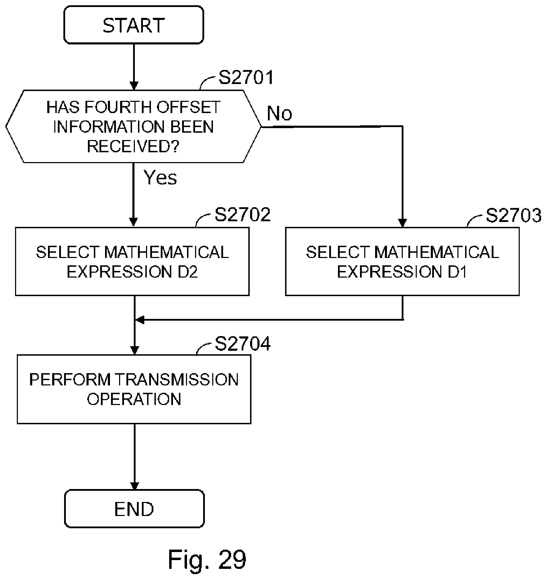

The terminal apparatus 10 may be configured to switch mathematical expressions. As illustrated in Fig. 29, the controller 110 of the terminal apparatus 10 determines whether the fourth offset information has been received from the base station apparatus 20 (S2701). In a case where the fourth offset information is received (Yes in S2701), the controller 110 selects mathematical expression D2 (S2702). The controller 110 performs a periodic transmission operation using mathematical expression D2 (S2704). In contrast, in a case where the fourth offset information is not received (No in S2701), the controller 110 selects mathematical expression D1 (S2703). The controller 110 performs a periodic transmission operation using mathematical expression D1 (S2704).

With the configuration, the terminal apparatus 10 can select an appropriate mathematical expression according to information from the base station apparatus 20.

(2) Second Aspect

The controller 110 of the terminal apparatus 10 performs a periodic transmission operation using mathematical expression D3 below. The controller 210 of the base station apparatus 20 performs a periodic reception operation using mathematical expression D3 below. SFN_offset_4 corresponds to the second value. SFN_offset_4 corresponds to a remainder left when the number of slots included in one cycle of the SFN is divided by the number of slots included in the transmission periodicity of the terminal apparatus 10 (i.e., SRperiodicity).

[Math. 17]

$$(n_f \cdot N^{frame, \mu}_{slot} + SFN\_offset\_4 \times n + n^{\mu}_{s,f} - SR_{OFFSET}) \bmod SR_{PERIODICITY} = 0$$
$$\text{Where } SFN\_offset\_4 = (1024 \times N^{frame, \mu}_{slot}) \bmod SR_{PERIODICITY}$$
$$n = n+1 \text{ whenever } SFN = 0 \qquad \cdots (D3)$$

The controller 210 of the base station apparatus 20 computes SFN_offset_4, based on "SRperiodicity", which is an SR parameter. The controller 110 of the terminal apparatus 10 computes SFN_offset_4, based on periodicityAndOffset included in a SchedulingRequestResourceConfig IE of an RRC message. With this configuration, the base station apparatus 20 need not newly notify the terminal apparatus 10 of SFN_offset_4 in addition to SR parameters. Signaling between the base station apparatus 20 and the terminal apparatus 10 can be reduced.

- Alteration 1

The base station apparatus 20 may transmit, to the terminal apparatus 10, indication information indicating use of mathematical expression D3 (which is also referred to as seventh indication information below, and which may be information to be used for selecting mathematical expression D3). The base station apparatus 20 may transmit an RRC message including the seventh indication information to the terminal apparatus 10. For example, the base station apparatus 20 may configure the seventh indication information for a serving cell(s) and/or a UL-BWP(s) configured with the SR parameters. In other words, the seventh indication information may be configured for one or each of a plurality of cell groups. The seventh indication information may be configured for one or each of a plurality of UL-BWPs. The seventh indication information may be configured as a new element of a SchedulingRequestResourceConfig IE. In other words, the base station apparatus 20 may transmit an RRC message including the seventh indication information for a certain serving cell and/or a certain UL-BWP to the terminal apparatus 10. In other words, the seventh indication information may be configured for one or each of a plurality of serving cells and/or one or each of a plurality of UL-BWPs (each of a serving cell(s) and/or a UL-BWP(s) configured with the SR parameters). The seventh indication information may be configured in an IE other than SchedulingRequestResourceConfig IE. The base station apparatus 20 may transmit, to the terminal apparatus 10, system information (SI, for example, SIB 1 and/or an SIB other than SIB 1) including the seventh indication information. The base station apparatus 20 may transmit DCI including the seventh indication information to the terminal apparatus 10. In other words, the base station apparatus 20 may transmit the seventh indication information for a certain serving cell and/or a certain UL-BWP, and perform a reception operation for a PUCCH in the certain serving cell and/or the certain UL-BWP, based on the seventh indication information. The terminal apparatus 10 may receive the seventh indication information for a certain serving cell and/or a certain UL-BWP, and perform a transmission operation for a PUCCH in the certain serving cell and/or the certain UL-BWP, based on the seventh indication information.

- Alteration 2

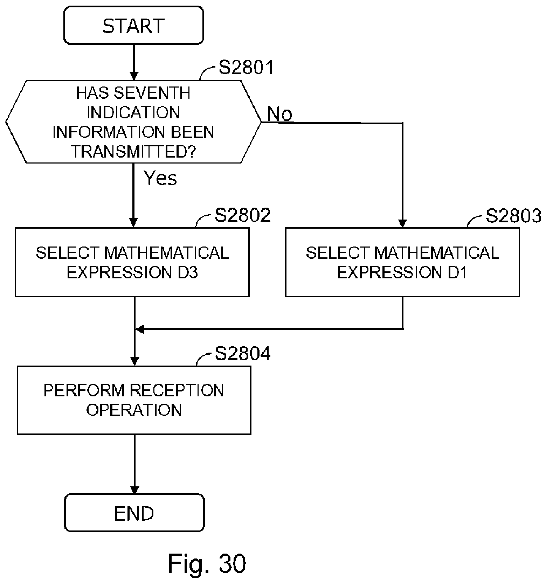

The base station apparatus 20 may be configured to switch mathematical expressions. The controller 210 of the base station apparatus 20 may select a mathematical expression according to transmission of the seventh indication information. As illustrated in Fig. 30, in a case where the seventh indication information has been transmitted (Yes in S2801), the controller 210 selects mathematical expression D3 (S2802). The controller 210 performs a periodic reception operation using mathematical expression D3 (S2804). In contrast, in a case where the seventh indication information is not transmitted (No in S2801), the controller 210 selects mathematical expression D1 (S2803). The controller 210 performs a periodic reception operation using mathematical expression D1 (S2804).

Note that the controller 210 of the base station apparatus 20 may select one of mathematical expression D1 and mathematical expression D3, based on a value of "SRperiodicity", which is an SR parameter. Specifically, the controller 210 may select one of mathematical expression D1 and mathematical expression D3, based on a condition that the number of slots included in one cycle of the SFN is not an integral multiple of the number of slots corresponding to transmission periodicity (i.e., SRperiodicity) of the terminal apparatus 10. For example, in a case where the condition is met, the controller 210 may select mathematical expression D3. For example, in a case where the condition is not met, the controller 210 may select mathematical expression D1. Note that the condition may be a condition that the base station apparatus 20 has transmitted, to the terminal apparatus 10, such configuration information for transmission periodicity (i.e., SRperiodicity) of the terminal apparatus 10 that the number of slots included in one cycle of the SFN is not an integral multiple of the number of slots corresponding to the transmission periodicity of the terminal apparatus 10.

- Alteration 3

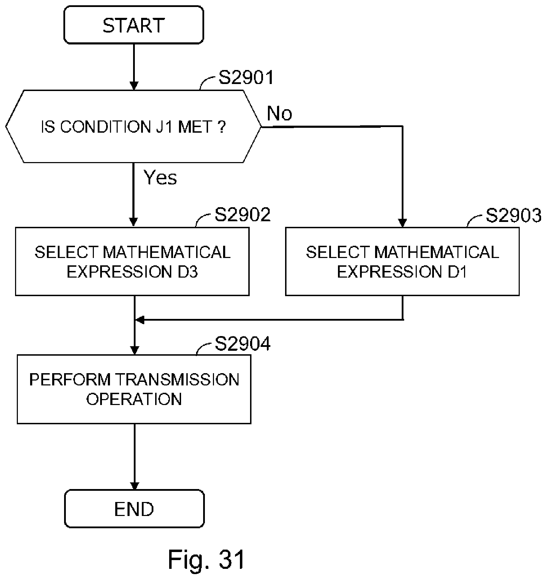

The terminal apparatus 10 may be configured to switch mathematical expressions. As illustrated in Fig. 31, the controller 110 of the terminal apparatus 10 determines whether condition J1 below is met (S2901). Condition J1 corresponds to a use condition for determining whether to use mathematical expression D3. Condition J1 is one or a combination of two of conditions j11 and j12 below.

j11: The terminal apparatus 10 has received such configuration information for transmission periodicity (i.e., SRperiodicity) of the terminal apparatus 10 that the number of slots included in one cycle of the SFN is not an integral multiple of the number of slots corresponding to the transmission periodicity of the terminal apparatus 10.

j12: The terminal apparatus 10 has received the seventh indication information from the base station apparatus 20.

In a case where condition J1 is met (Yes in S2901), the controller 110 selects mathematical expression D3 (S2902). The controller 110 performs a periodic transmission operation using mathematical expression D3 (S2904). In contrast, in a case where condition J1 is not met (No in S2901), the controller 110 selects mathematical expression D1 (S2903). The controller 110 performs a periodic transmission operation using mathematical expression D1 (S2904).

With the configuration, the terminal apparatus 10 can select an appropriate mathematical expression according to transmission periodicity of the terminal apparatus 10 and/or information from the base station apparatus 20.

(3) Third Aspect

An example of a case using (applying) an H-SFN will be described. The controller 110 of the terminal apparatus 10 performs a periodic transmission operation using mathematical expression D4 below. The controller 210 of the base station apparatus 20 performs a periodic reception operation using mathematical expression D4 below.
[Math. 18]

$$[(n_f + \text{H-SFN} \times 1024) \cdot N^{frame,\mu}_{slot} + n^\mu_{s,f} - SR_{OFFSET}] \bmod SR_{PERIODICITY} = 0 \quad \cdots (D4)$$

- Alteration 1

The base station apparatus 20 may transmit, to the terminal apparatus 10, indication information indicating use of mathematical expression D4 (which is also referred to as eighth indication information below, and which may be information to be used for selecting mathematical expression D4). The base station apparatus 20 may transmit an RRC message including the eighth indication information to the terminal apparatus 10. For example, the base station apparatus 20 may configure the eighth indication information for a serving cell(s) and/or a UL-BWP(s) configured with the SR parameters. In other words, the eighth indication information may be configured for one or each of a plurality of cell groups. The eighth indication information may be configured for one or each of a plurality of UL-BWPs. The eighth indication information may be configured as a new element of a SchedulingRequestResourceConfig IE. In other words, the base station apparatus 20 may transmit an RRC message including the eighth indication information for a certain serving cell and/or a certain UL-BWP to the terminal apparatus 10. In other words, the eighth indication information may be configured for one or each of a plurality of serving cells and/or one or each of a plurality of UL-BWPs (each of a serving cell(s) and/or a UL-BWP(s) configured with the SR parameters). The eighth indication information may be configured in an IE other than SchedulingRequestResourceConfig IE. The base station apparatus 20 may transmit, to the terminal apparatus 10, system information (SI, for example, SIB1 and/or an SIB other than SIB1) including the eighth indication information. The base station apparatus 20 may transmit DCI including the eighth indication information to the terminal apparatus 10. In other words, the base station apparatus 20 may transmit the eighth indication information for a certain serving cell and/or a certain UL-BWP, and perform a reception operation for a PUCCH in the certain serving cell and/or the certain UL-BWP, based on the eighth indication information. The terminal apparatus 10 may receive the eighth indication information for a certain serving cell and/or a certain UL-BWP, and perform a transmission operation for a PUCCH in the certain serving cell and/or the certain UL-BWP, based on the eighth indication information.

- Alteration 2

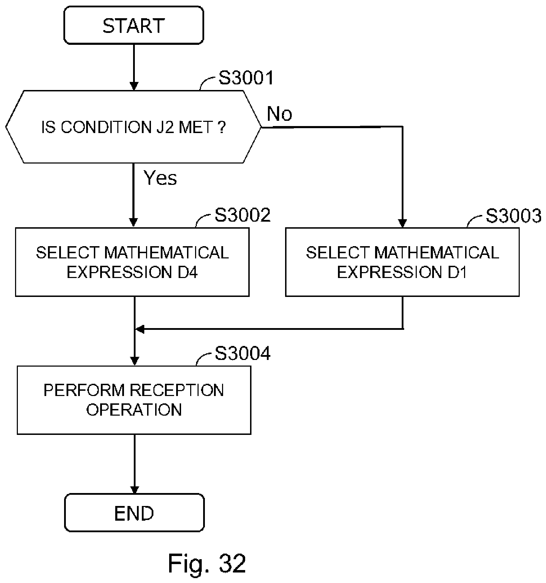

The base station apparatus 20 may be configured to switch mathematical expressions. As illustrated in Fig. 32, the controller 210 of the base station apparatus 20 determines whether condition J2 below is met (S3001). Condition J2 corresponds to a use condition for determining whether to use mathematical expression D4. Condition J2 is one or a combination of two or more selected from conditions j21 to j23 below. For example, condition J2 may be a combination of j21 and j23.
j21: The base station apparatus 20 has transmitted the eighth indication information to the terminal apparatus 10.
j22: The base station apparatus 20 has transmitted, to the terminal apparatus 10, such configuration information for transmission periodicity (i.e., SRperiodicity) of the terminal apparatus 10 that the number of slots included in one cycle of the SFN is not an integral multiple of the number of slots corresponding to the transmission periodicity of the terminal apparatus 10.
j23: The base station apparatus 20 has transmitted information related to an H-SFN to the terminal apparatus 10. The information related to an H-SFN may be eDRX-Allowed and/or hyperSFN included in system information (for example, SIB1).
In a case where condition J2 is met (Yes in S3001), the controller 210 selects mathematical expression D4 (S3002). The controller 210 performs a periodic reception operation using mathematical expression D4 (S3004). In contrast, in a case where condition J2 is not met (No in S3001), the controller 210 selects mathematical expression D1 (S3003). The controller 210 performs a periodic reception operation using mathematical expression D1 (S3004).

- Alteration 3

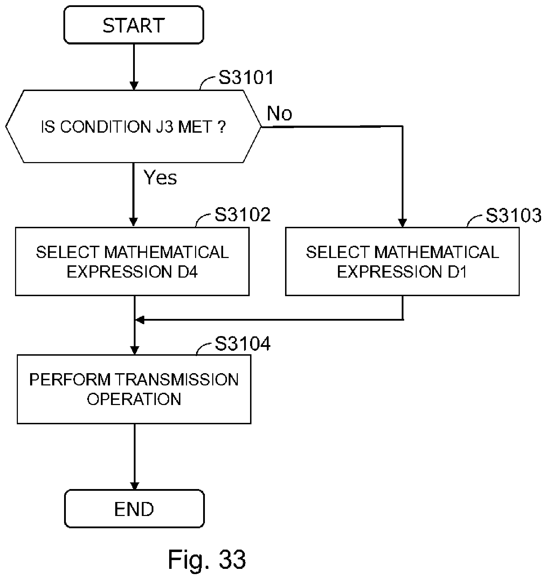

The terminal apparatus 10 may be configured to switch mathematical expressions. As illustrated in Fig. 33, the controller 110 of the terminal apparatus 10 determines whether condition J3 below is met (S3101). Condition J3 corresponds to a use condition for determining whether to use mathematical expression D4. Condition J3 is one or a combination of two or more selected from conditions j31 to j33 below. For example, condition J3 may be a combination of j32 and j33.

j31: The terminal apparatus 10 has received, from the base station apparatus 20, such configuration information for transmission periodicity (i.e., SRperiodicity) of the terminal apparatus 10 that the number of slots included in one cycle of the SFN is not an integral multiple of the number of slots corresponding to the transmission periodicity of the terminal apparatus 10.

j32: The terminal apparatus 10 has received the eighth indication information from the base station apparatus 20.

j33: The terminal apparatus 10 has received information related to an H-SFN from the base station apparatus 20. The information related to an H-SFN may be eDRX-Allowed and/or hyperSFN included in system information (for example, SIB1).

In a case where condition J3 is met (Yes in S3101), the controller 110 selects mathematical expression D4 (S3102). The controller 110 performs a periodic transmission operation using mathematical expression D4 (S3104). In contrast, in a case where condition J3 is not met (No in S3101), the controller 110 selects mathematical expression D1 (S3103). The controller 110 performs a periodic reception operation using mathematical expression D1 (S3104).

With the configuration, the terminal apparatus 10 can select an appropriate mathematical expression according to transmission periodicity of an SR and/or information from the base station apparatus 20.

2.4. CG

Mathematical expression E1 below may be used to determine a transmission occasion in CG Type 1.
[Math. 19]

$$
\begin{aligned}
&[(SFN \times numberOfSlotsPerFrame \times numberOfSymbolsPerSlot) + \\
&(\text{slot number in the frame} \times numberOfSymbolsPerSlot) \\
&+ \text{symbol number in the slot}] \\
&= (timeReferenceSFN \times numberOfSlotsPerFrame \times \\
&\quad numberOfSymbolsPerSlot + timeDomainOffset \times \\
&\quad numberOfSymbolsPerSlot + S + N \times periodicity) \quad modulo \\
&(1024 \times numberOfSlotsPerFrame \times numberOfSymbolsPerSlot) \\
&\hspace{8cm} \cdots (E1)
\end{aligned}
$$

Mathematical expression F1 below may be used to determine a transmission occasion in CG Type 2.
[Math. 20]

$$
\begin{aligned}
&[(SFN \times numberOfSlotsPerFrame \times numberOfSymbolsPerSlot) + \\
&(\text{slot number in the frame} \times numberOfSymbolsPerSlot) + \\
&\text{symbol number in the slot}] \\
&= [(SFN_{\text{start time}} \times numberOfSlotsPerFrame \times numberOfSymbolsPerSlot + \\
&\quad slot_{\text{start time}} \times numberOfSymbolsPerSlot + symbol_{\text{start time}}) + N \times periodicity] \\
&\quad modulo (1024 \times numberOfSlotsPerFrame \times numberOfSymbolsPerSlot) \\
&\hspace{8cm} \cdots (F1)
\end{aligned}
$$

Parameters in mathematical expressions E1 and F1 are as follows.

- numberOfSlotsPerFrame: the number of slots constituting one radio frame
- numberOfSymbolsPerSlot: the number of symbols constituting one slot
- timeReferenceSFN: SFN used to determine an offset in the time domain and included in a ConfiguredGrantConfig IE
- timeDomainOffset: offset related to an SFN specified by timeReferenceSFN and included in a ConfiguredGrantConfig IE
- S: start symbol specified by timeDomainAllocation included in a ConfiguredGrantConfig IE
- $SFN_{start\ time}$: SFN of a first transmission occasion after initialization or reinitialization of uplink allocation
- $Slot_{start\ time}$: slot number of a first transmission occasion after initialization or reinitialization of uplink allocation
- $Symbol_{start\ time}$: symbol number of a first transmission occasion after initialization or reinitialization of uplink allocation
- periodicity: uplink transmission periodicity

Note that the parameter "periodicity" in the CG corresponds to transmission periodicity of the terminal apparatus 10 and is included in a ConfiguredGrantConfig IE as described above. The parameter "periodicity" is configured in units of the number of slots or units of the number of symbols. In the following, an example in which the parameter "periodicity" is configured in units of the number of symbols. However, the "number of symbols" in the following description may be replaced with the "number of slots".

For example, the base station apparatus 20 may transmit, to the terminal apparatus 10, an RRC message including parameters related to CG (i.e., ConfiguredGrantConfig IE) for a certain serving cell. In other words, the parameters related to CG (i.e., ConfiguredGrantConfig IE) may be configured for one or each of a plurality of serving cells. The base station apparatus 20 may transmit an RRC message including parameters related to CG (i.e., ConfiguredGrantConfig IE) for a certain UL-BWP to the terminal apparatus 10. In other words, the parameters related to CG (i.e., ConfiguredGrantConfig IE) may be configured for one or each of a plurality of UL-BWPs. The terminal apparatus 10 may identify the parameters related to CG (i.e., ConfiguredGrantConfig IE) for one or each of a plurality of UL-BWPs.

In CG Type 1, the terminal apparatus 10 allocates, as a resource for an N-th transmission, an SFN, a slot number, and a symbol number satisfying mathematical expression E1. In a case where the number of symbols included in one cycle of the SFN is not an integral multiple of the number of symbols corresponding to transmission periodicity (i.e., the parameter "periodicity") of the terminal apparatus 10, the transmission periodicity changes at the time of update of the SFN from 1023 to 0. Hence, an issue that constant transmission periodicity cannot be maintained occurs. This problem similarly occurs in mathematical expression F1. Aspects for solving this problem will be described below.

### 2.4.1. Type 1

### (1) First Aspect

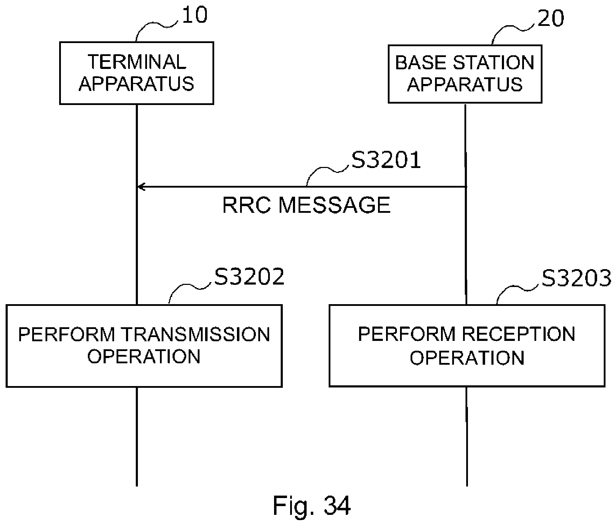

As illustrated in Fig. 34, the controller 210 of the base station apparatus 20 transmits an RRC message including CG parameters to the terminal apparatus 10 via the communicator 220 (S3201). The controller 110 of the terminal apparatus 10 performs a periodic transmission operation of a PUSCH by using mathematical expression E2 below (S3202). For example, the terminal apparatus 10 may store the RRC message including the CG parameters, as a configured uplink grant. Here, the RRC message including the CG parameters to be used for scheduling of the PUSCH is also referred to as an uplink assignment. After an uplink grant is configured for CG Type 1, the terminal apparatus 10 may regard that an N-th uplink grant occurs sequentially (is repeated) in each SFN and/or each slot number satisfying mathematical expression E2. In other words, the terminal apparatus 10 may regard that a stored uplink grant occurs sequentially in each SFN and/or each slot number satisfying mathematical expression E2, to perform transmission of a PUSCH. Similarly, the base station apparatus 20 may regard that an uplink grant stored in the terminal apparatus 10 occurs sequentially (is repeated) in each SFN and/or each slot number satisfying mathematical expression E2, to perform transmission of a PUSCH. In the following, the terminal apparatus 10 regarding that a stored uplink grant occurs sequentially (is repeated), based on a certain mathematical expression, to perform transmission of a PUSCH is also referred to as an operation for transmission of a PUSCH (simply, transmission operation) using the mathematical expression. Here, the operation for transmission of a PUSCH using a mathematical expression also includes the terminal apparatus 10 simply performing transmission of the PUSCH. The base station apparatus 20 regarding that an uplink grant stored in the terminal apparatus 10 occurs sequentially (is repeated), based on a certain mathematical expression, to perform reception of a PUSCH is also referred to as an operation for reception of a PUSCH (simply, reception operation) using the mathematical expression. Here, the operation for reception of a PUSCH using a mathematical expression also includes the base station apparatus 20 simply performing reception of the PUSCH.

The controller 210 of the base station apparatus 20 performs a periodic reception operation using mathematical expression E2 below (S3203). n corresponds to the first value. sfnOffset_5 is a value for offsetting the SFN and corresponds to the second value.

[Math. 21]

$$\{[(SFN + sfnOffset\_5 \times n) \times numberOfSlotsPerFrame \times$$
$$numberOfSymbolsPerSlot] + (slot\ number\ in\ the\ frame \times$$
$$numberOfSymbolsPerSlot) + symbol\ number\ in\ the\ slot\}$$
$$= (timeReferenceSFN \times numberOfSlotsPerFrame \times$$
$$numberOfSymbolsPerSlot + timeDomainOffset \times numberOfSymbolsPerSlot$$
$$+ S + N \times periodicity)\ modulo\ (1024 \times numberOfSlotsPerFrame \times$$
$$numberOfSymbolsPerSlot).$$
$$Where\ n = n+1\ whenever\ SFN = 0 \qquad \cdot \ \cdot \ \cdot (E2)$$

With the configuration, the terminal apparatus 10 can perform a transmission operation in constant periodicity even in a case where an SFN is updated from 1023 to 0. Further, the base station apparatus 20 can perform a reception operation in constant periodicity with the transmission operation of the terminal apparatus 10.

The base station apparatus 20 transmits offset information related to sfnOffset_5 to the terminal apparatus 10. The offset information related to sfnOffset_5 is referred to as "fifth offset information". The base station apparatus 20 may transmit an RRC message including the fifth offset information to the terminal apparatus 10. For example, the base station apparatus 20 may configure the fifth offset information for a serving cell(s) and/or a UL-BWP(s) configured with the CG parameters. In other words, the fifth offset information may be configured for one or each of a plurality of serving cells. The fifth offset information may be configured for one or each of a plurality of UL-BWPs. The fifth offset information may be configured as a new element of a ConfiguredGrantConfig IE. In other words, the base station apparatus 20 may transmit an RRC message including the fifth offset information for a certain serving cell and/or a certain UL-BWP to the terminal apparatus 10. In other words, the fifth offset information may be configured for one or each of a plurality of serving cells and/or one or each of a plurality of UL-BWPs (each of a serving cell(s) and/or a UL-BWP(s) configured with the SR parameters). The fifth offset information may be configured in an IE other than a ConfiguredGrantConfig IE. The base station apparatus 20 may transmit, to the terminal apparatus 10, system information (SI, for example, SIB1 and/or an SIB other than SIB1) including the fifth offset information. The base station apparatus 20 may transmit DCI including the fifth offset information to the terminal apparatus 10. In other words, the base station apparatus 20 may transmit the fifth offset information for a certain serving cell and/or a certain UL-BWP, and perform a reception operation for a PUSCH in the certain serving cell and/or the certain UL-BWP, based on the fifth offset information. The terminal apparatus 10 may receive the fifth offset information for a certain serving cell and/or a certain UL-BWP, and perform a transmission operation for a PUSCH in the certain serving cell and/or the certain UL-BWP, based on the fifth offset information.

- Alteration 1

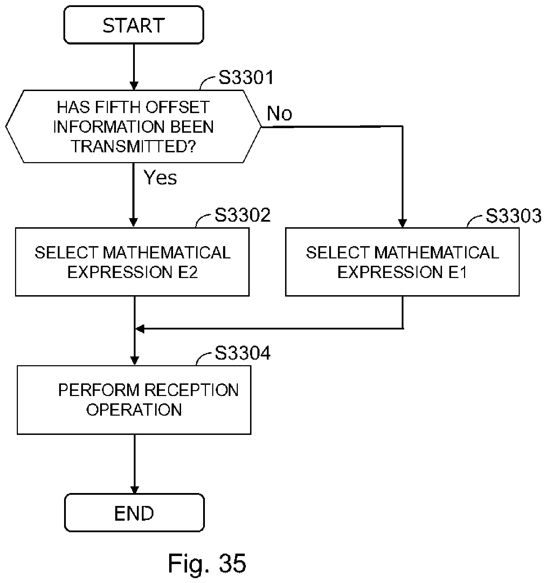

The base station apparatus 20 may be configured to switch mathematical expressions. The controller 210 of the base station apparatus 20 may select a mathematical expression according to transmission of the fifth offset information. As illustrated in Fig. 35, in a case where the fifth offset information has been transmitted (Yes in S3301), the controller 210 selects mathematical expression E2 (S3302). The controller 210 performs a periodic reception operation using mathematical expression E2 (S3304). In contrast, in a case where the fifth offset information is not transmitted (No in S3301), the controller 210 selects mathematical expression E1 (S3303). The controller 210 performs a periodic reception operation using mathematical expression E1 (S3304).

- Alteration 2

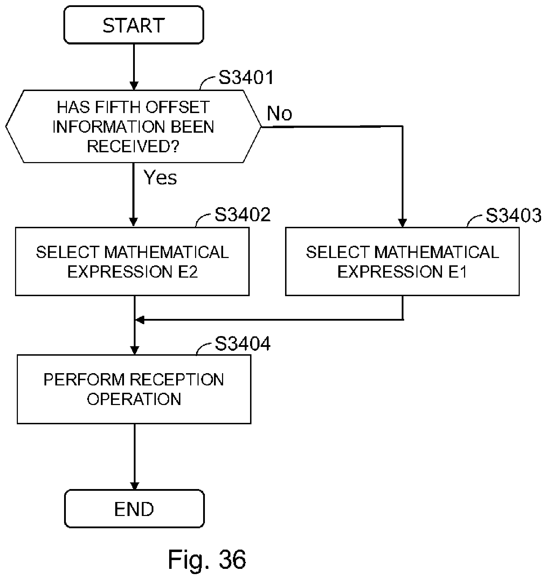

The terminal apparatus 10 may be configured to switch mathematical expressions. As illustrated in Fig. 36, the controller 110 of the terminal apparatus 10 determines whether the fifth offset information has been received from the base station apparatus 20 (S3401). In a case where the fifth offset information has been received (Yes in S3401), the controller 110 selects mathematical expression E2 (S3402). The controller 110 performs a periodic transmission operation using mathematical expression E2 (S3404). In contrast, in a case where the fifth offset information has not been received (No in S3401), the controller 110 selects mathematical expression E1 (S3403). The controller 110 performs a periodic transmission operation using mathematical expression E1 (S3404).

With the configuration, the terminal apparatus 10 can select an appropriate mathematical expression according to information from the base station apparatus 20.

(2) Second Aspect

The controller 110 of the terminal apparatus 10 performs a periodic transmission operation using mathematical expression E3 below. The controller 210 of the base station apparatus 20 performs a periodic reception operation using mathematical expression E3 below. SFN_offset_5 corresponds to the second value. SFN_offset_5 corresponds to a remainder left when the number of symbols included in one cycle of the SFN is divided by the number of symbols included in the transmission periodicity of the terminal apparatus 10.

[Math. 22]

$$
\begin{aligned}
&[(SFN \times numberOfSlotsPerFrame \times numberOfSymbolsPerSlot) + \\
&(slot\ number\ in\ the\ frame \times numberOfSymbolsPerSlot) + \\
&symbol\ number\ in\ the\ slot] + SFN\_offset\_5 \times n \\
&= (timeReferenceSFN \times numberOfSlotsPerFrame \times \\
&numberOfSymbolsPerSlot + timeDomainOffset \times numberOfSymbolsPerSlot \\
&+ S + N \times periodicity)\ modulo\ (1024 \times numberOfSlotsPerFrame \times \\
&numberOfSymbolsPerSlot) \\
&Where\ SFN\_offset\_5 = (1024 \times numberOfSlotsPerFrame \times \\
&numberOfSymbolsPerSlot\ )\ modulo\ periodicity \\
&and\ \ n = n+1\ whenever\ SFN = 0 \qquad\qquad \cdot\ \cdot\ \cdot (E3)
\end{aligned}
$$

The controller 210 of the base station apparatus 20 computes SFN_offset_5, based on "periodicity", which is a CG parameter. The controller 110 of the terminal apparatus 10 computes SFN_offset_5, based on the parameter "periodicity" included in a ConfiguredGrantConfig IE of an RRC message. With this configuration, the base station apparatus 20 need not newly notify the terminal apparatus 10 of SFN_offset_5 in addition to CG parameters. Signaling between the base station apparatus 20 and the terminal apparatus 10 can be reduced.

- Alteration 1

The controller 210 of the base station apparatus 20 may transmit, to the terminal apparatus 10, indication information indicating use of mathematical expression E3 (which is also referred to as ninth indication information below, and which may be information to be used for selecting mathematical expression E3). The controller 210 may transmit an RRC message including the ninth indication information to the terminal apparatus 10. For example, the base station apparatus 20 may configure the ninth indication information for a serving cell(s) and/or a UL-BWP(s) configured with the CG parameters. In other words, the ninth indication information may be configured for one or each of a plurality of cell groups. The ninth indication information may be configured for one or each of a plurality of UL-BWPs. The ninth indication information may be configured as a new element of a ConfiguredGrantConfig IE. In other words, the base station apparatus 20 may transmit an RRC message including the ninth indication information for a certain serving cell and/or a certain UL-BWP to the terminal apparatus 10. In other words, the ninth indication information may be configured for one or each of a plurality of serving cells and/or one or each of a plurality of UL-BWPs (each of a serving cell(s) and/or a UL-BWP(s) configured with the SR parameters). The ninth indication information may be configured in an IE other than a ConfiguredGrantConfig IE. The base station apparatus 20 may transmit, to the terminal apparatus 10, system information (SI, for example, SIB1 and/or an SIB other than SIB1) including the ninth indication information. The base station apparatus 20 may transmit DCI including the ninth indication information to the terminal apparatus 10. In other words, the base station apparatus 20 may transmit the ninth indication information for a certain serving cell and/or a certain UL-BWP, and perform a reception operation for a PUSCH in the certain serving cell and/or the certain UL-BWP, based on the ninth indication information. The terminal apparatus 10 may receive the ninth indication information for a certain serving cell and/or a certain UL-BWP, and perform a transmission operation for a PUSCH in the certain serving cell and/or the certain UL-BWP, based on the ninth indication information.

- Alteration 2

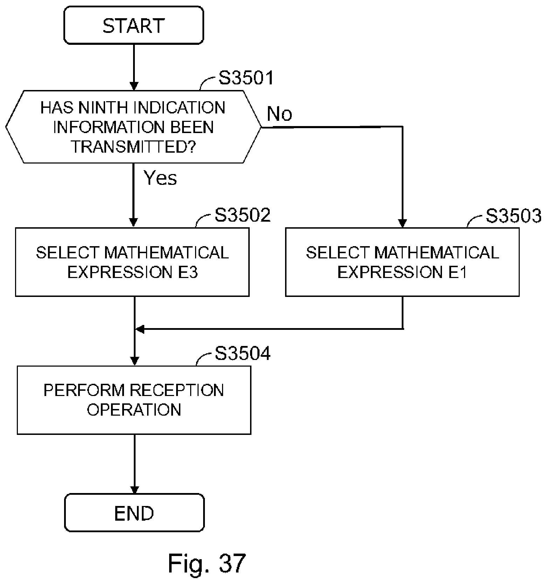

The base station apparatus 20 may be configured to switch mathematical expressions. The controller 210 of the base station apparatus 20 may select a mathematical expression according to transmission of the ninth indication information. As illustrated in Fig. 37, in a case where the ninth indication information has been transmitted (Yes in S3501), the controller 210 selects mathematical expression E3 (S3502). The controller 210 performs a periodic reception operation using mathematical expression E3 (S3504). In contrast, in a case where the ninth indication information is not transmitted (No in S3501), the controller 210 selects mathematical expression E1 (S3503). The controller 210 performs a periodic reception operation using mathematical expression E1 (S3504).

Note that the controller 210 of the base station apparatus 20 may select one of mathematical expression E1 and mathematical expression E3, based on "periodicity", which is a CG parameter. Specifically, the controller 210 may select one of mathematical expression E1 and mathematical expression E3, based on a condition that the number of symbols included in one cycle of the SFN is not an integral multiple of the number of symbols corresponding to transmission periodicity (i.e., periodicity) of the terminal apparatus 10. For example, in a case where the condition is met, the controller 210 may select mathematical expression E3. For example, in a case where the condition is not met, the controller 210 may select mathematical expression E1. Note that the condition may be a condition that the base station apparatus 20 has transmitted, to the terminal apparatus 10, such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

- Alteration 3

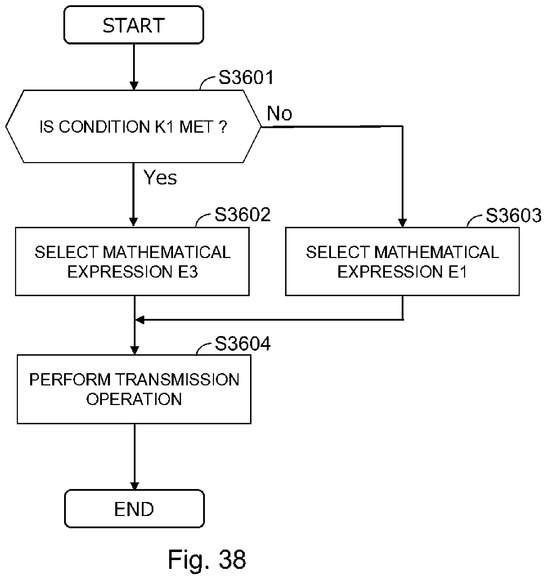

The terminal apparatus 10 may be configured to switch mathematical expressions. As illustrated in Fig. 38, the controller 110 of the terminal apparatus 10 determines whether condition K1 below is met (S3601). Condition K1 corresponds to a use condition for determining whether to use mathematical expression E3. Condition K1 is one or a combination of two of conditions k11 and k12 below.

k11: The terminal apparatus 10 has received such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

k12: The terminal apparatus 10 has received the ninth indication information from the base station apparatus 20.

In a case where condition K1 is met (Yes in S3601), the controller 110 selects mathematical expression E3 (S3602). The controller 110 performs a periodic transmission operation using mathematical expression E3 (S3604). In contrast, in a case where condition K1 is not met (No in S3601), the controller 110 selects mathematical expression E1 (S3603). The controller 110 performs a periodic transmission operation using mathematical expression E1 (S3604).

With the configuration, the terminal apparatus 10 can select an appropriate mathematical expression according to transmission periodicity of the terminal apparatus 10 and/or information from the base station apparatus 20.

(3) Third Aspect

An example of a case using (applying) an H-SFN will be described. The controller 110 of the terminal apparatus 10 performs a periodic transmission operation using mathematical expression E4 below. The controller 210 of the base station apparatus 20 performs a periodic reception operation using mathematical expression E4 below.

[Math. 23]

$$
\begin{aligned}
&\{[(SFN + H\text{-}SFN \times 1024) \times numberOfSlotsPerFrame \times \\
&numberOfSymbolsPerSlot] + (slot\ number\ in\ the\ frame \times \\
&numberOfSymbolsPerSlot) + symbol\ number\ in\ the\ slot\} \\
&= (timeReferenceSFN \times numberOfSlotsPerFrame \times \\
&numberOfSymbolsPerSlot + timeDomainOffset \times numberOfSymbolsPerSlot \\
&+ S + N \times periodicity)\ modulo\ (1024 \times numberOfSlotsPerFrame \times \\
&numberOfSymbolsPerSlot) \qquad\qquad \cdots (E4)
\end{aligned}
$$

- Alteration 1

The base station apparatus 20 may transmit, to the terminal apparatus 10, indication information indicating use of mathematical expression E4 (which is also referred to as tenth indication information below, and which may be information to be used for selecting mathematical expression E4). The base station apparatus 20 may transmit an RRC message including the tenth indication information to the terminal apparatus 10. For example, the base station apparatus 20 may configure the tenth indication information for a serving cell(s) and/or a UL-BWP(s) configured with the CG parameters. In other words, the tenth indication information may be configured for one or each of a plurality of cell groups. The tenth indication information may be configured for one or each of a plurality of UL-BWPs. The tenth indication information may be configured as a new element of a ConfiguredGrantConfig IE. In other words, the base station apparatus 20 may transmit an RRC message including the tenth indication information for a certain serving cell and/or a certain UL-BWP to the terminal apparatus 10. In other words, the tenth indication information may be configured for one or each of a plurality of serving cells and/or one or each of a plurality of UL-BWPs (each of a serving cell(s) and/or a UL-BWP(s) configured with the SR parameters). The tenth indication information may be configured in an IE other than a ConfiguredGrantConfig IE. The base station apparatus 20 may transmit, to the terminal apparatus 10, system information (SI, for example, SIB1 and/or an SIB other than SIB1) including the tenth indication information. The base station apparatus 20 may transmit DCI including the tenth indication information to the terminal apparatus 10. In other words, the base station apparatus 20 may transmit the tenth indication information for a certain serving cell and/or a certain UL-BWP, and perform a reception operation for a PUSCH in the certain serving cell and/or the certain UL-BWP, based on the tenth indication information. The terminal apparatus 10 may receive the tenth indication information for a certain serving cell and/or a certain UL-BWP, and perform a transmission operation for a PUSCH in the certain serving cell and/or the certain UL-BWP, based on the tenth indication information.

- Alteration 2

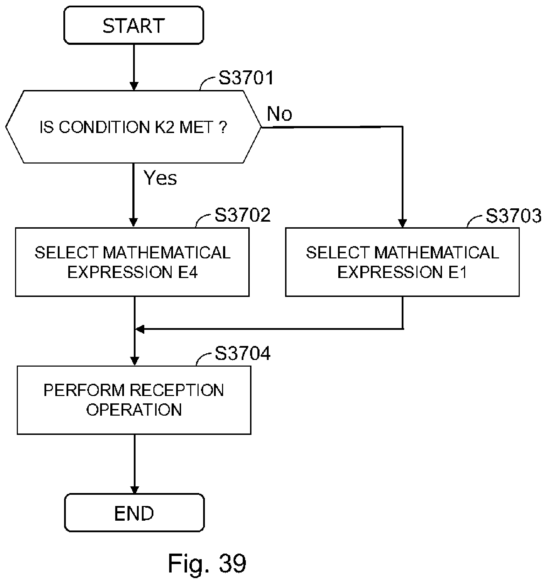

The base station apparatus 20 may be configured to switch mathematical expressions. As illustrated in Fig. 39, the controller 210 of the base station apparatus 20 determines whether condition K2 below is met (S3701). Condition K2 is one or a combination of two or more selected from conditions k21 to k23 below. For example, condition K2 may be a combination of k21 and k23.

k21: The base station apparatus 20 has transmitted the tenth indication information to the terminal apparatus 10.

k22: The base station apparatus 20 has transmitted, to the terminal apparatus 10, such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

k23: The base station apparatus 20 has transmitted information related to an H-SFN to the terminal apparatus 10. The information related to an H-SFN may be eDRX-Allowed and/or hyperSFN included in system information (for example, SIB1).

In a case where condition K2 is met (Yes in S3701), the controller 210 selects mathematical expression E4 (S3702). The controller 210 performs a periodic reception operation using mathematical expression E4 (S3704). In contrast, in a case where condition K2 is not met (No in S3701), the controller 210 selects mathematical expression E1 (S3703). The controller 210 performs a periodic reception operation using mathematical expression E1 (S3704).

- Alteration 3

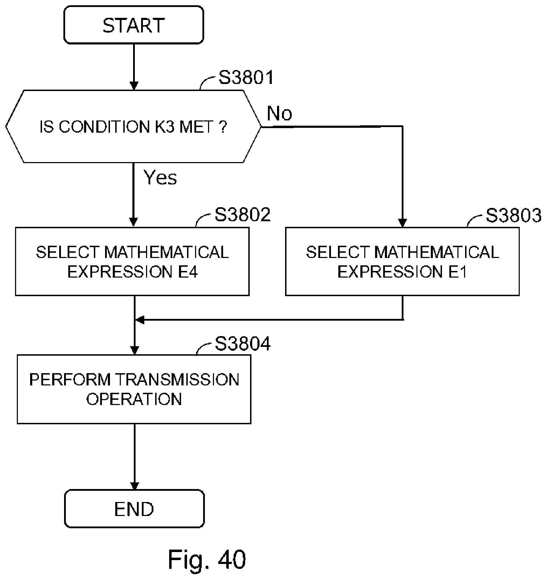

The terminal apparatus 10 may be configured to switch mathematical expressions. As illustrated in Fig. 40, the controller 110 of the terminal apparatus 10 determines whether condition K3 below is met (S3801). Condition K3 corresponds to a use condition for determining whether to use mathematical expression E4. Condition K3 is one or a combination of two or more selected from conditions k31 to k33 below. For example, condition K3 may be a combination of k32 and k33.

k31: The terminal apparatus 10 has received, from the base station apparatus 20, such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

k32: The terminal apparatus 10 has received the tenth indication information from the base station apparatus 20.

k33: The terminal apparatus 10 has received information related to an H-SFN from the base station apparatus 20. The information related to an H-SFN may be eDRX-Allowed and/or hyperSFN included in system information (for example, SIB1).

In a case where condition K3 is met (Yes in S3801), the controller 110 selects mathematical expression E4 (S3802). The controller 110 performs a periodic transmission operation using mathematical expression E4 (S3804). In contrast, in a case where condition K3 is not met (No in S3801), the controller 110 selects mathematical expression E1 (S3803). The controller 110 performs a periodic reception operation using mathematical expression E1 (S3804).

With the configuration, the terminal apparatus 10 can select an appropriate mathematical expression according to transmission periodicity of the terminal apparatus 10 and/or information from the base station apparatus 20.

2.4.2. Type 2

(1) First Aspect

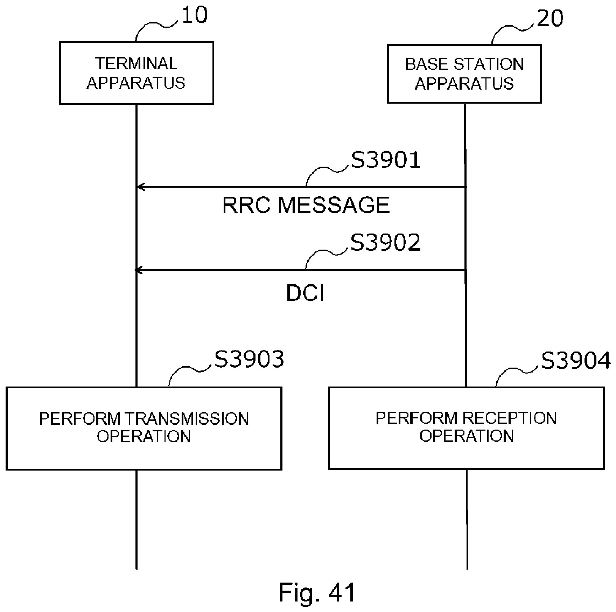

As illustrated in Fig. 41, the controller 210 of the base station apparatus 20 transmits an RRC message including CG parameters to the terminal apparatus 10 via the communicator 220 (S3901). The controller 210 transmits DCI scrambled with a CS-RNTI to the terminal apparatus 10 via the communicator 220 (S3902). This activates a periodic transmission operation using a PUSCH by the terminal apparatus 10.

The controller 110 of the terminal apparatus 100 performs a periodic transmission operation by using mathematical expression F2 below (S3903). For example, in a case where DCI with CRC scrambled with a CS-RNTI being attached (in other words, DCI to be used for scheduling of a PUSCH) indicates activation of CG (in other words, a PDCCH indicates activation of CG), the terminal apparatus 10 may store the DCI as a configured uplink grant. Here, the DCI (DCI format) to be used for scheduling of the PUSCH is also referred to as an uplink grant. After an uplink grant is configured for CG Type 2, the terminal apparatus 10 may regard that an N-th uplink grant occurs sequentially (is repeated) in each SFN and/or each slot number satisfying mathematical expression F2. In other words, the terminal apparatus 10 may regard that a stored uplink grant occurs sequentially in each SFN and/or each slot number satisfying mathematical expression F2, to perform a transmission operation of a PUSCH. Similarly, the base station apparatus 20 may regard that an uplink grant stored in the terminal apparatus 10 occurs sequentially (is repeated) in each SFN and/or each slot number satisfying mathematical expression F2, to perform a reception operation of a PUSCH.

The controller 210 of the base station apparatus 20 performs a periodic reception operation using mathematical expression F2 below (S3904). n corresponds to the first value. sfnOffset_6 is a value for offsetting the SFN and corresponds to the second value.

[Math. 24]

$$\{[(\text{SFN} + sfnOffset\_6 \times \text{n}) \times numberOfSlotsPerFrame \times numberOfSymbolsPerSlot] + (\text{slot number in the frame} \times numberOfSymbolsPerSlot) + \text{symbol number in the slot}\}$$
$$= \quad [(\text{SFN}_{\text{start time}} \times numberOfSlotsPerFrame \times numberOfSymbolsPerSlot + \text{slot}_{\text{start time}} \times numberOfSymbolsPerSlot + \text{symbol}_{\text{start time}}) + \text{N} \times periodicity]$$
$$\text{modulo } (1024 \times numberOfSlotsPerFrame \times numberOfSymbolsPerSlot).$$
$$\text{Where n} = \text{n+1 whenever SFN} = 0 \qquad \cdot \cdot \cdot (\text{F2})$$

With the configuration, the terminal apparatus 10 can perform a transmission operation in constant periodicity even in a case where an SFN is updated from 1023 to 0. Further, the base station apparatus 20 can perform a reception operation in constant periodicity with the transmission operation of the terminal apparatus 10.

The base station apparatus 20 transmits offset information related to sfnOffset_6 to the terminal apparatus 10. The offset information related to sfnOffset_6 is referred to as "sixth offset information". The base station apparatus 20 may transmit an RRC message including the sixth offset information to the terminal apparatus 10. For example, the base station apparatus 20 may configure the sixth offset information for a serving cell(s) and/or a UL-BWP(s) configured with the CG parameters. In other words, the sixth offset information may be configured for one or each of a plurality of serving cells. The sixth offset information may be configured for one or each of a plurality of UL-BWPs. The sixth offset information may be configured as a new element of a ConfiguredGrantConfig IE. In other words, the base station apparatus 20 may transmit an RRC message including the sixth offset information for a certain serving cell and/or a certain UL-BWP to the terminal apparatus 10. In other words, the sixth offset information may be configured for one or each of a plurality of serving cells and/or one or each of a plurality of UL-BWPs (each of a serving cell(s) and/or a UL-BWP(s) configured with the SR parameters). The sixth offset information may be configured in an IE other than a ConfiguredGrantConfig IE. The base station apparatus 20 may transmit, to the terminal apparatus 10, system information (SI, for example, SIB1 and/or an SIB other than SIB 1) including the sixth offset information. The base station apparatus 20 may transmit DCI including the sixth offset information to the terminal apparatus 10. In other words, the base station apparatus 20 may transmit the sixth offset information for a certain serving cell and/or a certain UL-BWP, and perform a reception operation for a PUSCH in the certain serving cell and/or the certain UL-BWP, based on the sixth offset information. The terminal apparatus 10 may receive the sixth offset information for a certain serving cell and/or a certain UL-BWP, and perform a transmission operation for a PUSCH in the certain serving cell and/or the certain UL-BWP, based on the sixth offset information.

- Alteration 1

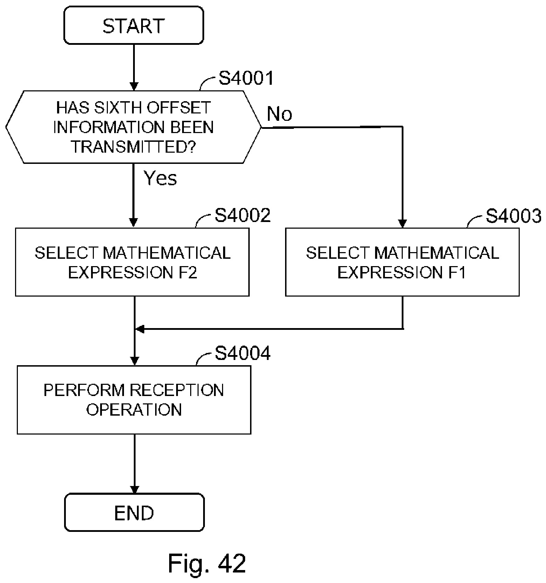

The base station apparatus 20 may be configured to switch mathematical expressions. The controller 210 of the base station apparatus 20 may select a mathematical expression according to transmission of the sixth offset information. As illustrated in Fig. 42, in a case where the sixth offset information has been transmitted (Yes in S4001), the controller 210 selects mathematical expression F2 (S4002). The controller 210 performs a periodic reception operation using mathematical expression F2 (S4004). In contrast, in a case where the sixth offset information is not transmitted (No in S4001), the controller 210 selects mathematical expression F1 (S4003). The controller 210 performs a periodic reception operation using mathematical expression F1 (S4004).

- Alteration 2

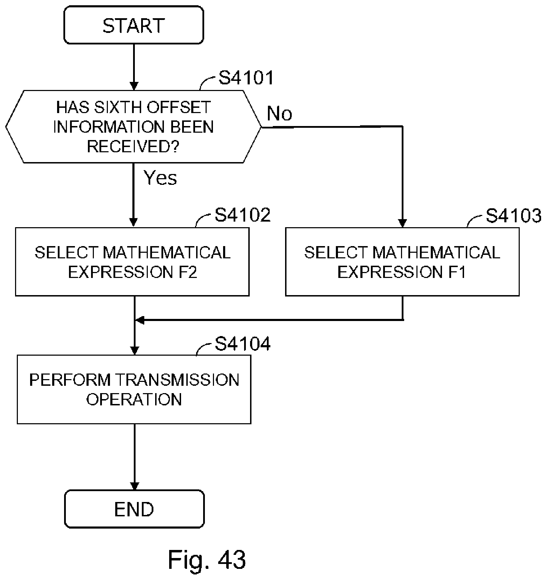

The terminal apparatus 10 may be configured to switch mathematical expressions. As illustrated in Fig. 43, the controller 110 of the terminal apparatus 10 determines whether the sixth offset information has been received from the base station apparatus 20 (S4101). In a case where the sixth offset information has been received (Yes in S4101), the controller 110 selects mathematical expression F2 (S4102). The controller 110 performs a periodic transmission operation using mathematical expression F2 (S4104). In contrast, in a case where the sixth offset information has not been received (No in S4101), the controller 110 selects mathematical expression F1 (S4103). The controller 110 performs a periodic transmission operation using mathematical expression F1 (S4104).

With the configuration, the terminal apparatus 10 can select an appropriate mathematical expression according to information from the base station apparatus 20.

(2) Second Aspect

The controller 110 of the terminal apparatus 10 performs a periodic transmission operation using mathematical expression F3 below. The controller 210 of the base station apparatus 20 performs a periodic reception operation using mathematical expression F3 below. SFN_offset_6 corresponds to the second value. SFN_offset_6 corresponds to a remainder left when the number of symbols included in one cycle of the SFN is divided by the number of symbols included in the transmission periodicity of the terminal apparatus 10.

[Math. 25]

$$
\begin{aligned}
&[(SFN \times numberOfSlotsPerFrame \times numberOfSymbolsPerSlot) + \\
&(\text{slot number in the frame} \times numberOfSymbolsPerSlot) + \\
&\text{symbol number in the slot}] + SFN\_offset\_6 \times n \\
&= [(SFN_{start\ time} \times numberOfSlotsPerFrame \times numberOfSymbolsPerSlot + \\
&\quad slot_{start\ time} \times numberOfSymbolsPerSlot + symbol_{start\ time}) + N \times periodicity] \\
&\quad modulo\ (1024 \times numberOfSlotsPerFrame \times numberOfSymbolsPerSlot) \\
&\text{Where } SFN\_offset\_6 = (1024 \times numberOfSlotsPerFrame \times \\
&numberOfSymbolsPerSlot\ )\ modulo\ periodicity \\
&\text{and } n = n+1 \text{ whenever SFN} = 0 \qquad\qquad \cdots (F3)
\end{aligned}
$$

The controller 210 of the base station apparatus 20 computes SFN_offset_6, based on "periodicity", which is a CG parameter. The controller 110 of the terminal apparatus 10 computes SFN_offset_6, based on "periodicity" included in a ConfiguredGrantConfig IE of an RRC message. With this configuration, the base station apparatus 20 need not newly notify the terminal apparatus 10 of SFN_offset_6 in addition to CG parameters. Signaling between the base station apparatus 20 and the terminal apparatus 10 can be reduced.

- Alteration 1

The base station apparatus 20 may transmit, to the terminal apparatus 10, indication information indicating use of mathematical expression F3 (which is also referred to as eleventh indication information below, and which may be information to be used for selecting mathematical expression F3). The controller 210 may transmit an RRC message including the eleventh indication information to the terminal apparatus 10. For example, the base station apparatus 20 may configure the eleventh indication information for a serving cell(s) and/or a UL-BWP(s) configured with the CG parameters.

In other words, the eleventh indication information may be configured for one or each of a plurality of cell groups. The eleventh indication information may be configured for one or each of a plurality of UL-BWPs. The eleventh indication information may be configured as a new element of a ConfiguredGrantConfig IE. In other words, the base station apparatus 20 may transmit an RRC message including the eleventh indication information for a certain serving cell and/or a certain UL-BWP to the terminal apparatus 10. In other words, the eleventh indication information may be configured for one or each of a plurality of serving cells and/or one or each of a plurality of UL-BWPs (each of a serving cell(s) and/or a UL-BWP(s) configured with the SR parameters). The eleventh indication information may be configured in an IE other than a ConfiguredGrantConfig IE. The base station apparatus 20 may transmit system information (SI, for example, SIB1 and/or an SIB other than SIB1) including the eleventh indication information, to the terminal apparatus 10. The base station apparatus 20 may transmit DCI including the eleventh indication information to the terminal apparatus 10. In other words, the base station apparatus 20 may transmit the eleventh indication information for a certain serving cell and/or a certain UL-BWP, and perform a reception operation for a PUSCH in the certain serving cell and/or the certain UL-BWP, based on the eleventh indication information. The terminal apparatus 10 may receive the eleventh indication information for a certain serving cell and/or a certain UL-BWP, and perform a transmission operation for a PUSCH in the certain serving cell and/or the certain UL-BWP, based on the eleventh indication information.

- Alteration 2

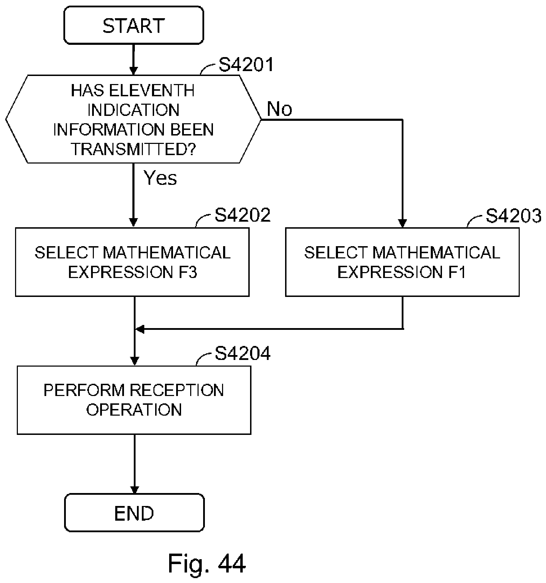

The base station apparatus 20 may be configured to switch mathematical expressions. The controller 210 of the base station apparatus 20 may select a mathematical expression according to transmission of the eleventh indication information. As illustrated in Fig. 44, in a case where the eleventh indication information has been transmitted (Yes in S4201), the controller 210 selects mathematical expression F3 (S4202). The controller 210 performs a periodic reception operation using mathematical expression F3 (S4204). In contrast, in a case where the eleventh indication information is not transmitted (No in S4201), the controller 210 selects mathematical expression F1 (S4203). The controller 210 performs a periodic reception operation using mathematical expression F1 (S4204).

Note that the controller 210 of the base station apparatus 20 may select one of mathematical expression F1 and mathematical expression F3, based on "periodicity", which is a CG parameter. Specifically, the controller 210 may select one of mathematical expression F1 and mathematical expression F3, based on a condition that the number of symbols included in one cycle of the SFN is not an integral multiple of the number of symbols corresponding to transmission periodicity (i.e., periodicity) of the terminal apparatus 10. For example, in a case where the condition is met, the controller 210 may select mathematical expression F3. For example, in a case where the condition is not met, the controller 210 may select mathematical expression F1. Note that the condition may be a condition that the base station apparatus 20 has transmitted, to the terminal apparatus 10, such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

- Alteration 3

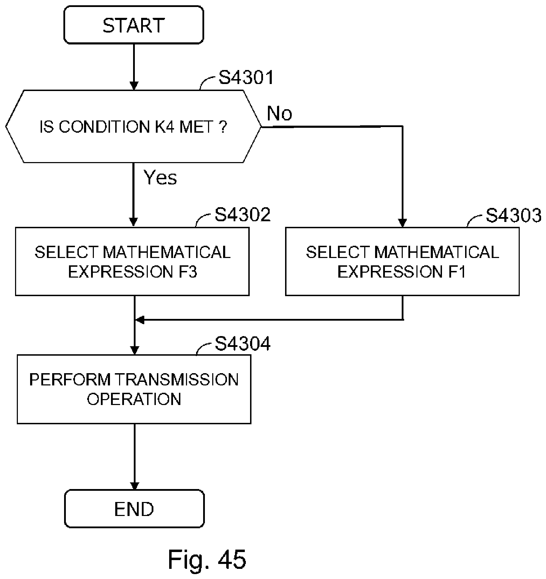

The terminal apparatus 10 may be configured to switch mathematical expressions. As illustrated in Fig. 45, the controller 110 of the terminal apparatus 10 determines whether condition K4 below is met (S4301). Condition K4 corresponds to a use condition for determining whether to use mathematical expression F3. Condition K4 is one or a combination of two of conditions k41 and k42 below.

k41: The terminal apparatus 10 has received such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

k42: The terminal apparatus 10 has received the eleventh indication information from the base station apparatus 20.

In a case where condition K4 is met (Yes in S4301), the controller 110 selects mathematical expression F3 (S4302). The controller 110 performs a periodic transmission operation using mathematical expression F3 (S4304). In contrast, in a case where condition K4 is not met (No in S4301), the controller 110 selects mathematical expression F1 (S4303). The controller 110 performs a periodic transmission operation using mathematical expression F1 (S4304).

With the configuration, the terminal apparatus 10 can select an appropriate mathematical expression according to transmission periodicity of the terminal apparatus 10 and/or information from the base station apparatus 20.

(3) Third Aspect

An example of a case using (applying) an H-SFN will be described. The controller 110 of the terminal apparatus 10 performs a periodic transmission operation using mathematical expression F4 below. The controller 210 of the base station apparatus 20 performs a periodic reception operation using mathematical expression F4 below.
[Math. 26]

$$\{[(\text{SFN} + \text{H-SFN} \times 1024) \times numberOfSlotsPerFrame \times numberOfSymbolsPerSlot] + (\text{slot number in the frame} \times numberOfSymbolsPerSlot) + \text{symbol number in the slot}\}$$
$$= [(\text{SFN}_{start\ time} \times numberOfSlotsPerFrame \times numberOfSymbolsPerSlot + \text{slot}_{start\ time} \times numberOfSymbolsPerSlot + \text{symbol}_{start\ time}) + N \times periodicity]$$
$$\text{modulo} (1024 \times numberOfSlotsPerFrame \times numberOfSymbolsPerSlot)$$
$$\cdots (F4)$$

- Alteration 1

The base station apparatus 20 may transmit, to the terminal apparatus 10, indication information indicating use of mathematical expression F4 (which is also referred to as twelfth indication information below, and which may be information to be used for selecting mathematical expression F4). The base station apparatus 20 may transmit an RRC message including the twelfth indication information to the terminal apparatus 10. For example, the base station apparatus 20 may configure the twelfth indication information for a serving cell(s) and/or a UL-BWP(s) configured with the CG parameters. In other words, the twelfth indication information may be configured for one or each of a plurality of cell groups. The twelfth indication information may be configured for one or each of a plurality of UL-BWPs. The twelfth indication information may be configured as a new element of a ConfiguredGrantConfig IE. In other words, the base station apparatus 20 may transmit an RRC message including the twelfth indication information for a certain serving cell and/or a certain UL-BWP to the terminal apparatus 10. In other words, the twelfth indication information may be configured for one or each of a plurality of serving cells and/or one or each of a plurality of UL-BWPs (each of a serving cell(s) and/or a UL-BWP(s) configured with the SR parameters). The twelfth indication information may be configured in an IE other than a ConfiguredGrantConfig IE. The base station apparatus 20 may transmit system information (SI, for example, SIB 1 and/or an SIB other than SIB 1) including the twelfth indication information, to the terminal apparatus 10. The base station apparatus 20 may transmit DCI including the twelfth indication information to the terminal apparatus 10. In other words, the base station apparatus 20 may transmit the twelfth indication information for a certain serving cell and/or a certain UL-BWP, and perform a reception operation for a PUSCH in the certain serving cell and/or the certain UL-BWP, based on the twelfth indication information. The terminal apparatus 10 may receive the twelfth indication information for a certain serving cell and/or a certain UL-BWP, and perform a transmission operation for a PUSCH in the certain serving cell and/or the certain UL-BWP, based on the twelfth indication information.

- Alteration 2

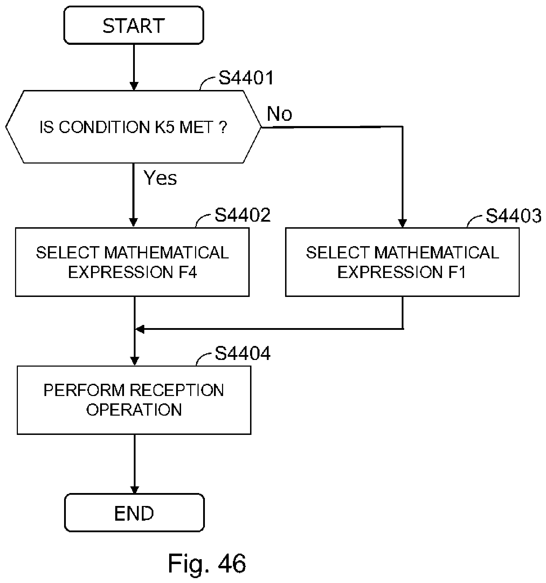

The base station apparatus 20 may be configured to switch mathematical expressions. As illustrated in Fig. 46, the controller 210 of the base station apparatus 20 determines whether condition K5 below is met (S4401). Condition K5 corresponds to a use condition for determining whether to use mathematical expression F4. Condition K5 is one or a combination of two or more selected from conditions k51 to k53 below. For example, condition K5 may be a combination of k51 and k53.

k51: The base station apparatus 20 has transmitted the twelfth indication information to the terminal apparatus 10.

k52: The base station apparatus 20 has transmitted, to the terminal apparatus 10, such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

k53: The base station apparatus 20 has transmitted information related to an H-SFN to the terminal apparatus 10. The information related to an H-SFN may be eDRX-Allowed and/or hyperSFN included in system information (for example, SIB1).

In a case where condition K5 is met (Yes in S4401), the controller 210 selects mathematical expression F4 (S4402). The controller 210 performs a periodic reception operation using mathematical expression F4 (S4404). In contrast, in a case where condition K5 is not met (No in S4401), the controller 210 selects mathematical expression F1 (S4403). The controller 210 performs a periodic reception operation using mathematical expression F1 (S4404).

- Alteration 3

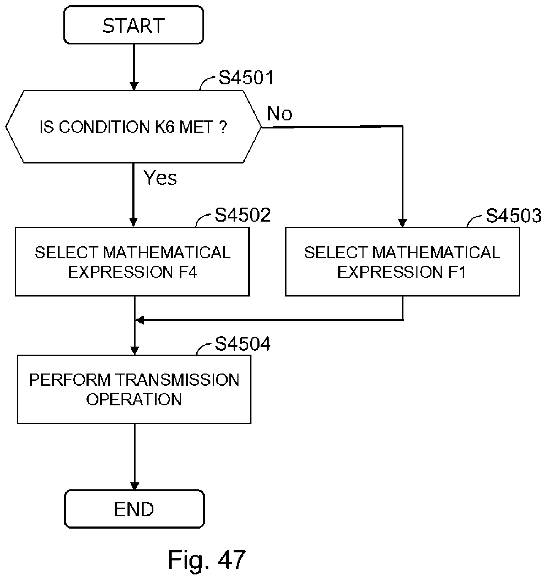

The terminal apparatus 10 may be configured to switch mathematical expressions. As illustrated in Fig. 47, the controller 110 of the terminal apparatus 10 determines whether condition K6 below is met (S4501). Condition K6 corresponds to a use condition for determining whether to use mathematical expression F4. Condition K6 is one or a combination of two or more selected from conditions k61 to k63 below. For example, condition K6 may be a combination of k62 and k63.

k61: The terminal apparatus 10 has received, from the base station apparatus 20, such configuration information for transmission periodicity (i.e., the parameter "periodicity") of the terminal apparatus 10 that the number of symbols included in one cycle of the SFN is not an integral multiple of the number of symbols corresponding to the transmission periodicity of the terminal apparatus 10.

k62: The terminal apparatus 10 has received the twelfth indication information from the base station apparatus 20.

k63: The terminal apparatus 10 has received information related to an H-SFN from the base station apparatus 20. The information related to an H-SFN may be eDRX-Allowed and/or hyperSFN included in system information (for example, SIB 1).

In a case where condition K6 is met (Yes in S4501), the controller 110 selects mathematical expression F4 (S4502). The controller 110 performs a periodic transmission operation using mathematical expression F4 (S4504). In contrast, in a case where condition K6 is not met (No in S4501), the controller 110 selects mathematical expression F1 (S4503). The controller 110 performs a periodic transmission operation using mathematical expression F1 (S4504).

With the configuration, the terminal apparatus 10 can select an appropriate mathematical expression according to periodicity of the terminal apparatus 10 and/or information from the base station apparatus 20.

3. Alterations

The present disclosure has been described in conformity to the embodiments, but it is to be understood that the present disclosure is not limited to the embodiments and configurations. The present disclosure also includes various alterations and modifications within an equivalent range. Other combinations each including one or more elements included in the embodiments are also within the scope and the spirit range of the present disclosure.

The "indication information indicating use of a mathematical expression" may be interpreted as "indication information indicating whether or not to use the mathematical expression" throughout the Specification of the present application. The "indication information indicating whether or not to use a mathematical expression" is a concept subsuming "information indicating use of the mathematical expression" and "indicating no use of the mathematical expression". The terminal apparatus 10 and the base station apparatus 20 may perform each kind of operation described above, according to indication information indicating whether or not to use a mathematical expression.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted and received in the embodiments may be transmitted and received in the same or a different message or the same or a different element as or from that already described in the technical specifications, or may be transmitted and received in a new message or element to be defined. The information transmitted and received in the embodiments may be transmitted/received by using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, in a configuration in which one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

4. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A terminal apparatus (10) including:

a controller (110); and
a communicator (120) configured to be controlled by the controller to perform radio communication, wherein
the controller is configured to perform a periodic operation for transmission or reception via the communicator by using
a mathematical expression including a correction value for a system frame number (SFN).

(Supplementary Note 2)

The terminal apparatus according to supplementary note 1, wherein
the correction value is a value not to be zero even in a case where the SFN is updated from a predetermined largest value to
a predetermined initial value.

(Supplementary Note 3)

The terminal apparatus according to supplementary note 2, wherein
the correction value is a value to increase with an increase in the number of times the SFN is updated from the largest value
to the initial value.

(Supplementary Note 4)

The terminal apparatus according to supplementary note 3, wherein
the controller is further configured to compute the correction value by using a first value corresponding to the number of
times and a second value for offsetting the SFN.

(Supplementary Note 5)

The terminal apparatus according to supplementary note 4, wherein
the controller is further configured to perform the periodic operation by using the mathematical expression, in a case where
the information related to the second value has been received from a base station apparatus via the communicator.

(Supplementary Note 6)

The terminal apparatus according to supplementary note 4, wherein

periodicity of the periodic operation is configured in unit of time, and
the controller is configured to compute, as the second value, a remainder left when a time length of one cycle of the
SFN is divided by a time length of the periodicity of the periodic operation.

(Supplementary Note 7)

The terminal apparatus according to supplementary note 4, wherein

periodicity of the periodic operation is configured in unit of the number of slots, and
the controller is further configured to compute, as the second value, a remainder left when the number of slots included
in one cycle of the SFN is divided by the number of slots included in the periodicity of the periodic operation.

(Supplementary Note 8)

The terminal apparatus according to supplementary note 4, wherein

periodicity of the periodic operation is configured in unit of the number of symbols, and
the controller is further configured to compute, as the second value, a remainder left when the number of symbols
included in one cycle of the SFN is divided by the number of symbols included in the periodicity of the periodic operation.

(Supplementary Note 9)

The terminal apparatus according to any one of supplementary notes 1 to 4, wherein

periodicity of the periodic operation is configured in unit of time,
the controller is further configured to perform the periodic operation by using the mathematical expression, in a case where a use condition related to the mathematical expression is met,
the use condition is one or a combination of two or more selected from
a condition that the time length of one cycle of the SFN is not an integral multiple of the time length of the periodicity of the periodic operation,
a condition that the periodicity of the periodic operation is a non-integer value, and
a condition that the controller has received information indicating use of the mathematical expression, from a base station apparatus.

(Supplementary Note 10)

The terminal apparatus according to any one of supplementary notes 1 to 4, wherein

periodicity of the periodic operation is configured in unit of the number of slots,
the controller is further configured to perform the periodic operation by using the mathematical expression, in a case where a use condition related to the mathematical expression is met,
the use condition is one or a combination of two of
a condition that the number of slots included in one cycle of the SFN is not an integral multiple of the number of slots included in the periodicity of the periodic operation, and
a condition that the controller has received information indicating use of the mathematical expression, from a base station apparatus.

(Supplementary Note 11)

The terminal apparatus according to any one of supplementary notes 1 to 4, wherein

periodicity of the periodic operation is configured in unit of the number of symbols,
the controller is further configured to perform the periodic operation by using the mathematical expression, in a case where a use condition related to the mathematical expression is met,
the use condition is one or a combination of two of
a condition that the number of symbols included in one cycle of the SFN is not an integral multiple of the number of symbols included in the periodicity of the periodic operation, and
a condition that the controller has received information indicating use of the mathematical expression, from a base station apparatus.

(Supplementary Note 12)

The terminal apparatus according to any one of supplementary notes 9 to 11, wherein

the mathematical expression is a first mathematical expression,
the controller is further configured to perform the periodic operation by using a second mathematical expression not including the correction value, and
the controller is configured to perform the periodic operation by using the second mathematical expression, in a case where the use condition is not met.

(Supplementary Note 13)

The terminal apparatus according to supplementary note 2 or 3, wherein
the controller is further configured to compute the correction value by using a hyper SFN (H-SFN) and a value corresponding to the number of the SFNs included in one cycle of the H-SFN.

(Supplementary Note 14)

The terminal apparatus according to supplementary note 13, wherein

periodicity of the periodic operation is configured in unit of time,
the controller is further configured to perform the periodic operation by using the mathematical expression, in a case where a use condition related to the mathematical expression is met,
the use condition is one or a combination of two or more selected from
a condition that the time length of one cycle of the SFN is not an integral multiple of the time length of the periodicity of the periodic operation,
a condition that the periodicity of the periodic operation is a non-integer value,
a condition that the controller has received information indicating use of the mathematical expression, from a base station apparatus, and
a condition that the controller has received information related to the H-SFN, from the base station apparatus.

(Supplementary Note 15)

The terminal apparatus according to supplementary note 13, wherein

periodicity of the periodic operation is configured in unit of the number of slots,
the controller is further configured to perform the periodic operation by using the mathematical expression, in a case where a use condition related to the mathematical expression is met,
the use condition is one or a combination of two or more selected from
a condition that the number of slots included in one cycle of the SFN is not an integral multiple of the number of slots included in the periodicity of the periodic operation,
a condition that the controller has received information indicating use of the mathematical expression, from a base station apparatus, and
a condition that the controller has received information related to the H-SFN, from the base station apparatus.

(Supplementary Note 16)

The terminal apparatus according to supplementary note 13, wherein

periodicity of the periodic operation is configured in unit of the number of symbols,
the controller is further configured to perform the periodic operation by using the mathematical expression, in a case where a use condition related to the mathematical expression is met,
the use condition is one or a combination of two or more selected from
a condition that the number of symbols included in one cycle of the SFN is not an integral multiple of the number of symbols included in the periodicity of the periodic operation,
a condition that the controller has received information indicating use of the mathematical expression, from a base station apparatus, and
a condition that the controller has received information related to the H-SFN, from the base station apparatus.

(Supplementary Note 17)

A method for a terminal apparatus (10), the method including:

determining whether a mathematical expression including a correction value for a system frame number (SFN) is met; and
performing a periodic operation for transmission or reception in a case where the mathematical expression is met.

(Supplementary Note 18)

A program causing a terminal apparatus (10) to execute:

determining whether a mathematical expression including a correction value for a system frame number (SFN) is met; and
performing a periodic operation for transmission or reception in a case where the mathematical expression is met.

(Supplementary Note 19)

A non-transitory tangible storage medium having recorded thereon a program causing a terminal apparatus (10) to execute:

determining whether a mathematical expression including a correction value for a system frame number (SFN) is met; and
performing a periodic operation for transmission or reception in a case where the mathematical expression is met.

(Supplementary Note 20)

A base station apparatus (20) including:

a controller (210); and
a communicator (220) configured to be controlled by the controller to perform radio communication, wherein
the controller is configured to perform a periodic operation for transmission or reception via the communicator by using a mathematical expression including a correction value for a system frame number (SFN).

(Supplementary Note 21)

The base station apparatus according to supplementary note 20, wherein
the correction value is a value not to be zero even in a case where the SFN is updated from a predetermined largest value to a predetermined initial value.

(Supplementary Note 22)

The base station apparatus according to supplementary note 21, wherein
the correction value is a value to increase with an increase in the number of times the SFN is updated from the largest value to the initial value.

(Supplementary Note 23)

The base station apparatus according to supplementary note 22, wherein
the controller is further configured to compute the correction value by using a first value corresponding to the number of times and a second value for offsetting the SFN.

(Supplementary Note 24)

The base station apparatus according to supplementary note 23, wherein

periodicity of the periodic operation is configured in unit of time, and
the controller is configured to compute, as the second value, a remainder left when a time length of one cycle of the SFN is divided by a time length of the periodicity of the periodic operation.

(Supplementary Note 25)

The base station apparatus according to supplementary note 23, wherein

periodicity of the periodic operation is configured in unit of the number of slots, and
the controller is further configured to compute, as the second value, a remainder left when the number of slots included in one cycle of the SFN is divided by the number of slots included in the periodicity of the periodic operation.

(Supplementary Note 26)

The base station apparatus according to supplementary note 23, wherein

periodicity of the periodic operation is configured in unit of the number of symbols, and
the controller is further configured to compute, as the second value, a remainder left when the number of symbols included in one cycle of the SFN is divided by the number of symbols included in the periodicity of the periodic operation.

(Supplementary Note 27)

The base station apparatus according to supplementary note 23, wherein the controller is further configured to perform the periodic operation by using the mathematical expression, in a case where the information related to the second value has been transmitted to a terminal apparatus via the communicator.

(Supplementary Note 28)

The base station apparatus according to any one of supplementary notes 20 to 23, wherein the controller is further configured to perform the periodic operation by using the mathematical expression, in a case where the information indicating use of the mathematical expression has been transmitted to a terminal apparatus via the communicator.

(Supplementary Note 29)

The base station apparatus according to any one of supplementary note 21 or 22, wherein the controller is further configured to compute the correction value by using a hyper SFN (H-SFN) and a value equivalent to the number of the SFNs included in one cycle of the H-SFN.

(Supplementary Note 30)

The base station apparatus according to supplementary note 29, wherein

the controller is further configured to perform the periodic operation by using the mathematical expression, in a case where a use condition related to the mathematical expression is met,
the use condition is one or a combination of two of
a condition that the controller has transmitted information indicating use of the mathematical expression to a terminal apparatus, and
a condition that the controller has transmitted information related to the H-SFN to the terminal apparatus.

**Claims**

1. A terminal apparatus (10) comprising:

   a controller (110); and
   a communicator (120) configured to be controlled by the controller to perform radio communication, wherein
   the controller is configured to perform a periodic operation for transmission or reception via the communicator by using a mathematical expression including a correction value for a system frame number (SFN).

2. The terminal apparatus according to claim 1, wherein
   the correction value is a value not to be zero even in a case where the SFN is updated from a predetermined largest value to a predetermined initial value.

3. The terminal apparatus according to claim 2, wherein
   the correction value is a value to increase with an increase in the number of times the SFN is updated from the largest value to the initial value.

4. The terminal apparatus according to claim 3, wherein
   the controller is further configured to compute the correction value by using a first value corresponding to the number of times and a second value for offsetting the SFN.

5. The terminal apparatus according to claim 4, wherein
   the controller is further configured to perform the periodic operation by using the mathematical expression, in a case where the information related to the second value has been received from a base station apparatus via the communicator.

6. The terminal apparatus according to claim 4, wherein

   periodicity of the periodic operation is configured in unit of time, and
   the controller is configured to compute, as the second value, a remainder left when a time length of one cycle of the SFN is divided by a time length of the periodicity of the periodic operation.

7. The terminal apparatus according to claim 4, wherein

   periodicity of the periodic operation is configured in unit of the number of slots, and
   the controller is further configured to compute, as the second value, a remainder left when the number of slots included in one cycle of the SFN is divided by the number of slots included in the periodicity of the periodic operation.

8. The terminal apparatus according to claim 4, wherein

   periodicity of the periodic operation is configured in unit of the number of symbols, and
   the controller is further configured to compute, as the second value, a remainder left when the number of symbols included in one cycle of the SFN is divided by the number of symbols included in the periodicity of the periodic operation.

9. The terminal apparatus according to any one of claims 1 to 4, wherein

   periodicity of the periodic operation is configured in unit of time,
   the controller is further configured to perform the periodic operation by using the mathematical expression, in a case where a use condition related to the mathematical expression is met,
   the use condition is one or a combination of two or more selected from
   a condition that the time length of one cycle of the SFN is not an integral multiple of the time length of the periodicity of the periodic operation,
   a condition that the periodicity of the periodic operation is a non-integer value, and
   a condition that the controller has received information indicating use of the mathematical expression, from a base station apparatus.

10. The terminal apparatus according to any one of claims 1 to 4, wherein

    periodicity of the periodic operation is configured in unit of the number of slots,
    the controller is further configured to perform the periodic operation by using the mathematical expression, in a case where a use condition related to the mathematical expression is met,
    the use condition is one or a combination of two of
    a condition that the number of slots included in one cycle of the SFN is not an integral multiple of the number of slots included in the periodicity of the periodic operation, and
    a condition that the controller has received information indicating use of the mathematical expression, from a base station apparatus.

11. The terminal apparatus according to any one of claims 1 to 4, wherein

    periodicity of the periodic operation is configured in unit of the number of symbols,
    the controller is further configured to perform the periodic operation by using the mathematical expression, in a case where a use condition related to the mathematical expression is met,
    the use condition is one or a combination of two of
    a condition that the number of symbols included in one cycle of the SFN is not an integral multiple of the number of symbols included in the periodicity of the periodic operation, and
    a condition that the controller has received information indicating use of the mathematical expression, from a base station apparatus.

12. The terminal apparatus according to claim 2 or 3, wherein
    the controller is further configured to compute the correction value by using a hyper SFN (H-SFN) and a value corresponding to the number of the SFNs included in one cycle of the H-SFN.

**13.** The terminal apparatus according to claim 12, wherein

periodicity of the periodic operation is configured in unit of time,
the controller is further configured to perform the periodic operation by using the mathematical expression, in a case where a use condition related to the mathematical expression is met,
the use condition is one or a combination of two or more selected from
a condition that the time length of one cycle of the SFN is not an integral multiple of the time length of the periodicity of the periodic operation,
a condition that the periodicity of the periodic operation is a non-integer value,
a condition that the controller has received information indicating use of the mathematical expression, from a base station apparatus, and
a condition that the controller has received information related to the H-SFN, from the base station apparatus.

**14.** A method for a terminal apparatus (10), the method comprising:

determining whether a mathematical expression including a correction value for a system frame number (SFN) is met; and
performing a periodic operation for transmission or reception in a case where the mathematical expression is met.

**15.** A base station apparatus (20) comprising:

a controller (210); and
a communicator (220) configured to be controlled by the controller to perform radio communication, wherein
the controller is configured to perform a periodic operation for transmission or reception via the communicator by using a mathematical expression including a correction value for a system frame number (SFN).

S

Fig. 1

Fig. 2

| TERMINAL APPARATUS | BASE STATION APPARATUS | AMF |
|---|---|---|
| NAS | | NAS |
| RRC | RRC | |
| PDCP | PDCP | |
| RLC | RLC | |
| MAC | MAC | |
| PHY | PHY | |
| 10 | 20 | 30 |

Fig. 3

Fig. 4

10

TERMINAL APPARATUS

120

COMMUNICATOR

110

CONTROLLER

TRANSMITTER ～121

RECEIVER ～122

Fig. 5

20

## BASE STATION APPARATUS

201

**PROCESSOR**

203

**NETWORK INTERFACE**

TO OTHER APPARATUS

205

**MEMORY**

202

**RADIO INTERFACE**

204

Fig. 6

20

BASE STATION APPARATUS

220

COMMUNICATOR

210

CONTROLLER

TRANSMITTER ~221

RECEIVER ~222

230

NETWORK
COMMUNICATOR

Fig. 7

Fig. 8

RRC_CONNECTED

RESUME/
RELEASE WITH SUSPENSION

RRC_INACTIVE

ESTABLISH/RELEASE

RELEASE

RRC_IDLE

Fig. 9

Fig. 10

Fig. 11

Fig. 12

Fig. 13

START

S1201

HAS FIRST OFFSET
INFORMATION BEEN
RECEIVED?

No

Yes

S1202

SELECT MATHEMATICAL
EXPRESSION A2

S1203

SELECT MATHEMATICAL
EXPRESSION A1

S1204

START DRX CYCLE

END

Fig. 14

START

S1301

IS CONDITION H1
MET ?

No

Yes

S1302

SELECT MATHEMATICAL
EXPRESSION A3

S1303

SELECT MATHEMATICAL
EXPRESSION A1

S1304

START DRX CYCLE

END

Fig. 15

Fig. 16

START

S1501

HAS SECOND OFFSET
INFORMATION BEEN
RECEIVED?

No

Yes

S1502

SELECT MATHEMATICAL
EXPRESSION B2

S1503

SELECT MATHEMATICAL
EXPRESSION B1

S1504

START DRX CYCLE

END

Fig. 17

START

S1601

IS CONDITION H5
MET ?

No

Yes

S1602
SELECT MATHEMATICAL
EXPRESSION B3

S1603
SELECT MATHEMATICAL
EXPRESSION B1

S1604
START DRX CYCLE

END

Fig. 18

START

S1701

IS CONDITION H7
MET ?

No

Yes

S1702

SELECT MATHEMATICAL
EXPRESSION B4

S1703

SELECT MATHEMATICAL
EXPRESSION B1

S1704

START DRX CYCLE

END

Fig. 19

Fig. 20

```
                    ┌─────────────┐
                    │    START    │
                    └─────────────┘
                           │
                           ▼                    S1901
         ╱──────────────────────────────╲
        ╱   HAS THIRD OFFSET              ╲  No
        ╲   INFORMATION BEEN              ╱──────────┐
         ╲  TRANSMITTED?                 ╱           │
          ╲──────────────────────────────╱           │
                     │ Yes                            │
                     ▼          S1902                 ▼          S1903
        ┌──────────────────────────┐    ┌──────────────────────────┐
        │  SELECT MATHEMATICAL     │    │  SELECT MATHEMATICAL     │
        │  EXPRESSION C2           │    │  EXPRESSION C1           │
        └──────────────────────────┘    └──────────────────────────┘
                     │                              │
                     │◄─────────────────────────────┘
                     ▼          S1904
        ┌──────────────────────────┐
        │  PERFORM TRANSMISSION    │
        │  OPERATION               │
        └──────────────────────────┘
                     │
                     ▼
                ┌─────────┐
                │   END   │
                └─────────┘
```

Fig. 21

```
                    ┌─────────────┐
                    │    START    │
                    └──────┬──────┘
                           │
                           ▼        ╭─ S2001
              ╱────────────────────────╲
             ╱   HAS THIRD OFFSET        ╲        No
            ╲   INFORMATION BEEN         ╱──────────────┐
             ╲      RECEIVED?           ╱               │
              ╲────────────┬──────────╱                 │
                           │ Yes                        │
                           ▼        ╭─ S2002            ▼        ╭─ S2003
              ┌────────────────────────┐   ┌────────────────────────┐
              │  SELECT MATHEMATICAL   │   │  SELECT MATHEMATICAL   │
              │    EXPRESSION C2       │   │    EXPRESSION C1       │
              └───────────┬────────────┘   └───────────┬────────────┘
                          │◄───────────────────────────┘
                          ▼        ╭─ S2004
              ┌────────────────────────┐
              │  PERFORM RECEPTION     │
              │    OPERATION           │
              └───────────┬────────────┘
                          │
                          ▼
                   ┌─────────────┐
                   │     END     │
                   └─────────────┘
```

Fig. 22

```
                    ┌─────────────────┐
                    │      START      │
                    └─────────────────┘
                             │
                             │              ╭─ S2101
                             ▼
                  ╱─────────────────────╲
                 ╱  HAS FIFTH INDICATION  ╲        No
                ⟨   INFORMATION BEEN       ⟩──────────────┐
                 ╲   TRANSMITTED          ╱               │
                  ╲─────────────────────╱                │
                             │                            │
                           Yes                            │
                             │                            │
                             │         ╭─ S2102           │        ╭─ S2103
                             ▼                            ▼
                  ┌─────────────────────┐      ┌─────────────────────┐
                  │ SELECT MATHEMATICAL │      │ SELECT MATHEMATICAL │
                  │   EXPRESSION C3     │      │   EXPRESSION C1     │
                  └─────────────────────┘      └─────────────────────┘
                             │                            │
                             │◄───────────────────────────┘
                             │         ╭─ S2104
                             ▼
                  ┌─────────────────────┐
                  │ PERFORM TRANSMISSION│
                  │     OPERATION       │
                  └─────────────────────┘
                             │
                             ▼
                    ┌─────────────────┐
                    │       END       │
                    └─────────────────┘
```

Fig. 23

START

S2201

IS CONDITION I1 MET ?

No

Yes

S2202

SELECT MATHEMATICAL
EXPRESSION C3

S2203

SELECT MATHEMATICAL
EXPRESSION C1

S2204

PERFORM RECEPTION
OPERATION

END

Fig. 24

START

S2301

IS CONDITION I2 MET ?

No

Yes

S2302

SELECT MATHEMATICAL
EXPRESSION C4

S2303

SELECT MATHEMATICAL
EXPRESSION C1

S2304

PERFORM TRANSMISSION
OPERATION

END

Fig. 25

START

S2401

IS CONDITION I3 MET ?

No

Yes

S2402

SELECT MATHEMATICAL
EXPRESSION C4

S2403

SELECT MATHEMATICAL
EXPRESSION C1

S2404

PERFORM RECEPTION
OPERATION

END

Fig. 26

Fig. 27

```
                    ┌─────────────┐
                    │    START    │
                    └──────┬──────┘
                           │
                           │              ⌐S2601
                     ╱─────┴──────╲
                    ╱ HAS FOURTH   ╲    No
                   ⟨  OFFSET        ⟩────────────────┐
                    ╲ INFORMATION  ╱                 │
                     ╲ BEEN       ╱                  │
                      ╲TRANSMITTED?╱                 │
                           │ Yes                     │
                           │                         │
                ⌐S2602     │              ⌐S2603     │
          ┌────────────────┴───┐    ┌────────────────┴───┐
          │ SELECT MATHEMATICAL│    │ SELECT MATHEMATICAL│
          │   EXPRESSION D2     │    │   EXPRESSION D1     │
          └────────┬───────────┘    └─────────┬──────────┘
                   │◄─────────────────────────┘
                   │          ⌐S2604
          ┌────────┴───────────┐
          │ PERFORM RECEPTION  │
          │    OPERATION       │
          └────────┬───────────┘
                   │
              ┌────┴────┐
              │   END   │
              └─────────┘
```

Fig. 28

START

S2701

HAS FOURTH OFFSET INFORMATION BEEN RECEIVED?

No

Yes

S2702

SELECT MATHEMATICAL EXPRESSION D2

S2703

SELECT MATHEMATICAL EXPRESSION D1

S2704

PERFORM TRANSMISSION OPERATION

END

Fig. 29

START

S2801

HAS SEVENTH
INDICATION
INFORMATION BEEN
TRANSMITTED?

No

Yes

S2802

SELECT MATHEMATICAL
EXPRESSION D3

S2803

SELECT MATHEMATICAL
EXPRESSION D1

S2804

PERFORM RECEPTION
OPERATION

END

Fig. 30

START

S2901

IS CONDITION J1 MET ?

No

Yes

S2902

SELECT MATHEMATICAL
EXPRESSION D3

S2903

SELECT MATHEMATICAL
EXPRESSION D1

S2904

PERFORM TRANSMISSION
OPERATION

END

Fig. 31

START

S3001

IS CONDITION J2 MET ?

No

Yes

S3002

SELECT MATHEMATICAL
EXPRESSION D4

S3003

SELECT MATHEMATICAL
EXPRESSION D1

S3004

PERFORM RECEPTION
OPERATION

END

Fig. 32

START

S3101

IS CONDITION J3 MET ?

No

Yes

S3102

SELECT MATHEMATICAL
EXPRESSION D4

S3103

SELECT MATHEMATICAL
EXPRESSION D1

S3104

PERFORM TRANSMISSION
OPERATION

END

Fig. 33

Fig. 34

```
                    ┌─────────────┐
                    │   START     │
                    └──────┬──────┘
                           │
                           ▼                    ⌐S3301
              ┌────────────────────────┐
             ╱  HAS FIFTH OFFSET        ╲   No
            ⟨   INFORMATION BEEN         ⟩ ────────────────┐
             ╲  TRANSMITTED?            ╱                   │
              └───────────┬────────────┘                   │
                       Yes│                                │
                          │                                │
                          ▼       ⌐S3302                   ▼       ⌐S3303
              ┌────────────────────────┐       ┌────────────────────────┐
              │  SELECT MATHEMATICAL   │       │  SELECT MATHEMATICAL   │
              │  EXPRESSION E2         │       │  EXPRESSION E1         │
              └───────────┬────────────┘       └───────────┬────────────┘
                          │                                │
                          │◄───────────────────────────────┘
                          │            ⌐S3304
                          ▼
              ┌────────────────────────┐
              │  PERFORM RECEPTION     │
              │  OPERATION             │
              └───────────┬────────────┘
                          │
                          ▼
                    ┌─────────────┐
                    │    END      │
                    └─────────────┘
```

Fig. 35

Fig. 36

START

S3501

HAS NINTH INDICATION INFORMATION BEEN TRANSMITTED?

No

Yes

S3502

SELECT MATHEMATICAL EXPRESSION E3

S3503

SELECT MATHEMATICAL EXPRESSION E1

S3504

PERFORM RECEPTION OPERATION

END

Fig. 37

START

S3601

IS CONDITION K1 MET ?

No

Yes

S3602

SELECT MATHEMATICAL
EXPRESSION E3

S3603

SELECT MATHEMATICAL
EXPRESSION E1

S3604

PERFORM TRANSMISSION
OPERATION

END

Fig. 38

START

S3701

IS CONDITION K2 MET ?

No

Yes

S3702

SELECT MATHEMATICAL
EXPRESSION E4

S3703

SELECT MATHEMATICAL
EXPRESSION E1

S3704

PERFORM RECEPTION
OPERATION

END

Fig. 39

START

S3801

IS CONDITION K3 MET ?

No

Yes

S3802

SELECT MATHEMATICAL
EXPRESSION E4

S3803

SELECT MATHEMATICAL
EXPRESSION E1

S3804

PERFORM TRANSMISSION
OPERATION

END

Fig. 40

Fig. 41

START

S4001

HAS SIXTH OFFSET
INFORMATION BEEN
TRANSMITTED?

No

Yes

S4002

SELECT MATHEMATICAL
EXPRESSION F2

S4003

SELECT MATHEMATICAL
EXPRESSION F1

S4004

PERFORM RECEPTION
OPERATION

END

Fig. 42

START

S4101

HAS SIXTH OFFSET
INFORMATION BEEN
RECEIVED?

No

Yes

S4102

SELECT MATHEMATICAL
EXPRESSION F2

S4103

SELECT MATHEMATICAL
EXPRESSION F1

S4104

PERFORM TRANSMISSION
OPERATION

END

Fig. 43

START

S4201

HAS ELEVENTH INDICATION INFORMATION BEEN TRANSMITTED?

No

Yes

S4202

SELECT MATHEMATICAL EXPRESSION F3

S4203

SELECT MATHEMATICAL EXPRESSION F1

S4204

PERFORM RECEPTION OPERATION

END

Fig. 44

Fig. 45

Fig. 46

START

S4501

IS CONDITION K6 MET ?

No

Yes

S4502

SELECT MATHEMATICAL
EXPRESSION F4

S4503

SELECT MATHEMATICAL
EXPRESSION F1

S4504

PERFORM TRANSMISSION
OPERATION

END

Fig. 47

## INTERNATIONAL SEARCH REPORT

| International application No. |
| --- |
| **PCT/JP2023/018881** |

### A. CLASSIFICATION OF SUBJECT MATTER

*H04W 56/00*(2009.01)i; *H04W 52/02*(2009.01)i
FI:  H04W56/00 150; H04W52/02 110

According to International Patent Classification (IPC) or to both national classification and IPC

### B. FIELDS SEARCHED

Minimum documentation searched (classification system followed by classification symbols)

H04W56/00; H04W52/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | QUALCOMM INCORPORATED. Verizon Wireless, Facebook, DRX enhancement for XR and CG applications [online]. 3GPP TSG RAN WG2 #115-e R2-2107221. 16 August 2021, section 2.2, [retrieval date 18 July 2023], Internet: <URL: http:// https://www.3gpp.org/ftp/ tsg_ran/WG2_RL2/TSGR2_115-e/Docs/R2-2107221.zip > in particular, option A | 1-2, 9-11, 14-15 |
| A | | 3-8, 12-13 |
| P, X | DENSO CORPORATION. C-DRX enhancements for XR-specific power saving [online]. 3GPP TSG RAN WG2 #120 R2-2212770. 14 November 2022, section 2.2, [retrieval date 18 July 2023], Internet: <URL:https://www.3gpp.org/ftp/tsg_ran/WG2_RL2/TSGR2_120/Docs/R2-2212770.zip>> in particular, section 2.2 | 1-15 |
| P, X | ERICSSON. Discussion on power saving enhancements for XR [online]. 3GPP TSG RAN WG2 #119-e R2-2208680. 17 August 2022, section 2.2.5, [retrieval date 18 July 2023], Internet: <URL: https://www.3gpp.org/ftp/tsg_ran/WG2_RL2/TSGR2_119-e/Docs/R2-2208680.zip > in particular, section 2.2.5 | 1-2, 9-11, 14-15 |

☐ Further documents are listed in the continuation of Box C.    ☐ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 July 2023** | **01 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022099929 A

**Non-patent literature cited in the description**

- *3GPP TR 38.838*, December 2021
- *3GPP TS 38.321*, March 2022
- *3GPP TS 38.213*, December 2021